(19)

Europäisches
Patentamt
European
Patent Office
Office européen
des brevets

(11) **EP 4 597 914 A1**

(12) **EUROPEAN PATENT APPLICATION**
published in accordance with Art. 153(4) EPC

(43) Date of publication:
**06.08.2025 Bulletin 2025/32**

(21) Application number: 23873165.7

(22) Date of filing: **26.09.2023**

(51) International Patent Classification (IPC):
*H04L 5/14* (2006.01)     *H04L 5/00* (2006.01)
*H04B 7/06* (2006.01)     *H04W 72/23* (2023.01)
*H04W 84/04* (2009.01)

(52) Cooperative Patent Classification (CPC):
H04B 7/06; H04L 5/00; H04L 5/14; H04W 72/23;
H04W 72/563; H04W 74/08; H04W 84/04

(86) International application number:
**PCT/KR2023/014938**

(87) International publication number:
**WO 2024/072054 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022 KR 20220121924**

(71) Applicant: **Electronics and Telecommunications
Research Institute
Daejeon 34129 (KR)**

(72) Inventors:
• **NOH, Hoon Dong**
  **Daejeon 34129 (KR)**
• **KIM, Cheul Soon**
  **Daejeon 34129 (KR)**
• **MOON, Sung Hyun**
  **Daejeon 34129 (KR)**
• **LEE, Jung Hoon**
  **Daejeon 34129 (KR)**

(74) Representative: **Betten & Resch
Patent- und Rechtsanwälte PartGmbB
Maximiliansplatz 14
80333 München (DE)**

(54) **METHOD AND DEVICE FOR DETERMINING UPLINK-DOWNLINK DIRECTION IN FULL DUPLEX WIRELESS COMMUNICATION SYSTEM**

(57)     A method for a terminal may comprise the steps of: receiving, from a base station, information related to a first operation mode using one of a UL or a DL in a resource and information related to a second operation mode using both the UL and the DL in the time domain; receiving priority information of UL transmission and DL reception in the second operation mode from the base station; when the UL transmission and the DL reception are simultaneously indicated in the second operation mode from the base station, selecting one of the UL or DL on basis of the priority information; and communicating using the selected link.

【FIG. 20】

EP 4 597 914 A1

## Description

[Technical Field]

The present disclosure relates to a full duplex wireless communication technique, and more particularly, to a technique for determining a transmission direction in a full duplex wireless communication system.

[Background Art]

Radio resources in a mobile communication system can be utilized in various transmission modes to address different scenarios, including integrated access and backhaul (IAB) node operations, multiple transmission and reception point (multi-TRP) operations, and in-band or out-of-band full-duplex communication operations.

Considering variations in the implementation of terminals and base stations within a system operating in full-duplex communication mode, it may be assumed that a specific terminal (or base station) does not simultaneously perform transmission and reception in both uplink and downlink. Instead, the terminal may be assumed to either transmit in uplink or receive in downlink at any given time (with the base station performing either uplink reception or downlink transmission). In the case of an in-band full-duplex communication system, a significant portion of uplink transmission time is allocated to terminals (e.g. coverage-limited UEs) that are far from a base station, effectively addressing coverage constraints arising from limited uplink transmission powers. Additionally, an operational scenario may assume that a large portion of uplink reception time is allocated to terminals situated in a central region of a cell to maintain high transmission capacity.

Meanwhile, even in the scenario where terminals are allocated a high proportion of uplink transmission time in the full-duplex communication system, there may be instances where reception of downlink signals, such as downlink control channels, is necessary during at least part of an allocated uplink transmission period. This necessity arises to accomplish various objectives, including cell-specific downlink reception, uplink-based channel estimation, and uplink beam change.

[Disclosure]

[Technical Problem]

The present disclosure is directed to providing a method and an apparatus for determining an uplink-downlink transmission direction of a terminal in a full duplex communication system.

[Technical Solution]

A method of a terminal, according to the present disclosure for achieving the above-described objective, may comprise: receiving, from a base station, information related to a first operation mode in which one of an uplink (UL) resource or a downlink (DL) resource is allocated in time domain, and information related to a second operation mode in which both a UL resource and a DL resource are allocated in time domain; receiving, from the base station, priority information for a UL transmission and a DL reception in the second operation mode; in response to that both the UL transmission and the DL reception are simultaneously indicated by the base station in the second operation mode, selecting a link among uplink and downlink based on the priority information; and communicating using the selected link,

wherein the information related to the first operation mode includes first resource information of the first operation mode, and the information related to the second operation mode includes second resource information of the second operation mode.

The second resource information may include at least one of a control resource set (CORESET) #2 configured exclusively for the second operation mode, frequency resources in which a CORESET #1 configured commonly to the first operation mode and the second operation mode overlaps uplink frequency resources for full-duplex communication, or frequency resources in which the CORESET #1 overlaps downlink frequency resources for full-duplex communication.

When the second resource information includes the CORESET #2, the second resource information may further include a synchronization signal (SS) resource corresponding to the CORESET #2.

The method may further comprise, when the UL transmission and the DL reception are performed in a same time resource, reporting a cross link interference (CLI).

The priority information may include at least one of priorities listed in a descending order of:

1 synchronization signal block (SSB),
2 random access channel (RACH)-related transmissions,
3 type-0 physical downlink control channel (PDCCH) monitoring,
4 aperiodic/dynamic allocation of a sounding reference signal (SRS)/physical uplink shared channel (PUSCH),

5 aperiodic/dynamic allocation of a channel state information reference signal (CSI-RS)/physical downlink shared channel (PDSCH),

6 periodic/semi-static SRS/PUCCH/grant-free UL/SPS UL/PUSCH repetition/physical uplink control channel (PUCCH) repetition, and

7 periodic/semi-static CSI-RS/SPS DL/PDSCH repetition/PDCCH repetition.

In the RACH-related transmission, a first message (massage 1) and a third message (massage 3) related to the UL transmission may be configured to have a higher priority than a second message (massage 2) and a fourth message (massage 4) related to the DL reception.

In the second operation mode, a first resource region among resources of a second channel having a lower priority than a first channel may overlap with resources of the first channel, a second resource region among the resources of the second channel may not overlap with the resources of the first channel, and the terminal may communicate with the base station through the second channel using the non-overlapped resources when a preconfigured condition is satisfied.

The preconfigured condition may be transmission of a sounding reference signal (SRS) mapped at a symbol level or transmission repeated for each period.

The method may further comprise: when UL transmission beam-related information is received outside resources based on the second resource information, ignoring the received UL transmission beam-related information.

A method of a base station, according to exemplary embodiments of the present disclosure, may comprise: configuring a first resource corresponding to a first operation mode in which one of an uplink (UL) resource or a downlink (DL) resource is allocated in time domain; configuring a second resource corresponding to a second operation mode in which both a UL resource and a DL resource are allocated in time domain; transmitting, to a terminal, information related to the first operation mode and the second operation mode; transmitting, to the terminal, priority information for uplink and downlink in the second operation mode; and communicating with the terminal in the second resource according to the second operation mode.

The second resource information may include at least one of a control resource set (CORESET) #2 configured exclusively for the second operation mode, frequency resources in which a CORESET #1 configured commonly to the first operation mode and the second operation mode overlaps uplink frequency resources for full-duplex communication, or frequency resources in which the CORESET #1 overlaps downlink frequency resources for full-duplex communication.

When the second resource information includes the CORESET #2, the second resource information may further include a synchronization signal (SS) resource corresponding to the CORESET #2.

The method may further comprise, when the UL transmission and the DL reception are performed in a same time resource, receiving a cross link interference (CLI) report from the terminal.

The priority information may include at least one of priorities listed in a descending order of,
Wherein the priority information includes:

1 synchronization signal block (SSB),

2 random access channel (RACH)-related transmissions,

3 type-0 physical downlink control channel (PDCCH) monitoring,

4 aperiodic/dynamic allocation of a sounding reference signal (SRS)/physical uplink shared channel (PUSCH),

5 aperiodic/dynamic allocation of a channel state information reference signal (CSI-RS)/physical downlink shared channel (PDSCH),

6 periodic/semi-static SRS/PUCCH/grant-free UL/SPS UL/PUSCH repetition/physical uplink control channel (PUCCH) repetition, and

7 periodic/semi-static CSI-RS/SPS DL/PDSCH repetition/PDCCH repetition.

In the RACH-related transmission, a first message (massage 1) and a third message (massage 3) related to the UL transmission may be configured to have a higher priority than a second message (massage 2) and a fourth message (massage 4) related to the DL reception.

In the second operation mode, a first resource region among resources of a second channel having a lower priority than a first channel may overlap with resources of the first channel, a second resource region among the resources of the second channel may not overlap with the resources of the first channel, and the base station may communicate with the terminal through the second channel using the non-overlapped resources when a preconfigured condition is satisfied.

The preconfigured condition may be transmission of a sounding reference signal (SRS) mapped at a symbol level or transmission repeated for each period.

A terminal according to the present disclosure may comprise a processor, the processor may cause the terminal to perform:

Receiving, from a base station, information related to a first operation mode in which one of an uplink (UL) resource or a downlink (DL) resource is allocated in time domain, and information related to a second operation mode in which both a UL resource and a DL resource are allocated in time domain; receiving, from the base station, priority information for a UL transmission and a DL reception in the second operation mode; in response to that both the UL transmission and the DL reception are simultaneously indicated by the base station in the second operation mode, selecting a link among uplink and downlink based on the priority information; and communicating using the selected link, Wherein the information related to the first operation mode includes first resource information of the first operation mode, and the information related to the second operation mode includes second resource information of the second operation mode.

The second resource information may include at least one of a control resource set (CORESET) #2 configured exclusively for the second operation mode, frequency resources in which a CORESET #1 configured commonly to the first operation mode and the second operation mode overlaps uplink frequency resources for full-duplex communication, or frequency resources in which the CORESET #1 overlaps downlink frequency resources for full-duplex communication.
The processor may further cause the terminal to perform:

In the second operation mode, a first resource region among resources of a second channel having a lower priority than a first channel may overlap with resources of the first channel, and a second resource region among the resources of the second channel may not overlap with the resources of the first channel, and the processor may further cause the terminal to communicate with the base station through the second channel using the non-overlapped resources when a preconfigured condition is satisfied.

[Advantageous Effects]

According to exemplary embodiments of the present disclosure, the base station and the terminal may perform priority-based uplink/downlink transmission/reception direction determination within a time period in which both uplink transmission and downlink reception are possible. In this case, various operations, such as efficient uplink partial transmission or efficient uplink beam change, can be performed, leading to the improvement of wireless communication quality.

[Description of Drawings]

FIG. 1 is a conceptual diagram illustrating an exemplary embodiment of a radio interface protocol structure in a communication system.

FIG. 2 is a conceptual diagram illustrating an exemplary embodiment of time resources in which radio signals are transmitted in a communication system.

FIG. 3 is a conceptual diagram illustrating a time difference between a reception timing of an i-th downlink frame and a transmission timing of an i-th uplink frame in an exemplary embodiment of a communication system.

FIG. 4 is a conceptual diagram illustrating an exemplary embodiment of a time/frequency resource grid of a communication system.

FIG. 5 is a conceptual diagram illustrating an exemplary embodiment of a synchronization signal and physical broadcast channel (SS/PBCH) block or synchronization signal block (SSB) of a communication system.

FIG. 6 is a sequence chart illustrating an exemplary embodiment of a random access procedure in a communication system.

FIG. 7 is a conceptual diagram illustrating a first exemplary embodiment of SSB-RO association according to RACH configuration in a communication system.

FIG. 8 is a conceptual diagram illustrating a second exemplary embodiment of SSB-RO association according to RACH configuration in a communication system.

FIG. 9 is a conceptual diagram illustrating an exemplary embodiment of a QCL information transfer process through TCI state configuration and indication in a communication system.

FIG. 10 is a conceptual diagram illustrating an exemplary embodiment of a TCI state activation/deactivation MAC CE in a communication system.

FIG. 11 is a conceptual diagram illustrating an exemplary embodiment of a TCI state indication MAC CE in a communication system.

FIG. 12 is a conceptual diagram illustrating slot configurations according to slot formats in a communication system.

FIG. 13 is a conceptual diagram illustrating an exemplary embodiment of an IAB network in a communication system.

FIG. 14 is a block diagram illustrating an exemplary embodiment of a functional split structure of a central unit (CU) and a distributed unit (DU) in a communication system.

FIG. 15 is a flowchart illustrating a first exemplary embodiment of a method for resource management of an IAB node in a communication system.

FIG. 16 is a sequence chart illustrating an exemplary embodiment of a UE capability reporting procedure in a communication system.

FIG. 17A is a conceptual diagram for describing a user plane protocol stack structure in a communication system.

FIG. 17B is a conceptual diagram for describing a control plane protocol stack structure in a communication system.

FIG. 18A is a conceptual diagram for describing a user plane protocol structure for carrier aggregation (CA) in a base station of a communication system.

FIG. 18B is a conceptual diagram for describing a user plane protocol structure for dual connectivity (DC) in a base station of a communication system.

FIG. 19A is a conceptual diagram for describing a case where both an MT and a DU of an IAB node are in the transmission mode.

FIG. 19B is a conceptual diagram for describing a case where both an MT and a DU of an IAB node are in the reception mode.

FIG. 19C is a conceptual diagram for describing a case where an MT of an IAB node is in the transmission mode and a DU thereof is in the reception mode.

FIG. 19D is a conceptual diagram for describing a case where an MT of an IAB node is the reception mode and a DU thereof is in the transmission mode.

FIG. 20 is a conceptual diagram for describing a method in which a base station allocates one or more operation modes within a resource period to a terminal.

FIG. 21 is a conceptual diagram for describing a method in which a base station allocates resources to a terminal according to an operation mode by using time-frequency resources.

FIG. 22 is a conceptual diagram for describing a method in which a base station allocates resources to a terminal according to an operation mode by using frequency-slots (or symbols).

FIG. 23 is a conceptual diagram for describing CORESET configuration and resources therefor for each operation mode according to an exemplary embodiment of the present disclosure.

FIG. 24 is a conceptual diagram illustrating BD/CCE configuration in time/frequency resources for full-duplex communication.

FIG. 25 is a conceptual diagram for describing an uplink and downlink direction determination according to priorities in time/frequency resources for enhanced duplex mode.

FIG. 26 is a conceptual diagram for describing a case where an uplink signal is transmitted in a communication system supporting a full-duplex communication mode.

FIG. 27 is a conceptual diagram for describing beam change for uplink channel/signal transmission in a communication system supporting a full-duplex communication mode.

FIG. 28 is a flowchart of operations of a terminal according to an exemplary embodiment of the present disclosure.

FIG. 29 is a block diagram illustrating a base station according to an exemplary embodiment of the present disclosure.

FIG. 30 is a block diagram illustrating a terminal according to an exemplary embodiment of the present disclosure.

[Mode for Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one A or B" or "at least one of one or more combinations of A and B". In addition, "one or more of A and B" may refer to "one or more of A or B" or "one or more of one or more combinations of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, preferred exemplary embodiments of the present disclosure will be described in more detail with reference to the accompanying drawings. In describing the present disclosure, in order to facilitate an overall understanding, the same reference numerals are used for the same elements in the drawings, and duplicate descriptions for the same elements are omitted.

A communication network to which exemplary embodiments according to the present disclosure are applied will be described. The communication network to which the exemplary embodiments according to the present disclosure are applied is not limited to the contents described below, and the exemplary embodiments according to the present disclosure may be applied to various communication networks. Here, the communication network may have the same meaning as a communication system. A communication network may refer to a wireless communication network, and a communication system may refer to a wireless communication system.

In the present disclosure, "configuration of an operation (e.g. transmission operation)" may refer to signaling of "control information (e.g. information element, parameter) for the operation" and/or "information indicating to perform the operation". "An information element (e.g. parameter) is configured" may mean that the corresponding information element is signaled. In the present disclosure, signaling may be at least one of system information (SI) signaling (e.g. transmission of a system information block (SIB) and/or master information block (MIB)), RRC signaling (e.g. transmission of RRC parameters and/or higher layer parameters), MAC control element (CE) signaling, or PHY signaling (e.g. transmission of downlink control information (DCI), uplink control information (UCI), and/or sidelink control information (SCI)).

Throughout the present disclosure, a network may include, for example, a wireless Internet such as wireless fidelity (WiFi), mobile Internet such as a wireless broadband Internet (WiBro) or a world interoperability for microwave access (WiMax), 2G mobile communication network such as a global system for mobile communication (GSM) or a code division multiple access (CDMA), 3G mobile communication network such as a wideband code division multiple access (WCDMA) or a CDMA2000, 3.5G mobile communication network such as a high speed downlink packet access (HSDPA) or a high speed uplink packet access (HSUPA), 4G mobile communication network such as a long term evolution (LTE) network or an LTE-Advanced network, 5G mobile communication network, beyond 5G (B5G) mobile communication network (e.g. 6G mobile communication network), or the like.

Throughout the present disclosure, a terminal may refer to a mobile station, mobile terminal, subscriber station, portable subscriber station, user equipment, access terminal, or the like, and may include all or a part of functions of the terminal, mobile station, mobile terminal, subscriber station, mobile subscriber station, user equipment, access terminal, or the like.

Here, a desktop computer, laptop computer, tablet PC, wireless phone, mobile phone, smart phone, smart watch, smart glass, e-book reader, portable multimedia player (PMP), portable game console, navigation device, digital camera, digital multimedia broadcasting (DMB) player, digital audio recorder, digital audio player, digital picture recorder, digital picture player, digital video recorder, digital video player, or the like having communication capability may be used as the terminal.

Throughout the present disclosure, the base station may refer to an access point, radio access station, node B (NB), evolved node B (eNB), base transceiver station, mobile multihop relay (MMR)-BS, or the like, and may include all or part of functions of the base station, access point, radio access station, NB, eNB, base transceiver station, MMR-BS, or the like.

Hereinafter, preferred exemplary embodiments of the present disclosure will be described in more detail with reference to the accompanying drawings. In describing the present disclosure, in order to facilitate an overall understanding, the same reference numerals are used for the same elements in the drawings, and duplicate descriptions for the same elements are omitted.

In particular, the present disclosure described below may include providing a method for determining an uplink and/or downlink transmission direction of a terminal in a full-duplex communication system.

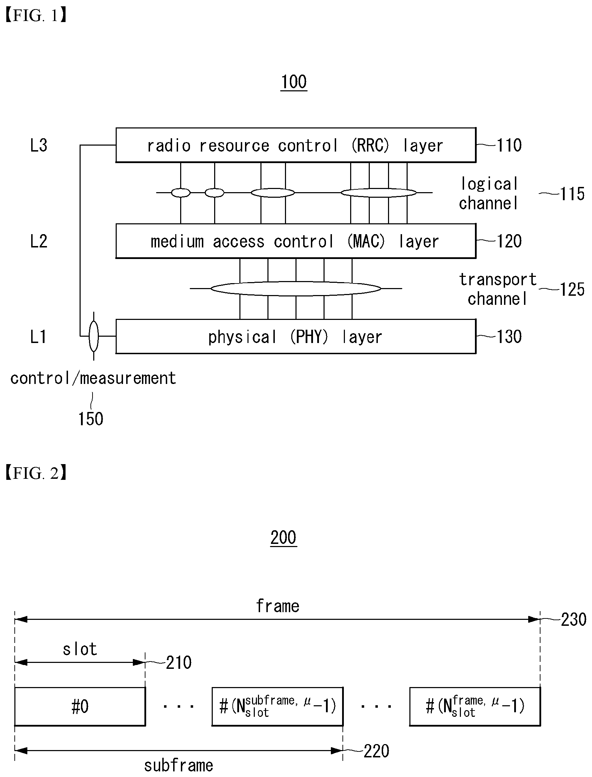

FIG. 1 is a conceptual diagram illustrating an exemplary embodiment of a radio interface protocol structure in a communication system.

Referring to FIG. 1, an exemplary embodiment of a radio interface protocol structure 100 of a communication system may be configured to include a radio resource control (RRC) layer 110, a medium access control (MAC) layer 120, a physical (PHY) layer 130, and the like. An exemplary embodiment of the radio interface protocol structure 100 shown in FIG. 1 may correspond to various exemplary embodiments of interfaces such as an interface between a terminal and a base station, an interface between an IAB-node distributed unit (IAB-DU) and an IAB-node mobile terminal (IAB-MT) of an integrated access backhaul (IAB) network, an interface between an IAB-DU and a lower node, an interface between an IAB-MT and an upper node, an interface between a plurality of terminals, and the like.

In the vicinity of the PHY layer 130, the RRC layer 110, and the MAC layer 120, and the like may be disposed above the PHY layer 130. For example, the MAC layer 120 may be disposed above the PHY layer 130. The RRC layer 110 may be disposed above the MAC layer 120.

The MAC layer 120 may be connected to a higher layer (e.g., RRC layer 110) through logical channels 115. The PHY layer 130 may be connected to the higher MAC layer 120 through transport channels 125. The PHY layer 130 may transmit and receive control information or measurement information 150 to and from the RRC layer 110.

The PHY layer 130 may be referred to as a 'layer 1' or 'L1'. The MAC layer 120 may be referred to as a 'layer 2' or 'L2'. The RRC layer 110 may be referred to as a 'layer 3' or 'L3'. The RRC layer 110 and the MAC layer 120 may be collectively referred to as the 'higher layer'.

In the present disclosure, 'L1 signaling' refers to signaling such as downlink control information (DCI) transmitted on a physical downlink control channel (PDCCH), uplink control information (UCI) transmitted on a physical uplink control channel (PUCCH), and sidelink control information (SCI) transmitted on a physical sidelink control channel (PSCCH), which are channels of the PHY layer 130. Similarly, in the present disclosure, 'higher layer signaling' may include L2 signaling transmitted through a MAC control element (CE), L3 signaling transmitted through RRC signaling, and the like.

In particular, for convenience of description, although omitted in FIG. 1 of the present disclosure, information that may be included in interfaces (e.g. F1, NG interfaces, etc.) between base stations or between base station components such as distributed units (DU) and central units (CU) may also be collectively referred to as higher layer signaling together with L2 signaling or L3 signaling.

In a communication system to which the 5G communication technology, etc. is applied, one or more of numerologies of Table 1 may be used in accordance with various purposes, such as inter-carrier interference (ICI) reduction according to frequency band characteristics, latency reduction according to service characteristics, and the like.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 1 is merely an example for the convenience of description, and exemplary embodiments of the numerologies used in the communication system may not be limited thereto. Each numerology $\mu$ may correspond to information of a subcarrier spacing (SCS) $\Delta f$ and a cyclic prefix (CP). The terminal may identify a numerology $\mu$ and a CP value applied to a downlink bandwidth part (BWP) or an uplink BWP based on higher layer parameters such as subcarrierSpacing, cyclicPrefix, and/or the like.

FIG. 2 is a conceptual diagram illustrating an exemplary embodiment of time resources in which radio signals are transmitted in a communication system.

Referring to FIG. 2, time resources in which radio signals are transmitted in a communication system 200 may be represented with a frame 220 comprising one or more ($N_{\text{slot}}^{\text{frame},\boldsymbol{\mu}} / N_{\text{slot}}^{\text{subframe},\boldsymbol{\mu}}$) subframes, a subframe 220 comprising one or more ($N_{\text{slot}}^{\text{subframe},\boldsymbol{\mu}}$) slots, and a slot 210 comprising 14 ($N_{\text{symb}}^{\text{slot}}$) OFDM symbols. In this case, according to a configured numerology, as the values of $N_{\text{symb}}^{\text{slot}}$, $N_{\text{slot}}^{\text{subframe},\mu}$, and $N_{\text{slot}}^{\text{frame},\mu}$, values according to Table 2 below may be used in case of a normal CP, and values according to Table 3 below may be used in case of an extended CP. The OFDM symbols included within one slot may be classified into 'downlink', 'flexible', or 'uplink' by higher layer signaling or a combination of higher layer signaling and L1 signaling.

[Table 2]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

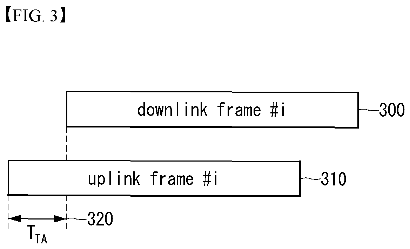

In the 5G NR communication system, the frame 230 may have a length of 10 ms, and the subframe 220 may have a length of 1 ms. Each frame 230 may be divided into two half-frames having the same length, and the first half-frame (i.e., half-frame 0) may be composed of subframes #0 to #4, and the second half-frame (i.e., half-frame 1) may be composed of subframes #5 to #9. One carrier may include a set of frames for uplink (i.e., uplink frames) and a set of frames for downlink (i.e., downlink frames). FIG. 3 is a conceptual diagram illustrating a time difference between a reception timing of an i-th downlink frame and a transmission timing of an i-th uplink frame in an exemplary embodiment of a communication system.

Referring to FIG. 3, a time difference between a reception timing of an i-th downlink frame 300 and a transmission timing of an i-th uplink frame 310 may be a TTA 320. Accordingly, the terminal may start transmission of the uplink frame #i 310 at a time earlier by TTA compared to the reception timing of the downlink frame #i 300. TTA may be referred to as a timing advance or timing adjustment TA. The base station may instruct the terminal to change a value of TTA through higher layer signaling or L1 signaling, and may configure the terminal to apply TTA in a manner defined as $T_{TA} = (N_{TA} + N_{TA,offset})$

$$T_c = \frac{1}{(\Delta f_{max} \cdot N_f)}$$

$T_c$. In the case of 5G NR, $T_c$ may be defined as , $\Delta f_{max}$ may be defined as $\Delta f_{max} = 480$ *kHz*, $N_f$ may be defined as $Nt = 4096$, $N_{TA,offset}$t may be a value set by L3 signaling, and $N_{TA}$ may be a value determined by Equation 1 below by a value $T_A$ indicated by L2 signaling.

[Equation 1]

$$N_{TA}$$

$$= \begin{cases} T_A \cdot 16 \cdot \dfrac{64}{2^\mu} & \text{(for random access response)} \\ N_{TA\_old} + \left((T_A - 31) \cdot 16 \cdot 64/2^\mu\right) & \text{(for other cases)} \end{cases}$$

Here, the description on $N_{TA,offset}$ and $N_{TA}$ may be an example for a specific situation, and various other options may exist, but in order not to obscure the gist of the description, all possible cases may not be listed in the present disclosure.

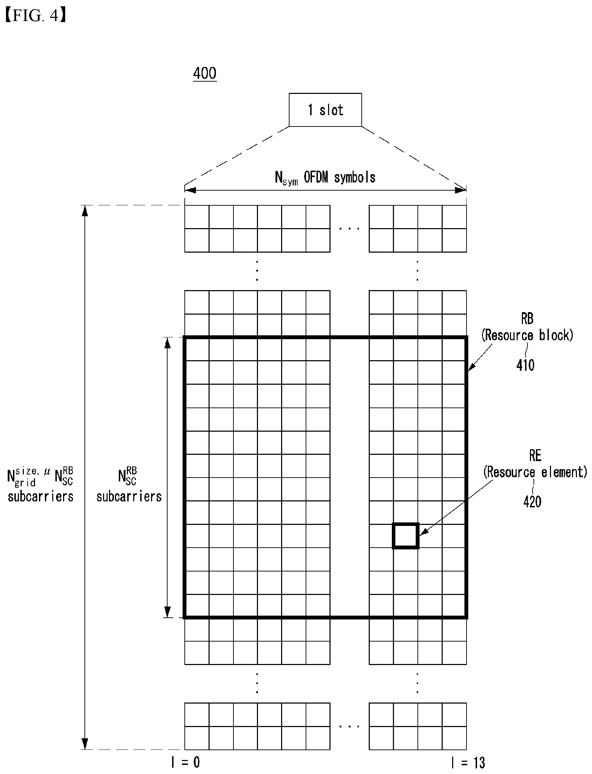

FIG. 4 is a conceptual diagram illustrating an exemplary embodiment of a time/frequency resource grid of a communication system.

Referring to FIG. 4, a time/frequency resource grid 400 of a communication system may have $N_{grid}^{size,\mu} N_{sc}^{RB}$ subcarriers and $N_{slot}^{subframe,\mu}$ OFDMs. The resource grid may be defined for each numerology and each carrier. In this case, $N_{grid}^{start,\mu}$ may mean a position of a common resource block (CRB) indicated by higher layer signaling. $N_{grid}^{size,\mu}$ may mean the number of resource blocks (RBs) starting from the CRB, that is, a carrier bandwidth. $N_{grid}^{start,\mu}$ and/or $N_{grid}^{size,\mu}$ may have different values for each link direction (e.g., uplink, downlink, or sidelink) or for each numerology μ. Here, the numerology μ may be referred to by other terms, such as a SCS configuration, if necessary.

Each element in the resource grid for an antenna port p and a SCS configuration μ may be referred to as a resource element (RE) 420, and may be uniquely defined for each position $(k,l)_{p,\mu}$. In this case, $k$ may be a frequency axis index, and $l$ may indicate a symbol position on the time axis. $RE(k, l)_{p,\mu}$ may correspond to a physical resource used to transmit a physical channel or a signal complex value $a_{k,l}^{(p,\mu)}$. One RB 410 may be defined as consecutive $N_{sc}^{RB} = 12$ subcarriers on the frequency axis.

The 5G NR communication system has introduced the concept of BWPs in order to reduce high implementation complexity and power consumption of terminals due to the widened carrier bandwidth compared to the 3G/4G communication system. One BWP may be composed of contiguous CRBs, a starting RB position $N_{BWP,i}^{start,\mu}$ of the BWP and the number $N_{BWP,i}^{size,\mu}$ of RBs constituting the BWP may satisfy Equations 2 and 3.

[Equation 2]

$$N_{\text{grid},x}^{\text{start},\mu} \leq N_{\text{BWP},i}^{\text{start},\mu} < N_{\text{grid},x}^{\text{start},\mu} + N_{\text{grid},x}^{\text{size},\mu}$$

[Equation 3]

$$N_{\text{grid},x}^{\text{start},\mu} < N_{\text{BWP},i}^{\text{start},\mu} + N_{\text{BWP},i}^{\text{size},\mu} \leq N_{\text{grid},x}^{\text{start},\mu} + N_{\text{grid},x}^{\text{size},\mu}$$

Up to four downlink BWPs within one component carrier (CC) may be configured for one terminal, and only one downlink BWP may be activated at a time. The terminal may not receive a physical downlink shared channel (PDSCH), a physical downlink control channel (PDCCH), a channel state information reference signal (CSI-RS), or the like outside the activated BWP.

Up to four uplink BWPs within one CC may be configured for one terminal, and only one uplink BWP may be activated at a time. The terminal may not transmit a physical uplink shared channel (PUSCH), a physical uplink control channel (PUCCH), a sounding reference signal (SRS), or the like outside the activated BWP.

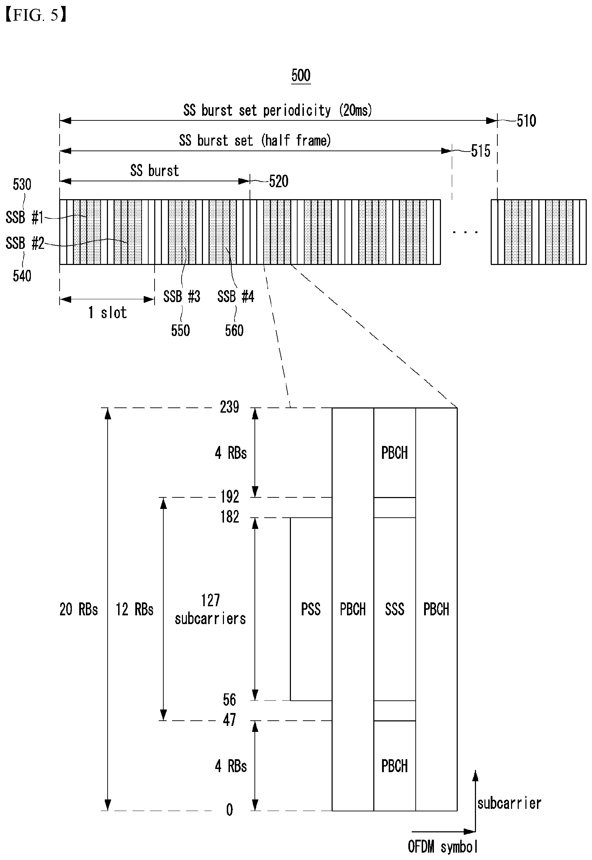

FIG. 5 is a conceptual diagram illustrating an exemplary embodiment of a synchronization signal and physical broadcast channel (SS/PBCH) block or synchronization signal block (SSB) of a communication system.

Referring to FIG. 5, an SS/PBCH block 500 of a communication system may be configured with a primary synchronization signal (PSS) transmitted in 127 subcarriers in the middle of a first OFDM symbol, a secondary synchronization signal (SSS) transmitted in 127 subcarriers in the middle of a third OFDM symbol, and a physical broadcast channel (PBCH) transmitted in second, third, and fourth OFDM symbols. The PBCH occupying the widest bandwidth may be transmitted over 20 RBs, which may be 3.6 MHz based on 15 kHz SCS. The base station transmits one SSB by applying the same beam. When the number of base station antennas increases or it is necessary to operate multiple beams such as applying one or more analog beams for high frequency support, the base station may support a multi-beam operation by transmitting multiple SSBs. Here, the term 'beam' may be expressed in various terms such as a transmission precoding or a spatial transmission (TX) filter when applied in practice. However, in order not to obscure the gist of the description, 'beam' is used hereinafter as a unified term.

For example, the base station may transmit a plurality of SSBs 530, 540, 550, and 560 to represent a plurality of

**EP 4 597 914 A1**

beams (e.g., beam #1, beam #2, beam #3, beam #4). In this case, it may be possible that one or more SSBs are transmitted within one slot according to a pattern predetermined according to each numerology. The SSBs 530, 540, 550, and 560 to which different beams are applied may be bundled into one set by being included in an SS burst 520. The terminal may assume a half-frame window having a length of 5 ms at the time of monitoring SSBs. An SS burst set 515 configured by higher layer signaling within a half-frame may include one or more SS bursts 520. If RRC configuration values are unknown or unavailable when performing initial access (IA), the terminal may receive or measure the SSBs assuming that a periodicity of the SS burst set 510 is 20 ms. As an example, the terminal may receive SSB(s) with reference to SSB configuration information identical or similar to that shown in Table 4 and Table 5.

[Table 4]

```
MIB ::=                                SEQUENCE {
        systemFrameNumber
        subCarrierSpacingCommon
        ssb-SubcarrierOffset          // SSB subcarrier offset (0~15)
        dmrs-TypeA-Position
        pdcch-ConfigSIB1
        cellBarred
        intraFreqReselection
        spare
}

MeasObjectNR ::=                       SEQUENCE {
        ssbFrequency                   // Absolute Radio Frequency Channel Number (ARFCN)
of SSB
        ssbSubcarrierSpacing           // Numerology of SSB
        smtc1
                // first SSB measurement timing configuration (SMTC) configured with reference to




        smtc2   // Second SMTC configured with reference to SSB-MTC
        ...
        ...
}

SSB-Index                              // SSB index within SS-burst
```

[Table 5]

```
SSB-MTC ::=                              SEQUENCE {
                     // timing occasion configuration for SSBs to be measured by terminal
          periodicityAndOffset                    CHOICE {
          sf5              // offset when a SSB reception window has a legnth of 5 subframes
          sf10             // offset when a SSB reception window has a legnth of 10 subframes
          sf20             // offset when a SSB reception window has a legnth of 20 subframes
          sf40             // offset when a SSB reception window has a legnth of 40 subframes
          sf80             // offset when a SSB reception window has a legnth of 80 subframes
          sf160            // offset when a SSB reception window has a legnth of 160 subframes
          },
          duration         // a lengh of a SSB recepion window (number of subframes)
}

SSB-MTC2 ::=                             SEQUENCE {
          pci-List         // physical cell IDs (PCIs) following the SMTC configuration
          periodicity      // SMTC periodicity (number of subframes)
}
```

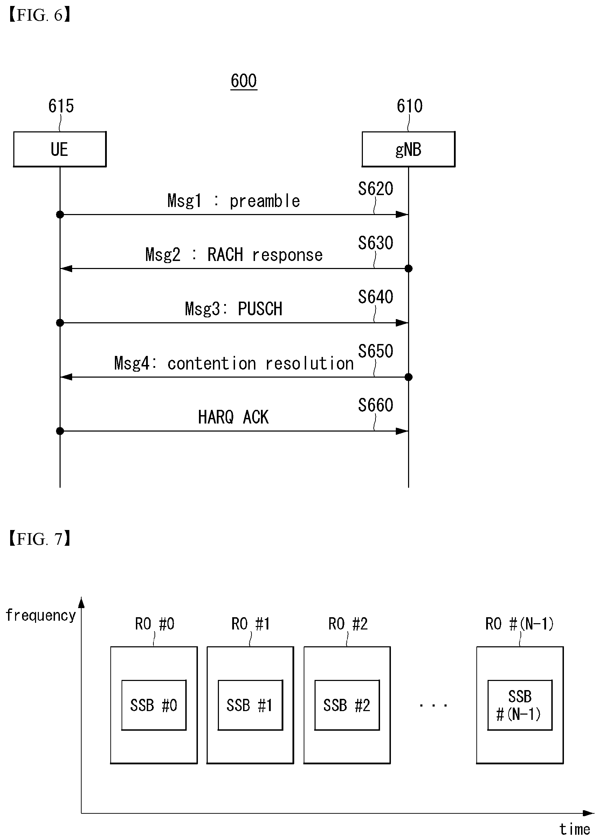

FIG. 6 is a sequence chart illustrating an exemplary embodiment of a random access procedure in a communication system.

Referring to FIG. 6, in a random access procedure of a communication system 600, a terminal 615 may transmit a physical random access channel (PRACH) preamble, and the PRACH preamble may be referred to as 'Msg1' (S620). Through a transmission of the PRACH preamble, random access-radio network temporary identifier (RA-RNTI) may be determined. In this case, the RA-RNTI may be calculated by Equation 4.

[Equation 4]

$$RA\text{-}RNTI = 1 + s\_id + 14 \times t\_id + 14 \times 80 \times f\_id + 14 \times 80 \times 8 \times ul\_carrier\_id$$

In Equation 4, s_id may be an index of a first OFDM symbol of a corresponding PRACH occasion (e.g.. $0 \le s\_id < 14$), t_id may be an index of a first slot of the PRACH occasion within a system frame (e.g., $0 \le t\_id < 80$), f_id may be an index of the PRACH occasion in the time domain (e.g., $0 \le f\_id < 8$), and ul_carrier_id may be a value according to a uplink carrier type used for the preamble transmission (e.g., 0 indicates a regular uplink carrier, 1 indicates a supplementary uplink carrier).

Before the terminal transmits the PRACH preamble, the terminal may have at least part of the following information by receiving system information from the base station on a PBCH or receiving RRC signaling from the base station.

- PRACH preamble format
- Time/frequency resource information for RACH transmission
- Index for a logical root sequence table
- Cyclic shift NCS
- Set type (unrestricted, restricted set A, restricted set B)

Referring again to FIG. 6, as a second procedure, the base station may provide a random access response (RAR) to the terminal, which may be referred to as 'Msg2' (S630). Particularly, the base station may calculate an RA-RNTI based on Equation 4 when the base station receives the PRACH preamble from the terminal in the step S620, and may transmit a DCI by using the RA-RNTI for scrambling. The terminal may monitor a PDCCH scrambled with the RA-RNTI in a period included in a RACH response window configured by the higher layer in a type 1 PDCCH common search space (CSS). The terminal may receive the PDCCH (or the DCI transmitted from the base station through the PDCCH), and may decode the PDCCH (or the DCI). If the terminal successfully decodes the PDCCH (or the DCI), the terminal may decode a PDSCH including the RAR transmitted from the base station in the step S630. If the terminal succeeds in decoding the RAR, the terminal may identify whether an RA preamble identifier (RAPID) in the RAR matches a RAPID pre-allocated to the terminal.

As a third procedure, the terminal may transmit a PUSCH to the base station, which may be referred to as 'Msg3' (S640). To this end, the terminal may determine whether to apply a transform precoding to transmission of the PUSCH (i.e., whether to apply discrete Fourier transform (DFT)-s-OFDM-based transmission or OFDM-based transmission) based on a higher layer parameter (e.g., msg3-transformPrecoding). Also, the terminal may determine a SCS to be used for transmission of the PUSCH according to a higher layer parameter (e.g., msg3-scs). In this case, the PUSCH of Msg3 may be transmitted through a serving cell to which the PRACH has been transmitted.

As a fourth procedure, the base station may transmit a contention resolution message to the terminal, which may be referred to as 'Msg4' (S650). The terminal may start a timer for receiving the contention resolution message, and may monitor a PDCCH scrambled with a temporary cell-RNTI (TC-RNTI) in the type 1 PDCCH CSS until the timer expires. If the terminal successfully decodes the PDCCH, the terminal may decode a corresponding PDSCH including a MAC CE, and set the TC-RNTI as a cell-RNTI (C-RNTI). After successfully decoding the Msg4, the terminal may report a hybrid automatic repeat request (HARQ) positive-acknowledgement (ACK) thereto to the base station, and may report whether the RACH procedure is successful to the base station (S660).

The RACH occasion (RO) may mean a time and frequency resource specified for reception of a RACH preamble, and the terminal may use the RO for PRACH transmission. As described above, in the 5G NR, multiple SSBs may be associated with different beams for the multi-beam operation, and the terminal may measure the multiple SSBs, and select an optimal SSB (i.e., optimal beam) based on one of various schemes such as a reference signal received power (RSRP), reference signal received quality (RSRQ), signal-to-noise ratio (SNR), signal-to-noise/interference ratio (SNIR), or the like. Thereafter, the terminal may determine a beam (i.e., TX spatial filter) to be used for PRACH transmission based on the beam (i.e., RX spatial filter) used when receiving the optimal SSB. In this case, a relationship between SSB(s) and RO(s) may be established for the purpose of allowing the base station or the network to know which SSB (i.e., beam) the terminal has selected. Through such the relationship, the base station may know the SSB (i.e., beam) selected by the terminal based on the RO in which the terminal has transmitted the PRACH. For example, the relationship between SSB(s) and RO(s) may be determined with reference to the higher layer configurations identical or similar to those shown in Table 6 and Table 7.

[Table 6]

```
RACH-ConfigCommon ::=                    SEQUENCE {
      rach-ConfigGeneric               // set of RACH parameters
      totalNumberOfRA-Preambles        // the total number of RACH preambles (1~63)
      ssb-perRACH-OccasionAndCB-PreamblesPerSSB     CHOICE {
            oneEighth     // The number of preambles per SSB when one SSB is associated with
eight ROs
            oneFourth     // The number of preambles per SSB when one SSB is associated with
four ROs
            oneHalf       // The number of preambles per SSB when one SSB is associated with
two ROs
            one           // The number of preambles per SSB when one SSB is associated with one
RO
            two           // The number of preambles per SSB when two SSBs are associated with
one RO
            four          // The number of preambles per SSB when four SSBs are associated with
one RO
            eight         // The number of preambles per SSB when eigth SSBs are associated with
one RO
            sixteen       // The number of preambles per SSB when sixteen SSBs are associated
with one RO
      }
      groupBconfigured                       SEQUENCE {
            ra-Msg3SizeGroupA    // The size of a transport block fro contention-based RA of Group
A
            messagePowerOffsetGroupB   // Threshold for preamble selection
            numberOfRA-PreamblesGroupA      // The number of CB preambles per SSB of Group
A
      }
}
```

[Table 7]

```
        ra-ContentionResolutionTimer      // Initial value of a contention resolution timer
        rsrp-ThresholdSSB           // Threshold for selection of an SSB and an associated RACH
resource
        rsrp-ThresholdSSB-SUL    // Threshold for selection of an SSB and an associated RACH
resource in SUL
        prach-RootSequenceIndex                    CHOICE { // RACH root sequence index
            l839
            l139
        },
        msg1-SubcarrierSpacing        // SCS for Msg1 transmission
        restrictedSetConfig           // one of {unrestricted, restricted set A, restricted set B}
        msg3-transformPrecoder        // whether to apply transform precoding in transmisison of
Msg3
        ...
}
RACH-ConfigGeneric ::=                 SEQUENCE {
        prach-ConfigurationIndex      // indicates a preamble format, etc.
        msg1-FDM                      // The number of ROs FDMed at a time
        msg1-FrequencyStart           // frequncy-axis offset of the lowest RO with reference to
PRB 0
        zeroCorrelationZoneConfig     // N-CS configuration
        preambleReceivedTargetPower   // Target power level at a network receiving node
        preambleTransMax
             // The maximum number of RA preambe transmissions performed unitl declaration of
an RA failure
        powerRampingStep              // Power ramping step
        ra-ResponseWindow             // Msg2 (RAR) window length (number of slots)
        ...,
}
```

FIG. 7 is a conceptual diagram illustrating a first exemplary embodiment of SSB-RO association according to RACH configuration in a communication system.

Referring to FIG. 7, in an SSB-RO mapping relation according to the RACH configurations, in a certain frequency band, N SSBs 710-1 to 710-n having time resources which are separated from each other may be mapped to ROs 720-1 to 720-n having time resources which are separated from each other on a one-to-one basis. For example, if a higher layer parameter msg1-FDM is set to 1 (i.e., msg1-FDM=one) and a higher layer parameter ssb-perRACH-OccasionAndCB-PreamblesPerSSB is set to 1 (e.g., ssb-perRACH-OccasionAndCB-PreamblesPerSSB=one), the N different SSBs 710-1 to 710-n may be mapped to the N different ROs 720-1 to 720-n on a one-to-one basis.

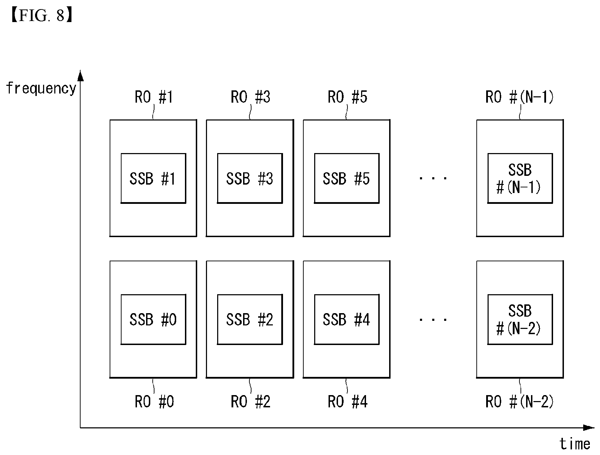

FIG. 8 is a conceptual diagram illustrating a second exemplary embodiment of SSB-RO association according to RACH configuration in a communication system.

Referring to FIG. 8, in an SSB-RO mapping relation according to the RACH configurations, in a first frequency band, SSBs 810-1, 810-3, 810-5, ..., and 810-(n-1) having time resources which are separated from each other may be mapped to ROs 820-1, 820-3, 820-5, ..., and 820-(n-1) having time resources which are separated from each other on a one-to-one basis. In addition, in a second frequency band, SSBs 810-2, 810-4, 810-6, ..., and 810-n having time resources which are separated from each other may be mapped to ROs 820-2, 820-4, 820-6, ..., and 820-n) having time resources which are separated from each other on a one-to-one basis. For example, if the higher layer parameter msg1-FDM is set to 2 (i.e., msg1-FDM=two), and higher layer parameter ssb-perRACH-OccasionAndCB-PreamblesPerSSB is set to 2 (e.g., ssb-perRACH-OccasionAndCB-PreamblesPerSSB=two), the N different SSBs 810-1 to 810-n may be mapped to the N different ROs 820-1 to 820-n which are frequency division multiplexed (FDMed) in a frequency domain, on a one-to-one basis.

Meanwhile, the 5G NR communication system may support DCI formats shown in Table 8 based on Release-16.

[Table 8]

| DCI format | Usage |
|---|---|
| 0_0 | Used for scheduling a PUSCH within one cell |
| 0_1 | Used for scheduling one or more PUSCHs within one cell, or indicating downlink feedback information for a configured grant (CG) PUSCH (i.e., CG-DFI) |

(continued)

| DCI format | Usage |
|---|---|
| 0_2 | Used for scheduling a PUSCH within one cell |
| 1_0 | Used for scheduling a PDSCH within one cell |
| 1_1 | Used for scheduling a PDSCH within one cell or triggering a one-shot HARQ- |
|  | ACK codebook feedback |
| 1_2 | Used for scheduling a PDSCH within one cell |
| 2_0 | Used for notifying a slot format, an available RB set, a channel occupancy time (COT) duration, and search space set group switching to a UE group |
| 2_1 | Used for notifying PRB(s) and OFDM symbol(s) assumed not to be intended to be used for transmission to a UE group |
| 2_2 | Used for transmission of a transmission power control (TPC) for a PUCCH and a PUSCH |
| 2_3 | Used for transmission of a TPC command group for SRS transmission by one or more UEs |
| 2_4 | Used for a UE to notify PRB(s) and OFDM symbol(s) for which UL transmission from the UE is cancelled to a UE group |
| 2_5 | Used for notifying availability of soft resources |
| 2_6 | Used for notifying power saving information outside a DRX active time to one or more UEs |
| 3_0 | Used for NR sidelink scheduling within one cell |
| 3_1 | Used for LTE sidelink scheduling within one cell |

A DCI may include downlink control information for one or more cells, and may be associated with one RNTI. The DCI may be encoded through the order of 1) information element multiplexing, 2) cyclic redundancy check (CRC) addition, 3) channel coding, and 4) rate matching, and decoding may also be performed in consideration of the above steps. In the above description, "a certain DCI is associated with one RNTI" may mean that CRC parity bits of the DCI are scrambled with the RNTI. Referring to Table 8, some DCI may include scheduling information of one or more PUSCHs for a certain cell.

For example, a CRC of the DCI format 0_1 may be scrambled with a C-RNTI, configured scheduling-RNTI (CS-RNTI), semi-persistent CSI RNTI (SP-CSI-RNTI), or modulation coding scheme cell RNTI (MCS-C-RNTI). The DCI format 0_1 may include at least one of the following information.

☐ Identifier for DCI format (1 bit): Indicator indicating a UL DCI format, which is always set to 0 in the case of DCI format 0_1
☐ Carrier indicator (0 or 3 bits): Indicator indicating a CC scheduled by the corresponding DCI
☐ DFI flag (0 or 1 bit): Configured grant downlink feedback information (CG-DFI) indicator

- If the DCI format 0_1 is used for CG-DFI indication (when the DFI flag is set to 1), at least one of the following fields may be used:

    ☐ HARQ-ACK bitmap (16 bits), where the order of mapping HARQ process indexes within the bitmap is that the HARQ process indexes are mapped from the MSB to the LSB of the bitmap in ascending order. For each bit in the bitmap, a value of 1 indicates ACK, and a value of 0 indicates NACK.
    ☐ TPC command for a scheduled PUSCH (2 bits)
    ☐ All the remaining bits in the DCI format 0_1 are set to zero

- If the DCI format 0_1 is not used for CG-DFI indication (when there is no DFI flag field or DFI flag field is set to 0), at least one of the following fields may be used:

    ☐ UL/SUL indicator (0 or 1 bit): supplementary UL indicator.
    ☐ Bandwidth part indicator (0, 1, or 2 bits): Indicator indicating a BWP to be activated among uplink BWPs configured for the terminal.
    ☐ Frequency domain resource assignment: Indicator for allocating a frequency domain resource.

☐ Time domain resource assignment: Indicator for allocating a time domain resource.

☐ Frequency hopping flag (0 or 1 bit): Frequency axis hopping indicator

☐ Modulation and coding scheme (5 bits)

☐ New data indicator (NDI): Indicator indicating whether allocated data is new data or retransmission data.

☐ Redundancy version (RV): Indicator indicating an RV value when channel coding is applied to allocated data

☐ HARQ process number (4 bits): Indicator indicating a HARQ process to be allocated to scheduled data

☐ TPC command for a scheduled PUSCH (2 bits): TPC indicator

☐ SRS resource indicator: Aperiodic SRS resource selection indicator

☐ Precoding information and number of layers: Indicator indicating precoding and the number of transport layers to be used in PUSCH transmission

☐ Antenna ports: Indicator for uplink antenna ports to be used for PUSCH transmission

☐ SRS request: Indicator indicating whether to transmit aperiodic SRS

☐ CSI request: Indicator indicating whether and how to report channel state information

☐ PTRS-DMRS association: Indicator indicating a relationship between an uplink phase-noise tracking reference signal (PTRS) antenna port and a demodulation reference signal (DMRS) antenna port

☐ DMRS sequence initialization: Indicator for a DMRS sequence initialization value during OFDM-based uplink transmission

☐ UL-SCH indicator: Indicator indicating whether or not an uplink shared channel (UL-SCH) is included in a PUSCH (a PUSCH that does not include a UL-SCH needs to include CSI)

☐ Open-loop power control parameter set indication: Indicator indicating a set of open-loop power control (OPLC) parameter set

☐ Priority indicator: Uplink transmission priority indicator

☐ Invalid symbol pattern indicator: Indicator indicating whether to apply an invalid symbol pattern configured by a higher layer

As another example, a CRC of the DCI format 1_1 may be scrambled with a C-RNTI, CS-RNTI, or MCS-C-RNTI, and the DCI format 1_1 may include at least one of the following information.

☐ Identifier for DCI format (1 bit): Indicator indicating a DL DCI format, which is always set to 1 in the case of DCI format 1_1

☐ Carrier indicator (0 or 3 bits): Indicator indicating a CC scheduled by the corresponding DCI

☐ Bandwidth part indicator (0, 1, or 2 bits): Indicator indicating a BWP to be activated among downlink BWPs configured for the terminal

☐ Frequency domain resource assignment: Indicator for allocating a frequency domain resource

☐ Time domain resource assignment: Indicator for allocating a time domain resource

☐ PRB bundling size indicator: Indicator indicating a type (i.e., static or dynamic) and a size of PRB bundling

☐ Rate matching indicator: Indicator indicating a rate matching pattern configured by a higher layer

☐ ZP CSI-RS trigger: Indicator for applying aperiodic zero-power (ZP) CSI-RS

☐ 'modulation and coding scheme', 'new data indicator', and 'redundancy version' fields for a transport block 1

☐ 'modulation and coding scheme', 'new data indicator', and 'redundancy version' fields for a transport block 2

☐ HARQ process number: Indicator indicating a HARQ process to be allocated to scheduled data

☐ Downlink assignment index: DAI indicator for HARQ-ACK codebook generation in TDD operation

☐ TPC command for a scheduled PUCCH: Power control indicator for PUCCH transmission

☐ PUCCH resource indicator: Indicator indicating a PUCCH resource for transmitting HARQ-ACK information for an allocated PDSCH or a predetermined PDSCH set

☐ PDSCH-to-HARQ_feedback timing indicator: Indicator indicating a time axis offset between the allocated PDSCH and the PUCCH

☐ Antenna port(s): Indicator indicating antenna ports to be used for PDSCH transmission/reception

☐ Transmission configuration indication: Indicator indicating transmission configuration information (TCI) to be used for PDSCH transmission and reception

☐ SRS request: Indicator indicating whether to transmit aperiodic SRS

☐ DMRS sequence initialization: Indicator for a DMRS sequence initialization value used for PDSCH transmission and reception

☐ Priority indicator: PDSCH reception priority indicator

As another example, certain DCI formats may be used to deliver the same control information to one or more terminals. For example, a CRC of the DCI format 2_3 may be scrambled with a transmit power control-sounding reference signal-RNTI (TPC-SRS-RNTI), and may include at least one of the following information.

☐ Block number 1, Block number 2, ..., Block number B: Indicators indicating resource regions to which the DCI format 2_3 is applied. A starting part of the block is configured by a higher layer parameter startingBitOfFormat2-3 or startingBitOfFormat2-3SUL-v1530.

- When a terminal for which a higher layer parameter srs-TPC-PDCCH-Group is set to type A performs uplink transmission without a PUCCH and PUSCH or uplink transmission in which SRS power control is not tied to PUSCH power control, one block is configured by the higher layer, and the following fields are defined for the block.

☐ SRS request (0 or 2 bits): Aperiodic SRS transmission indicator

☐ TPC command number 1, TPC command number 2, ...,TPC command number N: Indicators indicating uplink power control to be applied to a UL carrier indicated by a higher layer parameter cc-IndexInOneCC-Set.

- When a terminal for which a higher layer parameter srs-TPC-PDCCH-Group is set to type B performs uplink transmission without a PUCCH and PUSCH or uplink transmission in which SRS power control is not tied to PUSCH power control, one or more blocks may be configured by the higher layer, and the following fields are defined for each block.

☐ SRS request (0 or 2 bits): Aperiodic SRS transmission indicator.

☐ TPC command (2 bits)

As another example, certain DCI formats may be used to deliver the same control information to more than one terminal. For example, a CRC of a DCI format 2_0 may be scrambled with an SFI-RNTI and may be used to notify information such as slot format(s), channel occupancy time (COT) duration(s), available RB set(s), and search space set group switching. Specifically, the DCI format 2_0 may include at least one of the following information.

- If a higher layer parameter slotFormatCombToAddModList is configured,

☐ Slot format indicator 1, Slot format indicator 2, ..., Slot format indicator N

- If a higher layer parameter availableRB-SetsToAddModList-r16 is configured,

☐ Available RB set indicator 1, Available RB set indicator 2, ..., Available RB set indicator N1

- If a higher layer parameter co-DurationsPerCellToAddModList-r16 is configured,

☐ COT duration indicator 1, COT duration indicator 2, ..., COT duration indicator N2

- If a higher layer parameter searchSpaceSwitchTriggerToAddModList-r16 is configured,

☐ Search space set group switching flag 1, Search space set group switching flag 2, ..., Search space set group switching flag M

The size of DCI format 2_0 may be set by a higher layer as one of values up to 128 bits. For example, a DCI format 2_5 may be used to notify availability of soft type resources of an IAB node. A CRC of the DCI format 2_5 may be scrambled with an availability indicator (AI)-RNTI and may include information below.

☐ Availability indicator 1, Availability indicator, ..., Availability indicator N

The size of DCI format 2_5 may set by a higher layer as one of values less than or equal to 128 bits.
The terminal may receive configuration information of a CORESET #0 and a search space #0, identical or similar to that shown in Table 9.

[Table 9]

```
PDCCH-ConfigSIB1 ::=                SEQUENCE {
    controlResourceSetZero
    searchSpaceZero
}

ControlResourceSetZero     // indicates a configuration value (0~15) of a CORESET #0 within an
initial BWP
SearchSpaceZero            // indicates a configuration value (0~15) of a search space #0 within an
initial BWP
```

The terminal may refer to the following higher layer configurations for cell-specific PDCCH monitoring, identical or similar to those shown in Tables 10 to 13.

[Table 10]

```
PDCCH-ConfigCommon ::=                SEQUENCE {
    controlResourceSetZero // indicates a configuration value (0~15) of a CORESET #0 within an
initial BWP
    commonControlResourceSet
            // configure a common CORESET by referring to CORESET configuration
searchSpaceZero      // indicates a configuration value (0~15) of a search space #0 within an initial
BWP
    commonSearchSpaceList   // configures a search sapce to be used for cell-specific PDCCH
monitoring by referring to up to four search space configurations
    searchSpaceSIB1            // search space configuration for SIB1
    searchSpaceOtherSystemInformation   // search space configuration for SIB2 or other SIBs
    pagingSearchSpace                 // search space configuration for paging
    ra-SearchSpace                    // search space configuration for random access
procedure
    ...
}
```

[Table 11]

```
ControlResourceSet ::=                    SEQUENCE {
        controlResourceSetId          // CORESET ID (a value other than 0 is used)
        frequencyDomainResources      // configuration of frequency resources of a CORESET
        duration                      // configuration of a time-axis length (symbols) of a
CORESET
        cce-REG-MappingType                       CHOICE { // CCE-to-REG mapping
configuration
                interleaved                       SEQUENCE {
                        reg-BundleSize
                        interleaverSize
                        shiftIndex
                },
                nonInterleaved
        },
        precoderGranularity
        tci-StatesPDCCH-ToAddList
                // indicates a QCL relation possible between a QCL reference RS and a PDCCH
DMRS
        tci-StatesPDCCH-ToReleaseList
        tci-PresentInDCI             // indicates whether a TCI field exists within the DCI format 1_1
        pdcch-DMRS-ScramblingID    // indicates a scrambling initialization value of a PDCCH
DMRS
        ...
}
```

[Table 12]

```
SearchSpace ::=                          SEQUENCE {
        searchSpaceId              // search space ID
        controlResourceSetId       // CORESET ID associated with the search space
monitoringSlotPeriodicityAndOffset       CHOICE { // periodicity and offset of a PDCCH
monitoring slot
        sl1             // performs PDCCH monitoring in every slot

        ...
                       // (omitted) monitoring offset values when a PDCCH monitoring periodicity
is one of 2 to 1280 slots
        sl2560      // a monitoring offset value when a PDCCH monitoring periodicity is 2560
slots
        }
        duration        // the number of slots where a search space exists for each occasion
수

        monitoringSymbolsWithinSlot
                // a position of a first symbol on which monitoring is to be performed within a PDCCH
monitoring slot
        nrofCandidates                            SEQUENCE {
                aggregationLevel1    // The number of PDCCH candidates in case of aggregation level 1
                aggregationLevel2    // The number of PDCCH candidates in case of aggregation level 2
                aggregationLevel4    // The number of PDCCH candidates in case of aggregation level 4
                aggregationLevel8    // The number of PDCCH candidates in case of aggregation level 8
                aggregationLevel16   // The number of PDCCH candidates in case of aggregation level
16
        }
        searchSpaceType                            CHOICE { // indicates a search space type
(common or UE-specific) and DCI formats
```

[Table 13]

```
        common                                          SEQUENCE {
              dci-Format0-0-AndFormat1-0                 SEQUENCE {
                    ...
              }
              dci-Format2-0                              SEQUENCE {
                    nrofCandidates-SFI                   SEQUENCE {
                          ...
                    },
                    ...
              }
              dci-Format2-1
              dci-Format2-2
              dci-Format2-3                              SEQUENCE {
                    dummy1
                    dummy2
              }
        },
        ue-Specific                                      SEQUENCE {
              dci-Formats
              ...,
        }
     }
}
```

The terminal may refer to the following higher layer configurations for UE-specific PDCCH monitoring, identical or similar to those shown in Table 14.

[Table 14]

```
PDCCH-Config ::=                        SEQUENCE {
        controlResourceSetToAddModList
                // At most three CORESETs are configured by referring to CORESET
configuration
        controlResourceSetToReleaseList
        searchSpacesToAddModList
                // At most ten search spaces are configured by referring to search space
configuration
searchSpacesToReleaseList
        downlinkPreemption          // downlink preemption indicator
        tpc-PUSCH                   // configuraion of reception of a group TPC for PUSCH
transmission
        tpc-PUCCH                   // configuration of reception of a group TPC for PUCCH
transmission
        tpc-SRS                     // configuration of reception of a group TPC for SRS transmission
        ...,
}
```

The presence of one antenna port may mean a case in which a channel experienced by a symbol transmitted through the corresponding antenna port can be estimated or inferred from a channel experienced by another symbol transmitted through the same antenna port. "Two different antenna ports are quasi co-located (QCLed)" may mean a case in which large-scale characteristics of a channel experienced by a symbol transmitted through one antenna port can be estimated or inferred from a channel experienced by a symbol transmitted through another antenna port. The large-scale characteristics of the channel may mean at least one of 'delay spread', 'Doppler spread', 'Doppler shift', 'average gain', 'average delay', and 'spatial Rx parameters'.

When time/frequency resources of a certain signal (e.g., QCL target RS) are insufficient and large-scale characteristics of a channel cannot be accurately measured with only the corresponding signal, information (i.e., QCL information) on another signal (e.g., QCL reference RS having sufficient time/frequency resources) having large-scale characteristics that can be reused for reception of the corresponding signal (i.e., QCL target RS) may be provided to the terminal to improve the channel measurement performance of the terminal. The NR communication system may support various QCL types as follows.

- QCL-Type A: including {Doppler shift, Doppler spread, average delay, delay spread}.
- QCL-Type B: including {Doppler shift, Doppler spread}
- QCL-Type C: including {Doppler shift, average delay}
- QCL-Type D: including {Spatial Rx parameters}

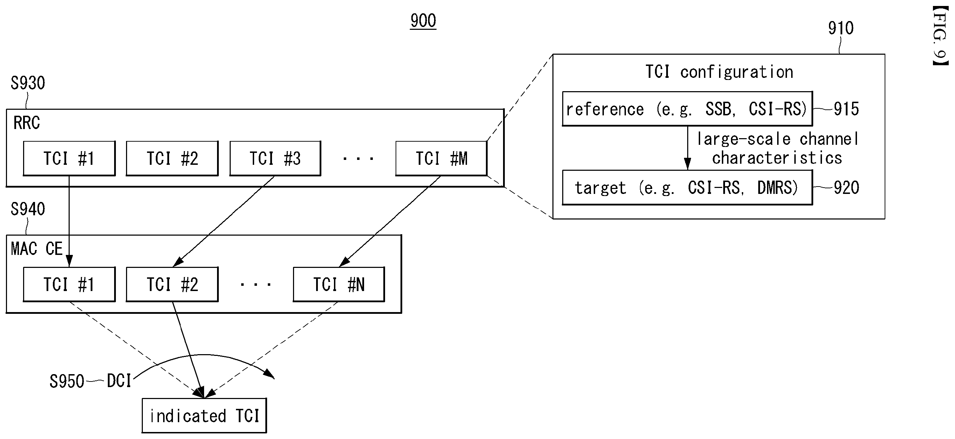

FIG. 9 is a conceptual diagram illustrating an exemplary embodiment of a QCL information transfer process through TCI state configuration and indication in a communication system.

Referring to FIG. 9, in a process of transmitting QCL information through TCI state configuration and indication in a communication system 900, a base station may configure at most M TCI states to a terminal through higher layer (i.e., RRC) signaling, in accordance with a UE capability report and a maximum value (e.g., 4, 8, 64, or 128 depending on a frequency band) defined in a technical specification (S930). In this case, each TCI state configuration 910 may include information on a signal or channel (i.e., QCL reference 915) that provides large-scale channel characteristics to a signal or channel (i.e., QCL target 920) referring to the TCI. One TCI state configuration 910 may include up to two references (i.e., qcl-Type1 and qcl-Type2), the first reference may be one of the QCL-Type A, QCL-Type B, and QCL-type C (i.e., qcl-type1 ∈ {QCL-type A, QCL-type B, QCL-type C}), and the second reference may be the QCL-type D if present (i.e., qcl-type 2 = QCL-type D).

Allowing the base station to apply all the TCIs configured through the RRC signaling in real time may greatly increase implementation complexity of the terminal, the base station may transmit an activation message for some of the TCIs configured through the RRC signaling to the terminal through L2 signaling such as a MAC CE (S940). The base station may activate a maximum of N (<M) TCIs, and the terminal may receive a dynamic indication only for the activated TCI.

Thereafter, the base station may dynamically indicate to the terminal some of the activated N TCIs through L1 signaling such as a DCI (S950). The terminal may apply QCL information indicated by the corresponding TCI at a predetermined timing after receiving the L1 signaling, and may perform a reception operation for the signal or channel.

The TCI state indication steps including the 'RRC signaling (S930)', 'MAC CE signaling (S940)', and 'DCI signaling (S950)' of FIG. 9 may be partially omitted depending on a type of the QCL target RS. For example, when the QCL target is a PDSCH DMRS, and one or more TCI states are configured through RRC signaling, the base station may indicate the TCI state using all the steps of FIG. 9. However, when the QCL target is a PDSCH DMRS, and a single TCI state is configured through RRC signaling, the MAC CE signaling (S940) and the DCI signaling step (S950) may be omitted. Similarly, when the QCL target is a PDCCH DMRS, the DCI signaling step S940 may be omitted. Specifically, the terminal may obtain configuration information for the TCI states and QCL information with reference to the RRC signaling identical or similar to those shown in Table 15.

[Table 15]

```
TCI-State ::=                          SEQUENCE { // TCI configuration (I.1-00)
      tci-StateId        // TCI state ID
      qcl-Type1          // first QCL reference configured by referring to QCL information
      qcl-Type2          // second QCL reference configured by referring to QCL information
      ...
}

QCL-Info ::=                           SEQUENCE {
      cell                       // index of a cell in which QCL reference is transmitted
      bwp-Id                     // index of a BWP in which QCL reference is transmitted
      referenceSignal                        CHOICE {
        csi-rs               // index of a CSI-RS to be referred when QCL reference is a CSI-
RS
        ssb                  // index of an SSB to be referred when QCL reference is an SSB
      },
      qcl-Type
        // QCL type to be applied to a QCL target (one of QCL-type A, QCL-type B, QCL-type C,
and QCL-type D)
      ...
}
```

The base station may instruct the terminal to activate or deactivate some of the TCI states configured by the RRC signaling through MAC CE signaling, or may instruct the terminal to apply a TCI state indicated by a MAC CE to the QCL target RS. For example, the base station may use the following MAC CE signaling according to the type of the QCL target RS.

- TCI state activation/deactivation MAC CE for a UE-specific PDSCH DMRS
- TCI state indication MAC CE for a UE-specific PDCCH DMRS
- TCI state activation/deactivation MAC CE for an enhanced UE-specific PDSCH DMRS

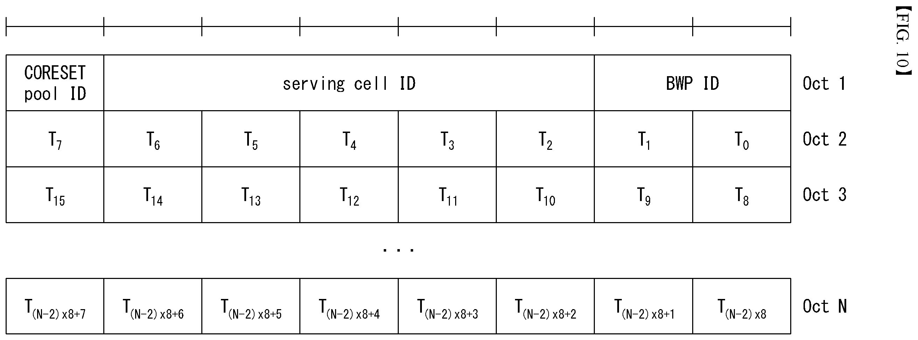

FIG. 10 is a conceptual diagram illustrating an exemplary embodiment of a TCI state activation/deactivation MAC CE in a communication system.

Referring to FIG. 10, a first octet (Oct 1) in a TCI state activation/deactivation MAC CE for a UE-specific PDSCH DMRS may include a COREST pool ID field 1010, a serving cell ID field 1020, and a BWP ID field 1030, and a second octet (Oct 2) to an N-th octet (Oct N) may include Ti fields 1040 indicating TCI state IDs i. The detailed meaning of each field may be as follows, and the sizes thereof may be variable.

- Serving cell ID: a serving cell ID to which the MAC CE is applied
- BWP ID: BWP ID to which the MAC CE is applied, which indicates a BWP in association with a BWP indication field within the DCI
- Ti: indicates a TCI state ID i. When this value is set to 0, it may mean that a TCI state whose TCI state ID is i is deactivated, and when this value is set to 1, it may mean that a TCI state whose TCI state ID is i is activated. The TCI states activated by 1 may be sequentially mapped to TCI indication field code points within the DCI.
- CORESET pool ID: If a DCI scheduling a PDSCH is monitored in a CORESET that does not include a higher layer parameter coresetPoolIndex, the field may be ignored. If a DCI scheduling a PDSCH is monitored in a CORESET including the higher layer parameter coresetPoolIndex, Ti indication may be applied only when a value of the CORESET pool ID matches a value of coresetPoolIndex of the CORESET.

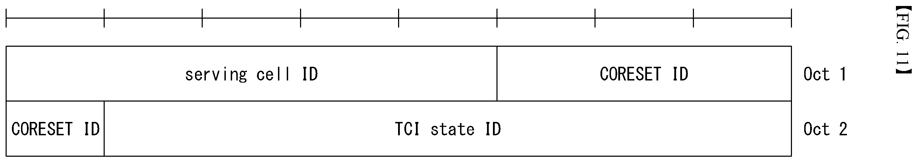

FIG. 11 is a conceptual diagram illustrating an exemplary embodiment of a TCI state indication MAC CE in a communication system.

Referring to FIG. 11, a first octet (Oct 1) in a TCI state activation/deactivation MAC CE for a UE-specific PDSCH DMRS may include a serving cell ID field 1110 and a CORESET ID field 1120, and a second octet (Oct 2) may include a CORESET ID field 1130 and a TCI state ID field 1140. The sizes thereof may be variable.

- Serving cell ID: a serving cell ID to which the corresponding MAC CE is applied.
- CORESET ID: indicates a CORESET to which the MAC CE is applied. If this value is set to 0, a CORESET configured through controlResourceSetZero may be a CORESET #0.
- TCI state ID: means a TCI state ID indicated by the corresponding MAC CE.

The base station may configure spatial relation information to the terminal through higher layer (e.g., RRC) signaling in order to indicate uplink beam information. The spatial relation information may mean a signaling structure for using spatial domain filters used for transmission and reception of a reference RS for spatial TX filters for uplink transmission of a target RS according to the corresponding spatial relation. The spatial reference RS may be a downlink signal such as SSB or CSI-RS, and may also be an uplink signal such as SRS. If the reference RS is a downlink signal, the terminal may use the spatial RX filter values used for receiving the reference RS as spatial TX filter values for transmitting the target RS according to the spatial relation. If the reference RS is an uplink signal, the terminal may use the spatial TX filter values used for transmitting the reference RS as the spatial TX filter values for transmitting the target RS according to the spatial relation.

The signaling structure for the spatial relation information may vary depending on the type of target RS. For example, when the target RS is an SRS, the base station may perform RRC configuration for each SRS resource based on message identical or similar to those shown in Table 16.

[Table 16]

```
SRS-SpatialRelationInfo ::=          SEQUENCE {
    servingCellId                    // index of a serving cell in which a reference RS is transmitted
    referenceSignal                          CHOICE {
        ssb-Index          // SSB index when a reference RS is SSB
        csi-RS-Index       // CSI-RS resource index when a reference RS is CSI-RS
        srs                              SEQUENCE {
            resourceId     // SRS resource index when a reference RS is SRS
            uplinkBWP      // index of a UL BWP in which SRS is transmitted when a
reference RS is SRS
        }
    }
}
```

For example, when the target RS is an SRS, the base station may perform RRC configuration for each SRS resource, identical or similar to those shown in Table 17.

[Table 17]

```
PUCCH-SpatialRelationInfo ::=          SEQUENCE {
    pucch-SpatialRelationInfoId    // spatial relation information ID for PUCCH
    servingCellId                  // index of a serving cell in which a reference RS is
transmitted
    referenceSignal                          CHOICE {
        ssb-Index          // SSB index when a reference RS is SSB
        csi-RS-Index       // CSI-RS resource index when a reference RS is CSI-RS
        srs                // specifiy a SRS resource by referring to PUCCH-SRS
configuration
    },
    pucch-PathlossReferenceRS-Id
                // index of a RS resource to be used for measurement of a pathloss of a PUCCH
    p0-PUCCH-Id        // index of confuring p0 for PUCCH power control
    closedLoopIndex     // configuration value of closed-loop power control
}

PUCCH-SRS ::=   SEQUENCE {
    resource                       // SRS resource index
    uplinkBWP                      // index of a BWP in which SRS is transmitted
}
```

In the 5G NR communication system, a slot format may include downlink symbol(s), uplink symbol(s), and/or flexible symbol(s).

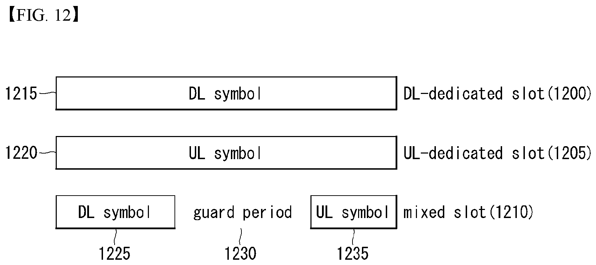

FIG. 12 is a conceptual diagram illustrating slot configurations according to slot formats in a communication system.

Referring to FIG. 12, in slot configurations according to slot formats in a communication system, a downlink dedicated slot 1200 may be a slot in which all symbols within the slot are configured only as downlink symbols 1215 according to a slot format. As another example, an uplink dedicated slot 1205 may be a slot in which all symbols within the slot are configured only as uplink symbols 1220 according to a slot format. As another example, in a downlink/uplink mixed slot 1210, some symbols within the slot may be configured as downlink symbols 1225, and some symbols within the slot may be configured as uplink symbols 1235 according to a slot format. In this case, specific symbols of the mixed slot 1210 including both the uplink and downlink symbols may be configured or indicated as a guard period 1230 for downlink-uplink switching, and the terminal may not perform transmission/reception during the guard period 1230.

In the 5G NR communication system, the base station may configure a 'slot format' over one or more slots for each serving cell to the terminal through a higher layer parameter tdd-UL-DL-ConfigurationCommon. In this case, the higher layer parameter tdd-UL-DL-ConfigurationCommon may include or refer to at least one of the following information.

- Reference subcarrier spacing: reference numerology $\mu_{ref}$
- Pattern 1: A first pattern.
- Pattern 2: A second pattern.

Here, the pattern 1 or pattern 2 may include at least one of the following configurations.

- Slot configuration periodicity (i.e., dl-UL- TransmissionPeriodicity): Slot configuration periodicity P expressed in units of msec
- Number of downlink dedicated slots (i.e., nrofDownlinkSlots): The number $d_{slots}$ of slots composed only of downlink symbols
- Number of downlink symbols (i.e., nrofDownlinkSymbols): The number $d_{sym}$ of downlink symbols
- Number of uplink dedicated slots (i.e., nrofUplinkSlots): The number $u_{slots}$ of slots composed only of uplink symbols
- Number of uplink symbols (i.e., nrofUplinkSymbols): The number $u_{sym}$ of uplink symbols

The slot configuration periodicity P msec of the first pattern may include $S = P \cdot 2^{\mu_{ref}}$ slots, and in this case, the numerology may follow $\mu_{ref}$. In addition, among the S slots, the first $d_{slots}$ slots may include only downlink symbols, and the last $u_{slots}$ slots may include only uplink symbols. In this case, $d_{sym}$ symbols after first $d_{slots}$ slots may be downlink symbols. In addition, $u_{sym}$ symbols before last $u_{slots}$ slots may be uplink symbols. The remaining symbols (i.e., $(S - d_{slots} - $

$$u_{slots}) \cdot N_{symb}^{slot} - d_{sym} - u_{sym}$$

symbols) that are not designated as downlink symbols or uplink symbols in the pattern may be flexible symbols.

If the second pattern is configured and the slot configuration periodicity of the second pattern is $P_2$, a slot configuration periodicity $P + P_2$ msec configured with a combination of the first pattern and the second pattern may include first $S = P \cdot 2^{\mu_{ref}}$ slots and second $S_2 = P_2 \cdot 2^{\mu_{ref}}$ slots. In this case, the positions and numbers of downlink symbols, uplink symbols, and flexible symbols in the second pattern may be configured with reference to the description of the first pattern based on configuration information of the second pattern. In addition, when the second pattern is configured, the terminal may assume that $P + P_2$ is a divisor of 20 msec.

The base station may override direction(s) of 'flexible symbol(s)' among symbols configured through the higher layer parameter tdd-UL-DL-ConfigurationCommon by using the higher layer parameter tdd-UL-DL-ConfigurationDedicated) based on the following information.

- Slot configuration set (i.e., slotSpecificConfigurationsToAddModList): A set of slot configurations
- Slot index (i.e., slotIndex): An index of a slot included in the set of slot configurations
- Symbol directions (i.e., symbols): The directions of the symbols indicated by the slot index (i.e., slotIndex). If all symbol directions are downlink (symbols = allDownlink), all symbols within the corresponding slot are downlink symbols. If all symbol directions are uplink (symbols = allUplink), all symbols within the corresponding slot are uplink symbols. If the symbol directions are explicit (symbols = explicit), nrofDownlinkSymbols may indicate the number of downlink symbols located in the first part of the corresponding slot, and nrofUplinkSymbols may indicate the number of uplink symbols located in the last part of the corresponding slot. If the nrofDownlinkSymbols or the nrofUplinkSymbols is omitted, the corresponding parameter may be regarded as indicating a value of 0. The remaining symbols within the slot become flexible symbols.

In the 5G communication system, the base station may indicate a slot format to the terminal based on L1 signaling. For example, when the terminal receives a higher layer parameter SlotFormatIndicator from the base station, the terminal may obtain configuration information a slot format indication-RNTI (i.e., SFI-RNTI). Meanwhile, when the terminal receives a higher layer parameter dci-PayloadSize from the base station, the terminal may obtain configuration information of a payload size of the DCI format 2_0. In addition, the terminal may additionally receive, from the base station, information on PDCCH candidate(s), CCE aggregation level, and search space set(s) of a CORESET for monitoring the DCI format 2_0. Each slot format indication (SFI) index field in the DCI format 2_0 may indicate a slot format to be applied to each slot in a slot set of a DL BWP and a UL BWP from a slot in which the terminal has detected the corresponding DCI format 2_0. In this case, the size of the slot set may be equal to or greater than a PDCCH monitoring periodicity of the DCI format 2_0. For example, when the slot set is composed of N slots, the DCI format 2_0 may include N SFI index fields, and each SFI index field may indicate a format value of Tables 18 to 20 below. In Tables 18 to 20, 'D' may mean a downlink symbol, 'U' may mean an uplink symbol, and 'F' may mean a flexible symbol.

[Table 18]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |

[Table 19]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |

EP 4 597 914 A1

(continued)

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |

[Table 20]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 - 254 | Reserved | | | | | | | | | | | | | |

(continued)

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 255 | UE determines a slot format of a slot based on a higher layer parameter *tdd-UL-DL-ConfigurationCommon* or a higher layer parameter *tdd-UL-DL-ConfigurationDedicated,* and a detected DCI format (when exists). | | | | | | | | | | | | | |

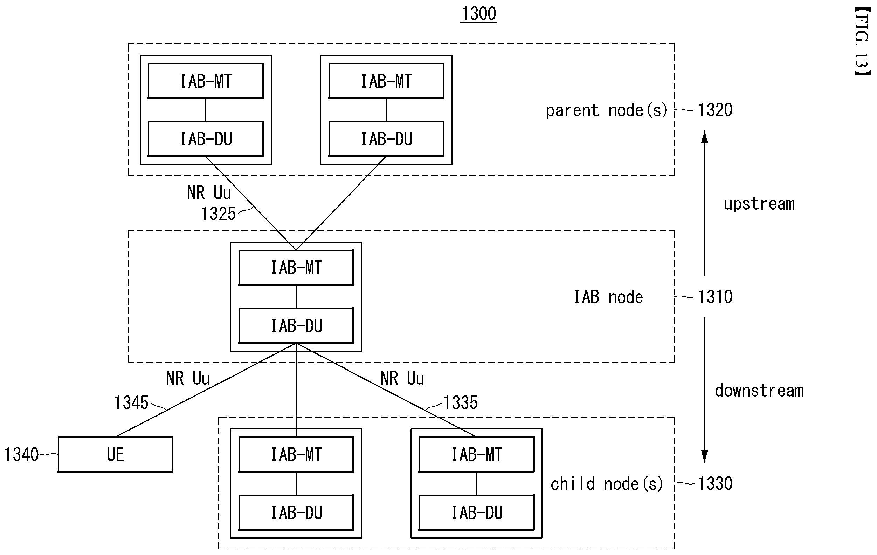

In the 5G NR communication system, it may be possible to support flexible and dense wireless backhaul links for each cell through the IAB feature, without support of a wired network. FIG. 13 is a conceptual diagram illustrating an exemplary embodiment of an IAB network in a communication system.

Referring to FIG. 13, a communication system 1300 may include one or more communication nodes. The communication nodes of the communication system 1300 may constitute an IAB network. For example, the communication system 1500 may include one or more IAB nodes. FIG. 13 shows an exemplary embodiment in which one IAB node communicates with one or more upper nodes and one or more lower nodes. However, this is merely an example for convenience of description, and exemplary embodiments of the present disclosure are not limited thereto.

The communication system 1300 may include a plurality of IAB nodes. For example, the communication system 1300 may include a first IAB node 1310, one or more parent nodes 1320 corresponding to upper nodes of the first IAB node 1310, and/or one or more child nodes 1330 corresponding to lower nodes of the first IAB node 1310. Here, each of the one or more parent nodes 1320 may be referred to as a 'donor node'. The IAB node 1310, the one or more parent nodes 1320, and/or the one or more child nodes 1330 may constitute the IAB network. Each of the IAB nodes 1310, 1320, and 1330 constituting the IAB network may function as a type of repeater configured based on a front-haul structure. In the communication system 1300 to which the IAB network technology is applied, it is possible to support flexible and dense wireless backhaul links for each cell without support of a wired network.

Each of the IAB nodes 1310, 1320, and 1330 may include an IAB-DU and an IAB-MT. The IAB-MT may allow each IAB node to function as a terminal in communication with an upper node. For example, the first IAB node 1310 may communicate with the upper parent nodes 1320 through the IAB-MT. On the other hand, the IAB-DU may allow each IAB node to function as a base station or a cell in communication with a lower node. For example, the first IAB node 1310 may communicate with the lower child nodes 1330 or a terminal 1340 through the IAB-DU.

The IAB-MT of the first IAB node 1310 may be connected to the IAB-DUs of the parent nodes 1320 through Uu interfaces 1325. The IAB-DU of the first IAB node 1310 may be connected to the IAB-MTs of the child nodes 1330 through Uu interfaces 1335. The IAB-DU of the first IAB node 1310 may be connected to a terminal 1340 through a Uu interface 1345.

After the IAB node constituting the IAB network completely decodes a received signal, the IAB node may re-encode the decoded received signal, and amplify and transmit it. The IAB node may be classified as a type of regenerative relay. To this end, the IAB node may support a control plane (CP) and a user plane (UP) from the parent node to the terminal based on a protocol stack structure including the L1 and L2 layers, or higher layers.

The IAB node constituting the IAB network has an advantage of being able to perform various operations including operations as a base station and a terminal. On the other hand, the IAB node has disadvantages in that implementation complexity and production cost are relatively high, and a delay required for retransmission may be relatively large.

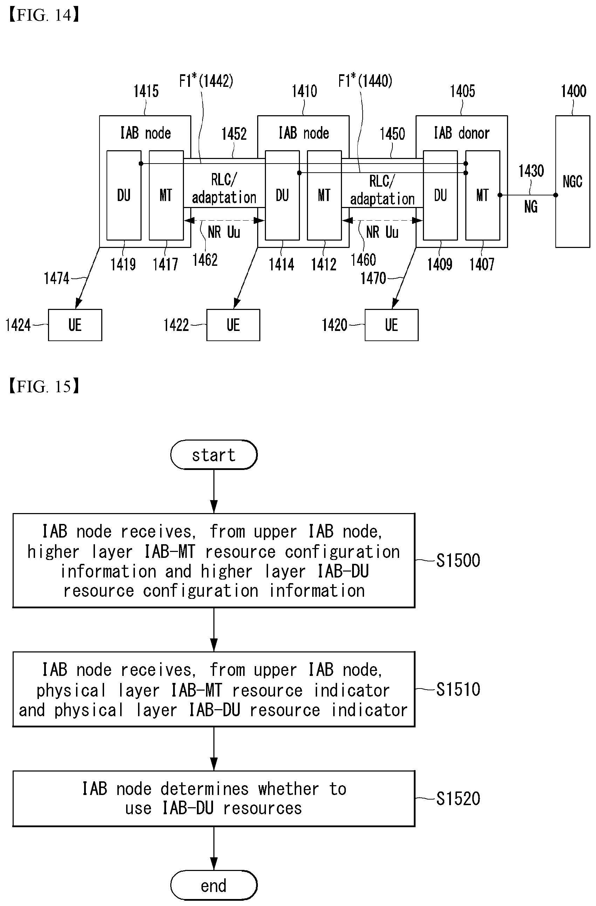

FIG. 14 is a block diagram illustrating an exemplary embodiment of a functional split structure of a central unit (CU) and a distributed unit (DU) in a communication system.

Referring to FIG. 14, in a CU-DU functional split structure in the IAB network, IAB nodes 1410 and 1415 in a two-hop chain are connected to an IAB donor 1405, and each of the IAB nodes 1410 and 1415 and terminals 1420, 1422, and 1424 may be connected to a next generation core (NGC) 1400 in a stand-alone (SA) mode. The IAB nodes 1410 and 1415 may include one DU and one MT, respectively. A certain IAB node (e.g. 1415) may be connected to the parent IAB node 1410 or the IAB donor 1405 via an MT 1417. As another example, a certain IAB node (e.g. 1410) may establish a RLC channel with the MT 1417 of the child IAB node 1415 through a DU 1414. In this case, the RLC channels 1450 and 1452 established for the MTs 1412 and 1417 may additionally include some information for IAB operations in addition to the existing components of a RLC channel for a terminal. Accordingly, the RLC channels 1450 and 1452 may be collectively referred to as 'modified RLC* (RLC*)'.

One IAB node may be connected to DUs of one or more parent IAB nodes or IAB donors. In this case, the IAB node may include a plurality of DUs, but each DU of the IAB node may have an F1-C connection 1440 or 1442 with a single IAB donor CU-CP. Even if the IAB node has a plurality of UP connections, the IAB node may operate based on a single CP connection (i.e. the IAB node may operate by being connected to a single IAB donor), so that no confusion occurs in operations of the IAB node.

**EP 4 597 914 A1**

The IAB donor 1405 may include the DU for supporting MTs of terminals and child IAB nodes. The IAB donor 1405 may include the CU 1407 for DUs 1409, 1414, and 1419 of itself and all child IAB nodes. It may be assumed that a certain IAB donor has a single IAB donor, and an IAB donor that manages the corresponding IAB donor may be changed by a topology adaptation function. A DU of an IAB node may be connected to a CU of the corresponding IAB donor through an F1 interface or a modified F1 interface (modified F1, F1*) (e.g. 1440, 1442). F1*-user plane (U) may be operated on the RLC channels 1450 and 1452 between the corresponding IAB-MTs 1417 and 1412 and the DUs 1414 and 1409 of the parent IAB node or donor.

Hereinafter, for convenience of description, in the present disclosure, higher layer parameters or higher layer configurations may not be limited to the above-described L2 and L3 signaling, and may collectively include information transmitted or configured through the F1 interfaces 1440 and 1442, the NG interface 1430 for connecting the CU to the NGC, the X2 interface, and the like.

Although it may seem that the slot format configuration and indication methods described with reference to FIGS. 11 and 12 are limited to terminals performing communication with the base station, this is only an example for convenience of description, and exemplary embodiments of the present disclosure are not limited thereto. For example, the slot format configuration and indication methods described with reference to FIGS. 11 and 12 may be similarly applied to the case of IAB-DU and/or IAB-MT. For example, for each serving cell of the IAB-DU, the IAB-DU may receive a higher layer parameter IAB-DU-Resource-Configuration for IAB-DU resource configuration, thereby configuring a slot format in each slot set. On the other hand, the IAB-MT may receive configuration information of 'slot format' over one or more slots for each serving cell through a higher layer parameter tdd-UL-DL-ConfigurationDedicated-IAB-MT from at least one upper node of the IAB-MT. When the IAB-MT receives the higher layer parameter tdd-UL-DL-ConfigurationDedicated-IAB-MT, the received higher layer parameter may substitute the higher layer parameter tdd-UL-DL-ConfigurationDedicated in the above-described slot format configuration and indication method. Specifically, the higher layer parameter tdd-UL-DL-ConfigurationDedicated-IAB-MT may include the following information.

☐ IAB-MT slot configuration set (i.e. slotSpecificConfigurationsToAddModList-IAB-MT): A set of slot configurations
☐ Slot index (i.e. slotIndex): Index of a slot included in the set of slot configurations
☐ IAB-MT symbol directions (i.e. symbols-IAB-MT): The direction of the slot indicated by the slot index.
☐ If the IAB-MT symbol directions are all downlink (symbols-IAB-MT= allDownlink), all symbols within the corresponding slot are downlink symbols.
☐ If the IAB-MT symbol directions are all uplink (symbols-IAB-MT = allUplink), all symbols within the corresponding slot are uplink symbols.
☐ If the IAB-MT symbol directions are explicit (symbols-IAB-MT = explicit), the nrofDownlinkSymbols may indicate the number of downlink symbols located in the first part of the slot, and the nrofUplinkSymbols may indicate the number of uplink symbols located in the last part of the corresponding slot. If the nrofDownlinkSymbols or the nrofUplinkSymbols is omitted, the corresponding parameter may be regarded as indicating a value of 0. The remaining symbols within the slot become flexible symbols.
☐ If the IAB-MT symbol directions are IAB-MT explicit (symbols-IAB-MT = explicit-IAB-MT), the nrofDownlinkSymbols may indicate the number of downlink symbols located in the first part of the slot, and the nrofUplinkSymbols may indicate the number of uplink symbols located in the last part of the corresponding slot. If the nrofDownlinkSymbols or the nrofUplinkSymbols is omitted, the corresponding parameter may be regarded as indicating a value of 0. The remaining symbols within the slot become flexible symbols.

Similarly to the above-mentioned normal terminal, the IAB-MT may also receive the DCI format 2_0, and through this, may receive configuration information of a slot format from the base station of the IAB-DU of the parent node. In the case of DCI format 2_0 received by the IAB-MT, candidate values of each SFI field may not be limited to the values shown in Table 14. For example, the candidate values of each SFI field of the DCI format 2_0 received by the IAB-MT may further include values shown in Table 21.

[Table 21]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 56 | U | U | U | U | U | U | U | U | U | U | U | U | U | F |
| 57 | U | U | U | U | U | U | U | U | U | U | U | U | F | F |
| 58 | U | U | U | U | U | U | U | U | U | U | U | F | F | F |
| 59 | U | U | U | U | U | U | U | U | U | U | F | F | F | F |

(continued)

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 60 | U | U | U | U | U | U | U | U | U | F | F | F | F | F |
| 61 | U | U | U | U | U | U | U | U | F | F | F | F | F | F |
| 62 | U | U | U | U | U | U | U | F | F | F | F | F | F | F |
| 63 | U | U | U | U | U | U | F | F | F | F | F | F | F | F |
| 64 | U | U | U | U | U | F | F | F | F | F | F | F | F | F |
| 65 | U | U | U | U | F | F | F | F | F | F | F | F | F | F |
| 66 | U | U | U | F | F | F | F | F | F | F | F | F | F | F |
| 67 | U | U | F | F | F | F | F | F | F | F | F | F | F | F |
| 68 | U | F | F | F | F | F | F | F | F | F | F | F | F | F |
| 69 | U | F | F | F | F | F | F | F | F | F | F | F | F | D |
| 70 | U | U | F | F | F | F | F | F | F | F | F | F | F | D |
| 71 | U | U | U | F | F | F | F | F | F | F | F | F | F | D |
| 72 | U | F | F | F | F | F | F | F | F | F | F | F | D | D |
| 73 | U | U | F | F | F | F | F | F | F | F | F | F | D | D |
| 74 | U | U | U | F | F | F | F | F | F | F | F | F | D | D |
| 75 | U | F | F | F | F | F | F | F | F | F | F | D | D | D |
| 76 | U | U | F | F | F | F | F | F | F | F | F | D | D | D |
| 77 | U | U | U | F | F | F | F | F | F | F | F | D | D | D |
| 78 | U | U | U | U | U | U | U | U | U | U | U | U | F | D |
| 79 | U | U | U | U | U | U | U | U | U | U | U | F | F | D |
| 80 | U | U | U | U | U | U | U | U | U | U | F | F | F | D |
| 81 | U | U | U | U | U | U | U | U | U | U | U | F | D | D |
| 82 | U | U | U | U | U | U | U | U | U | U | F | F | D | D |
| 83 | U | U | U | U | U | U | U | U | U | F | F | F | D | D |
| 84 | U | F | D | D | D | D | D | D | D | D | D | D | D | D |
| 85 | U | U | F | D | D | D | D | D | D | D | D | D | D | D |
| 86 | U | U | U | F | D | D | D | D | D | D | D | D | D | D |
| 87 | U | F | F | D | D | D | D | D | D | D | D | D | D | D |
| 88 | U | U | F | F | D | D | D | D | D | D | D | D | D | D |
| 89 | U | U | U | F | F | D | D | D | D | D | D | D | D | D |
| 90 | U | F | F | F | D | D | D | D | D | D | D | D | D | D |
| 91 | U | U | F | F | F | D | D | D | D | D | D | D | D | D |
| 92 | U | U | U | F | F | F | D | D | D | D | D | D | D | D |
| 93 | U | U | U | U | U | U | U | U | U | F | F | F | F | D |
| 94 | U | U | U | U | U | U | F | F | F | F | F | F | D | D |
| 95 | U | U | U | U | U | U | F | F | D | D | D | D | D | D |
| 96 | U | U | U | U | U | U | U | D | D | D | D | D | D | D |

The IAB-MT may receive information on symbols not to be used by the IAB-MT for a certain serving cell through a

EP 4 597 914 A1

higher layer parameter (e.g. Provided Guard Symbols MAC CE). The IAB-MT may perform a transition (i.e. operation change) between the IAB-MT and the IAB-DU of the IAB node during a time period including the symbols not used by the IAB-MT. The base station may signal a numerology for the symbols to the terminal through a higher layer parameter (e.g. Provided Guard Symbols MAC CE). In a cell of a certain IAB-DU, a symbol within a slot may be configured as one of three types: 'hard', 'soft', and 'unavailable (or not-available)' (HSNA).

If a certain downlink, uplink, or flexible symbol is configured as the hard type, the cell of the IAB-DU may perform a signal transmit and/or reception operation in the corresponding symbol. This may mean that the fact that a certain symbol is configured as the hard type guarantees the reflection of the downlink, uplink, or flexible symbol configuration of the IAB-DU for the corresponding symbol.

Specifically, in an exemplary embodiment of the communication system, an F1 application protocol (F1AP) signaling as shown in Table 22 may be provided, and the upper IAB node (e.g. IAB donor, parent node, core network, etc.) may configure a DU resource type of the lower IAB node (e.g. IAB node, child node). Referring to Table 22, information of the DU resource type may include one HSNA slot configuration list consisting of one or more HSNA slot configurations. In this case, one HSNA slot configuration list may include HSNA slot configurations according to the maximum number of HSNAs (e.g. maxnoofHSNA). The n-th HSNA slot configuration included in the HSNA slot configuration list may include information on whether to apply the hard type, soft type, or not-available type to each of downlink symbols, uplink symbols, and flexible symbols of the n-th slot according to an application periodicity and a starting time of the HSNA slot configuration list.

[Table 22]

| IE/group name | range | IE type and reference | liminality |
|---|---|---|---|
| HSNA slot configuration list | 0..1 | | |
| >HSNA slot configuration item | 1 .. <maxnoofHSNASlo ts> | | |
| >>HSNA (Downlink) | | Enumerated (H, S, NA) | HSNA value for a downlink symbol of a slot |
| >>HSNA (Uplink) | | Enumerated (H, S, NA | HSNA value for a uplink symbol of a slot |
| >>HSNA (Flexible) | | Enumerated (H, S, NA | HSNA value for a flexible symbol of a slot |

If a certain downlink, uplink, or flexible symbol is configured as the soft type, the IAB-DU cell may perform a signal transmission and reception operation in the symbol when at least one of the following conditions is satisfied.

- Condition 1: The IAB-MT (co-located/associated with the IAB-DU) does not perform transmission or reception in the corresponding symbol.

- Condition 2: The IAB-MT (co-located/associated with the IAB-DU) can perform transmission or reception in the corresponding symbol, but the transmission/reception operation of the IAB-MT does not change due to the use of the symbol at the IAB-DU.

- Condition 3: The IAB-MT (co-located/associated with the IAB-DU) receives a DCI format 2_5 indicating the corresponding soft symbols as 'available'.

If a certain downlink, uplink, or flexible symbol is configured as the 'unavailable (or not-available (NA)) type', the IAB-DU (i.e. cell) may not perform transmission or reception in the symbol.

If the IAB-DU transmits one of a cell-specific, periodic, or semi-static signal or channel included in the following list in symbol(s) of a certain slot, the IAB-DU may perform a transmission/reception operation by assuming that the corresponding symbol(s) in the corresponding slot are configured as the hard type regardless of the configured resource type.

- SS/PBCH block, CSS set for a type0-PDCCH configured by a system information block 1 (SIB1) for PDCCH configuration (i.e. PDCCHs for a type0-PDCCH CSS sets configured by pdcchConfigSIB1), periodic CSI-RS, and/or the like

If the IAB-DU receives one of a cell-specific, periodic, or semi-static signal or channel included in the following list in symbol(s) of a certain slot, the IAB-DU may perform a transmission/reception operation by assuming that the corresponding symbol(s) in the corresponding slot are configured as the hard type regardless of the configured resource type.

☐ PRACH, scheduling request (SR)

- Following information may be configured for each cell in the set of cells of the IAB-DU.

☐ IAB-DU cell identifier (i.e. iabDuCellId-AI): Identifier of the IAB-DU cell
☐ AI position within DCI format (i.e. positionInDCI-AI): Position of an availability identifier (AI) index field within the DCI format 2_5.
☐ Availability combinations (i.e. availabilityCombinations): includes a list of the following two pieces of information for availability combinations.

- Resource availability (i.e. resourceAvailability): indicates resource availability for soft symbols included in one or more slots of the IAB-DU cell. The availability of soft symbols within one slot may be determined by referring to values in Table 17.
- Availability combination identifier (i.e. availabilityCombinationId): indicates a mapping between the resource availability (i.e. resourceAvailability) and the AI index field in the DCI format 2_5.

As described above, in the DCI format 2_5, one AI index field may indicate to the IAB-DU the availability of soft symbols included in each slot in a certain slot set. In this case, the slot set may start from the earliest slot among the slots of the IAB-DU overlapping in the time axis with the slot in which the IAB-MT detects the corresponding DCI format 2_5. In addition, the size of the slot set may be greater than or equal to a PDCCH monitoring periodicity of the DCI format 2_5 given from a higher layer parameter SearchSpace. The AI index field of the DCI format 2_5 may include $\max\{\lceil \log_2(maxAIindex)\rceil, 1\}$ bits and may be mapped to one of the values of Table 18. In this case, the maximum value of the AI index (i.e. maxAIindex) may mean a maximum value among the provided availability combination identifiers (i.e. availabilityCombinationId). Table 23 may indicate a mapping relationship between the resource availability value and the soft symbol type within one slot.

[Table 23]

| Value | Indication |
|---|---|
| 0 | No indication of availability for soft symbols |
| 1 | Indicates that downlink symbols are available. No indication of availability for uplink and flexible soft symbols |
| 2 | Indicates that uplink symbols are available. No indication of availability for downlink and flexible soft symbols |
| 3 | Indicates that downlink and uplink soft symbols are available. No indication of availability for flexible soft symbols |
| 4 | Indicates that flexible soft symbols are available. No indication of availability for downlink and uplink soft symbols |
| 5 | Indicates that downlink and flexible soft symbols are available. No indication of availability for uplink soft symbols |
| 6 | Indicates that uplink and flexible soft symbols are available. No indication of availability for downlink soft symbols |
| 7 | Indicates that downlink, uplink, and flexible soft symbols are available |

As described above, the upper IAB node including the IAB donor may indicate whether the lower IAB node uses the soft symbols based on the DCI format 2_5 and the contents of Table 16. On the other hand, such the function may be designed assuming that the IAB node operates in a half-duplex manner. In other words, such the function may be designed mainly assuming that the MT and DU of the IAB node operate in a time division multiplexing (TDM) scheme or time division duplexing (TDD) scheme. In an exemplary embodiment of the communication system, the F1AP signaling as shown in Table 24 may be used. Through this, the IAB node may report or deliver, to the upper IAB node (e.g. IAB donor or parent node), multiplexing information on a multiplexing capability between the IAB-DU of the IAB node (or, cell of a gNB-DU) and the IAB-MT of the IAB node (or, a cell configured in a co-located IAB-MT). Referring to Table 18, the multiplexing information may include one IAB-MT cell list composed of information on one or more IAB-MT cells. In this case, one IAB-MT cell list may include IAB-MT cell information according to the maximum number of serving cells (i.e. maxnoofServingCells). The n-th IAB-MT cell information included in the IAB-MT cell list may include a NR cell identity (ID) information of the corresponding cell and information on whether the following four types of multiplexing are supported. - DU_RX/MT_RX multiplexing: informs whether the IAB node supports simultaneous receptions in the DU and the MT

- DU_TX/MT_TX multiplexing: informs whether the IAB node supports simultaneous transmissions in the DU and the MT

- DU_TX/MT_RX multiplexing: informs whether the IAB node can simultaneously perform transmission in the DU and reception in the MT

- DU_RX/MT_TX multiplexing: informs whether the IAB node can simultaneously perform reception in the DU and transmission in the MT

[Table 24]

| IE/group name | range | IE type and reference | liminality |
|---|---|---|---|
| IAB-MT cell list | 1 | | |
| >IAB-MT cell item | 1.. \<maxnoofServingCells\> | | |
| >>NR cell identity | | Bit string (size: 36) | Identity of a serving cell configured for a co-located IAB-MT |
| >>DU_RX/MT_RX | | Enumerated (supported, not-supported) | Indicates whether the IAB node supports simultaneous receptions in DU and MT |
| >>DU_TX/MT_TX | | Enumerated (supported, not-supported) | Indicates whether the IAB node supports simultaneous transmissions in DU and MT |
| >>DU_TX/MT_RX | | Enumerated (supported, not-supported) | Indicates whether the IAB node simultaneously supports transmission in DU and reception in MT |
| >>DU_RX/MT_TX | | Enumerated (supported, not-supported) | Indicates whether the IAB node simultaneously supports reception in DU and transmission in MT |

According to Table 24, the IAB node may semi-statically report the DU/MT multiplexing capability or whether to support the DU/MT simultaneous operations for each cell, but whether the IAB node supports the DU/MT simultaneous operations may depend entirely on the corresponding IAB node itself. The upper IAB node may not support controlling the DU/MT simultaneous operations of the lower IAB node dynamically or semi-statically depending on a situation. FIG. 15 is a flowchart illustrating a first exemplary embodiment of a method for resource management of an IAB node in a communication system.

FIG. 15 shows a first exemplary embodiment of the method for resource management of an IAB node by taking the operation of the IAB node determining whether to use the IAB-DU resources as an example. However, this is only an example for convenience of description, and exemplary embodiments of the present disclosure are not limited thereto. For example, in the present disclosure, configurations described for 'whether to use IAB-DU resources' may be applied similarly or identically also to 'whether to use IAB node resources', 'whether to use IAB-MT resources', 'whether to use DU/MT simultaneous operation resources', and the like.

Referring to FIG. 15, in the order of determining whether to use the IAB-DU resources of the IAB node, the IAB node may identify whether the corresponding IAB-DU resources are available, and in order to determine whether to use the IAB-DU resources, may receive, from the upper IAB node, at least one of higher layer IAB-MT resource configuration information and higher layer IAB-DU resource configuration information (S1500). As an example, the higher layer IAB-MT resource configuration information may include slot configuration (i.e. downlink/uplink/flexible (DUF)) information and symbol configuration information for a cell (or cell group) of the IAB-MT. As another example, the higher layer IAB-DU resource configuration information may include slot configuration (i.e. downlink/uplink/flexible (DUF)) information and symbol configuration information for a cell (or cell group) of the IAB-DU.

The higher layer IAB-DU resource configuration information may include type (i.e. hard, soft, or not-available) information of the IAB-DU resources configured by the upper IAB node. The higher layer IAB-DU resource configuration information may include a part or all of cell-specific/semi-static downlink signals and channels such as SSB(s), type 0-PDCCH CSS set configured by a SIB1 for PDCCH configuration, CSI-RS, etc. configured in a cell (or cell group) configured to the IAB-DU. The higher layer IAB-DU resource configuration information may include a part or all of cell-specific/semi-static downlink signals and channels such as PRACH, SR, etc. configured in a cell (or cell group) configured to the IAB-DU.

In addition to the above-described higher layer configuration, the IAB node may receive at least one of a physical layer (L1 signaling) IAB-MT resource indicator and a physical layer IAB-DU resource indicator from the upper IAB node (S1510). As an example, the physical layer IAB-MT resource indicator may be a DCI format 2_0 including a slot format indicator for a cell (or a set of cells) which is configured to the IAB-MT. As another example, the physical layer IAB-DU resource indicator may be a DCI format 2_5 including a soft resource AI of the IAB-DU.

Finally, the IAB node may finally determine whether to use the IAB-DU resources based on the higher layer signaling (S1500) and the L1 signaling (S1510) (S1520).

Meanwhile, in general, it may not be possible to force all terminals to implement the same feature. The UE capability report may enable an expensive terminal to implement a large amount of features with high performance, and may enable a low-cost terminal to implement a small amount of features with low performance. The UE capability report may make it possible to secure the degree of freedom in terminal implementation for various situations, and when the capability information is reported to the network, the base station may configure each function within the limits supported by each terminal. Certain functions may be promised to be mandatory for all terminals to implement, and in this case, it may be possible to omit the UE capability report for the mandatory functions.

It may be possible for the terminal to perform UE capability reporting of different values for one function for each frequency band or for each duplex scheme. For example, the terminal may support a specific function for a frequency range 1 (FR1), which means a band below 6 GHz, but may report to the base station that the terminal does not support a specific function for a frequency range 2 (FR2), which means a band above 6 GHz. As another example, the terminal may report to the base station that a specific function is supported in the time division duplexing (TDD) scheme but not supported in the frequency division duplexing (FDD) scheme.

When the terminal performs the UE capability reporting, the base station should follow (should not violate) the content of the UE capability report when perform configuration, indication, or scheduling on the terminal. If the base station indicates, to the terminal, configuration, indication or scheduling contrary to the UE capability report, the terminal may ignore it.

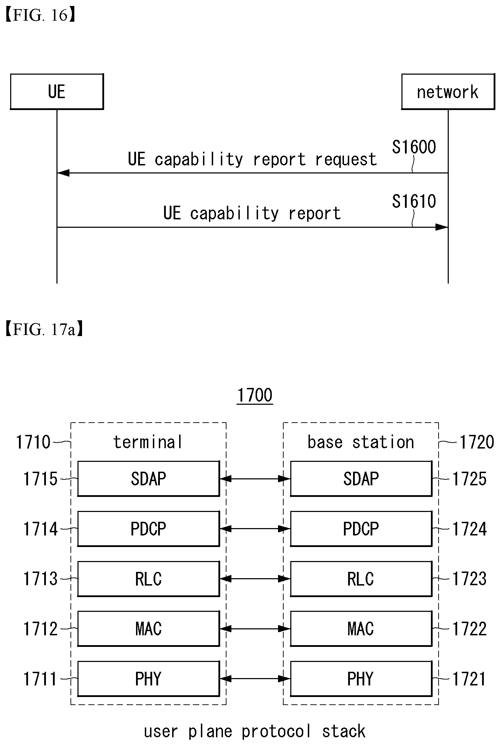

FIG. 16 is a sequence chart illustrating an exemplary embodiment of a UE capability reporting procedure in a communication system.

Referring to FIG. 16, in the UE capability reporting procedure, the base station may transmit a UE capability report request signal to the terminal through a higher layer parameter UECapabilityEnquiry when the terminal is in RRC connected mode (i.e. RRC_CONNECTED state) (S1600). In this case, the network may refer to only the UE capability report after access stratum (AS) security activation, and may not retransmit or report the UE capability report before the AS security activation to the core network (CN). Upon receiving the UE capability report request signal, the terminal may compile UE capability information according to a specific procedure, and report it to the base station through a UE capability information signal (e.g. UECapabilityInformmation) (S1610).

The specific procedure for compiling the UE capability information signal may include a procedure of generating at least one of a list (i.e. supportedBandCombinationList) of band(s) or band combination(s) (BC(s)) supported by the terminal, feature set (FS) information related to feature sets supported by the terminal, or feature set combination (FSC) information related to feature set combinations supported by the terminal. For example, when the base station requests a UE capability report from the terminal in order to obtain information on band(s) or band combination(s) supported by the terminal, the terminal may report which band(s) it supports for each radio access technology (RAT). To this end, the base station may set a RAT-type in a UE RAT capability report request signal (e.g. UE-CapabilityRAT-Request), which is included in a UE RAT capability report request list signal (e.g. ue-CapabilityRAT-RequestList) that is a higher layer message, to one of 'nr', 'eutra-nr', 'eutra', and 'eutra-fdd'. This may mean that the base station may request a UE capability report for one or more RATs or RAT combinations from the terminal, and in this case, the terminal may respond to each request for a list of support bands for a plurality of RATs or RAT combinations. For example, if the RAT-type is set to 'nr', the terminal may include a list of bands or band combinations to which NR-DC can be applied in the UE capability report. As another example, if the RAT-type is set to 'eutra-nr', the terminal may include a list of bands or band combinations applicable to multi-RAT DC (MR-DC) such as EN-DC, NGEN-DC, NE-DC, or the like in the UE capability report. In addition, when the base station requests a UE capability report, the base station may provide, to the terminal, a list of bands for which the terminal determines whether support is provided, through a higher layer parameter frequencyBandListFilter. For the bands included in the higher layer parameter frequencyBandListFilter, the terminal may determine a candidate band combination by considering 'predetermined RAT types supported for each band', 'information on RAT-types requested by the base station', etc., and may include the candidate band combination in the UE capability report.

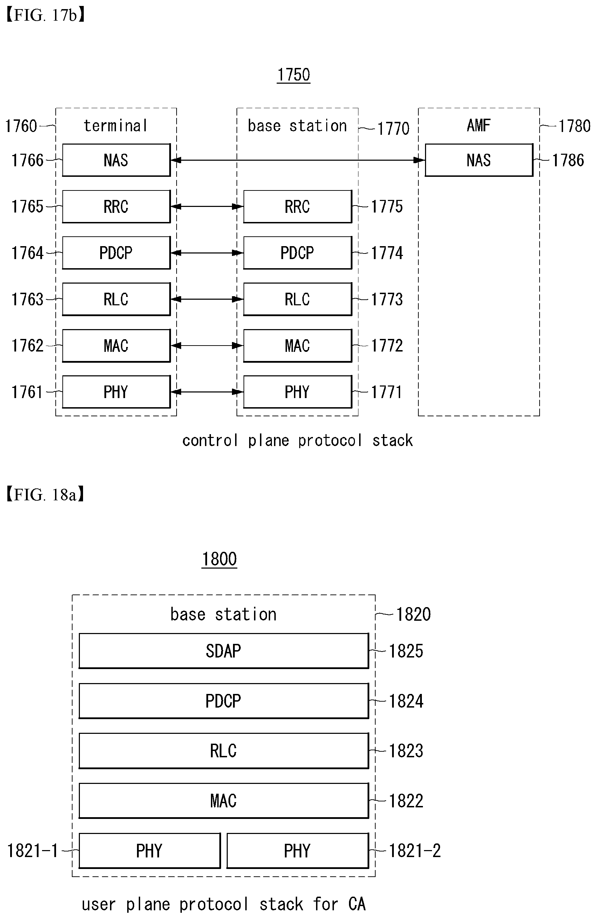

FIGS. 17A and 17B are conceptual diagrams for describing a first exemplary embodiment of a user plane protocol stack structure and a control plane protocol stack structure in a communication system.

Referring to FIGS. 17A and 17B, a radio interface protocol stack or radio interface protocol stack structures 1700 and 1750 may be defined in a radio connection section between communication nodes. For example, the radio interface protocol stack may be divided into a physical layer, a data link layer, a network layer, and the like, which are vertically configured.

The radio interface protocol stack may be divided into the user plane protocol stack 1700 and the control plane protocol stack 1750. Here, the control plane may be a plane for transmitting a control signal. The control signal may be referred to as a signaling signal. The user plane may be a plane for transmitting user data.

Referring to FIG. 17A, the communication system may include a terminal 1710 and a base station 1720. The terminal 1710 may be referred to as a user equipment (UE). The base station 1720 may correspond to an eNB, a gNB, or the like. The terminal 1710 and the base station 1720 may perform mutual data signal transmission/reception based on the user plane protocol stack structure 1700 shown in FIG. 17A.

In the user plane air interface protocol stack structure 1700 of the communication system, the terminal 1710 and the base station 1720 may include PHY layers 1711 and 1721 included in L1, MAC layers 1712 and 1722, RLC layers 1713 and 1723, and packet data convergence protocol (PDCP) layers 1714 and 1724 included in L2, service data adaptation protocol (SDAP) layers 1715 and 1725 included in L3, and the like.

Referring to FIG. 17B, the communication system may include a terminal 1760 and a base station 1770. The terminal 1760 and the base station 1770 may perform mutual control signal transmission/reception based on the control plane protocol stack structure 1750 shown in FIG. 17B.

In the control plane protocol stack structure 1750 of the communication system, the terminal 1760 and the base station 1770 may include PHY layers 1761 and 1771 included in L1, MAC layers 1762 and 1772, RLC layers 1763 and 1773, and PDCP layers 1764 and 1774 included in L2, and RRC layers 1765 and 1775 included in L3, and the like.

The communication system may further include an Access and Management Mobility Function (AMF) 1780. In the control plane protocol stack structure 1750, the terminal 1760 and the AMF 1780 may include non-access stratum (NAS) layers 1766 and 1786. The base station 1770 may not include a NAS layer. In other words, in the control plane protocol stack structure 1750, the NAS layer of the base station 1770 may be transparent.

The 5G communication system can provide techniques for improving wireless coverage and/or reducing network configuration costs. For example, the 5G communication system can provide integrated access and backhaul (IAB) technology that provides wireless backhaul/fronthaul that can coexist with a radio access network and repeater technology that covers shadow areas at low cost.

In the 5G NR communication system, it may be possible to support flexible and dense wireless backhaul links for each cell without wired network support through the IAB features. Additionally, the protocol structures of FIGS. 17A and 17B can be appropriately changed and applied depending on a situation when applying carrier aggregation (CA) or dual connectivity (DC).

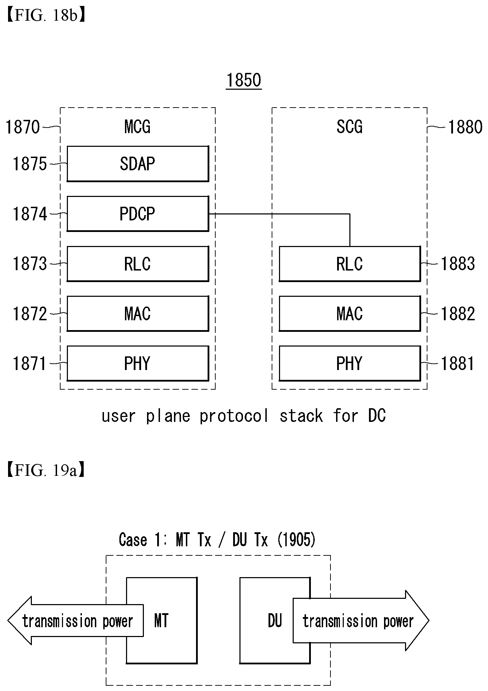

FIG. 18A is a conceptual diagram for describing a user plane protocol structure for carrier aggregation (CA) in a base station of a communication system, and FIG. 18B is a conceptual diagram for describing a user plane protocol structure for dual connectivity (DC) in a base station of a communication system.

Referring to FIGS. 18A and 18B, a radio interface protocol stacks or radio interface protocol stack structures 1800 and 1850 may be defined in a radio connection section between communication nodes. For example, in the radio connection section between communication nodes, the user plane protocol stack structure 1800 for carrier aggregation (CA) may be defined. Alternatively, in the radio connection section between communication nodes, the user plane protocol stack structure 1850 for dual connectivity (DC) may be defined.

Referring to FIG. 18A, the communication system may include a base station 1820. The base station 1820 may correspond to an eNB, a gNB, or the like. The base station 1800 applying CA may operate two or more PHY layers 1821-1 and 1821-2 to perform transmission and reception in two or more component carriers (CCs). In this case, each of the PHY layers 1821-1 and 1821-2 may be connected to one MAC layer 1822 through an independent hybrid automatic repeat request (HARQ) entity for each CC (or each serving cell).

The connection to higher layers such as RLC 1823, PDCP 1824, and SDAP 1825 may be based on the descriptions of FIGS. 17A and 17B. This is because CA assumes support for multiple carriers at a single transmission point, and when operating CA at multiple transmission points, the base station 1800 may require a backhaul with a latency of 0 ms between the transmission points for a single MAC entity.

Referring to FIG. 18B, the communication system may include a master cell group (MCG 1870) and a secondary cell group (SCG) 1880. A cell or base station of the MCG 1870 and SCG 1880 may configure a DC with a lower node such as a terminal based on the user plane protocol stack structure 1850 for DC. In the user plane radio interface protocol stack structure 1850 for DC, the cell or base station of the MCG 1870 may include a PHY layer 1871 included in L1, a MAC layer 1872, RLC layer 1873, and PDCP layer 1874 included in L2, a SDAP layer 1875 included in L3, and the like. Meanwhile, the cell or base station of the SCG 1880 may include a PHY layer 1881 included in L1, a MAC layer 1882 and RLC layer 1883 included in L2, and the like.

The base station applying DC may use two or more transmission nodes 1870 and 1880 to perform transmission and reception in two or more CCs. In this case, the transmission nodes may include a first node (i.e. master node, master gNB, MgNB) 1870 leading connection with 5GC and the remaining node(s) (i.e. second node(s), secondary node(s), secondary gNB(s), MgNB) 1880 supporting auxiliary connection with 5GC.

The first node 1870 and the remaining node 1880 may also be referred to as MeNB or SeNB when applying multi-RAT DC such as LTE-NR or NR-LTE. In the case of DC, since a backhaul structure with a latency greater than 0 (e.g. 3ms, etc.) is assumed, unlike CA, RLC layers 1873 and 1883, MAC layers 1872 and 1882, and PHY layers 1871 and 1881, which are separated between the MgNB 1870 and the SgNB 1880, may be supported.

For example, this may mean that in a PDCP layer 1874, separate data for the MeNB 1870 and SeNB 1880 may be scheduled independently of each other. The structure in which the PDCP or higher layers are shared operating DC (i.e. using the PDCP or higher layers as a single entity when operating DC) in the above description is merely an example of DC operations, and in actual application, DC and CA are not mutually exclusive, and it is possible to apply them simultaneously.

As another example, the MgNB 1870 may configure a cell group consisting of one or more CCs, and the cell group may be referred to as a master cell group (MCG). Similarly, the SgNB 1880 may configure a cell group consisting of one or more CCs, and the cell group may be referred to as a secondary cell group (SCG). In this case, multiple CCs within one cell group (i.e. within the MCG or SCG) may be operated by the CA protocol structure described above.

An exemplary embodiment of the communication system supporting 5G wireless communication may support the following various DC types.

☐ EUTRA-NR DC (EN-DC): DC in which the MCG is configured based on 4G Evolved Universal Terrestrial Radio Access (E-UTRA), and the SCG is configured based on the 5G NR. Here, a control plane of the MCG may be configured through a 4G core (i.e. Evolved Packet Core (EPC)).
☐ Next Generation-RAN E-UTRA-NR DC (NGEN-DC): DC in which the MCG is configured based on the E-UTRA and the SCG is configured based on the NR. In this case, a control plane of the MCG may be configured through a 5G core (i.e. Next Generation Core (NGC)).
☐ NR-EUTRA DC (NE-DC): DC in which the MCG is configured based on the NR and the SCG is configured based on the E-UTRA
☐ NR DC: DC in which both the MCG and the SCG are configured based on the NR

The base station may perform DC-related configuration for the terminal (i.e. UE, MT, etc.) using one or more higher layer parameters. For example, higher layer parameters used by the base station for the DC-related configuration may include at least some of CellGroupConfig, SpCellConfig, ReconfigurationWithSync, and SCellConfig. The higher layer parameter CellGroupConfig may be the same as or similar to that shown in Table 25.

[Table 25]

```
CellGroupConfig ::=                    SEQUENCE {
        cellGroupId        // cell group ID. 0 indicates MCG, and a value of 1 or more indicates SCG
        rlc-BearerToAddModList   //configure a relation list of MAC logical channel, RLC entity, and
radio bearer
        rlc-BearerToReleaseList     //release a relation list of MAC logical channel, RLC entity, and
radio bearer
        mac-CellGroupConfig       //MAC parameters applicable to the corresponding cell group
        physicalCellGroupConfig
            //configuration of common PHY layer parameters such as HARQ, power control, etc. within
a cell group
        spCellConfig                //configure a SpCell of a cell group by referring to SpCellConfig
        sCellToAddModList        //configure a list of SCells included in a cell group by referring to
SCellConfig
        sCellToReleaseList          //exclude the Scell from a cell group by referring to SCellIndex

        ...,
        [[
        reportUplinkTxDirectCurrent      //configure whether a UE reports a uplink DC position
        ]],
        [[
```

```
        bap-Address-r16     //configure a backhal adaptation protocol (BAP) address of a parent node
in a cell group
        bh-RLC-ChannelToAddModList-r16       //configure backhaul RLC entities and a list of
corresponding MAC logical channels
        bh-RLC-ChannelToReleaseList-r16          //release backhaul RLC entities and a list of
corresponding MAC logical channels
        f1c-TransferPath-r16    //configure a F1-C transfer path to be used by EN-DC IAB-MT
        simultaneousTCI-UpdateList1-r16    //a list 1 of serving cells for which TCI updata can be
simultaneously performed through a single MAC CE (corresponding to coresetPoolIndex =0, i.e.
corresponding to serving cells of a first TRP for which TCI update can be simultaneouly performed)
        simultaneousTCI-UpdateList2-r16       //a list 2 of serving cells for which TCI updata can be
simultaneously performed through a single MAC CE (corresponding to coresetPoolIndex =0, i.e.
corresponding to serving cells of a first TRP for which TCI update can be simultaneouly performed)
        simultaneousSpatial-UpdatedList1-r16 //a list 1 of serving cells for which spatial relation update
can be simultaneously performed through a single MAC CE (corresponding to coresetPoolIndex =0,
i.e. corresponding to serving cells of a first TRP for which spatial relation update can be
simultaneouly performed)
        simultaneousSpatial-UpdatedList2-r16 //a list 2 of serving cells for which spatial relation update
can be simultaneously performed through a single MAC CE (corresponding to coresetPoolIndex =0,
i.e. corresponding to serving cells of a first TRP for which spatial relation update can be
simultaneouly performed)
        uplinkTxSwitchingOption-r16      //configure a UL TX switching option for inter-band UL CA
or (NG)EN-DC
        uplinkTxSwitchingPowerBoosting-r16 //configure whether a UE can perform 3dB power
boosting for a second carrier when applying inter-band UL CA
        ]]
}
```

Meanwhile, the higher layer parameter SpCellConfig may be the same as or similar to that shown in Table 26.

[Table 26]

```
SpCellConfig ::=                              SEQUENCE {
        servCellIndex      // servince cell ID of PSCell. PCell of MCG uses ID=0
        reconfigurationWithSync   //configuration values used for synchronous reconfiguration of a
target SpCell
        rlf-TimersAndConstants      //configuration of a timer and a constant value for detecting and
triggerig cell-level radio link failure
        rlmInSyncOutOfSyncThreshold
        spCellConfigDedicated        //ServingCellConfig of SpCell
        ...
}
```

Meanwhile, the higher layer parameter ReconfigurationWithSync may be the same as or similar to that shown in Table 27.

[Table 27]

```
ReconfigurationWithSync ::=              SEQUENCE {
        spCellConfigCommon        // ServingCellConfigCommon of SpCell
        newUE-Identity            // New RNTI value configuration
```

```
        t304                          // configure a t304 timer value
        rach-ConfigDedicated                    CHOICE {
                        // RACH configuration used for Reconfiguration with sync
                uplink
                supplementaryUplink
        }
OPTIONAL,      -- Need N
        ...,
        [[
        smtc        //configure a periodicity, offset, and duration of SSB to be used for change of PSCell
or PCell, or addition of PSCell
        ]],
        [[
        daps-UplinkPowerConfig-r16
        ]]
}
```

Meanwhile, the higher layer parameter SCellConfig may be the same as or similar to that shown in Table 28.

[Table 28]

```
SCellConfig ::=                      SEQUENCE {
        sCellIndex                    // SCell index
        sCellConfigCommon             // ServingCellConfigCommon of SCell
        sCellConfigDedicated          // ServingCellConfig of SCell
        ...,
        [[
        smtc        //configure a periodicity, offset, and duration of SSB to be used for addition of SCell
        ]],
        [[
        sCellState-r16                    // configure whether to activate SCell
        secondaryDRX-GroupConfig-r16
        ]]
}
```

**EP 4 597 914 A1**

Meanwhile, cell-specific configurations of a serving cell configured as a SpCell or SCell in the MCG or SCG may be performed with reference to a higher layer parameter ServingCellConfigCommon. The higher layer parameter ServingCellConfigCommon may be the same as or similar to that shown in Table 29.

[Table 29]

```
ServingCellConfigCommon ::=              SEQUENCE {
       physCellId              // physical cell ID of the corresponding serving cell
       downlinkConfigCommon        // cell-specific downlink configuration of the corresponding
serving cell
       uplinkConfigCommon          // cell-specific uplink configuration of the corresponding serving
cell
```

```
       supplementaryUplinkConfig     // cell-specific SUL configuration of the corresponding serving
cell
       n-TimingAdvanceOffset          // timing advanced offset configuration
       ssb-PositionsInBurst                CHOICE {
           shortBitmap              // 4-bit SSB position configuration
           mediumBitmap             // 8-bit SSB position configuration
           longBitmap               // 64-bit SSB position configuration
       }
       ssb-periodicityServingCell       // SSB periodicity configuration
       dmrs-TypeA-Position          // first DMRS symbol configuration for Type A DMRS
       lte-CRS-ToMatchAround        // LTE CRS rate matching configuration
       rateMatchPatternToAddModList     // rate matching pattern list additional/new configuration
       rateMatchPatternToReleaseList     // rate matching pattern list release
       ssbSubcarrierSpacing              // subcarrier spacing configuration for SSB
       tdd-UL-DL-ConfigurationCommon   // cell-specific D/F/U configuration for a TDD cell (refer
to detail description on slot formats)
       ss-PBCH-BlockPower                  // SSB transmission power (-60dBm ~ 50dBm)
       ...,
       [[
       channelAccessMode-r16                CHOICE {
           dynamic
           semiStatic
       }
       discoveryBurstWindowLength-r16
       ssb-PositionQCL-r16              // configure QCL relation between SSB positions
       highSpeedConfig-r16
       ]]
}
```

Meanwhile, UE-specific configurations or cell-specific configurations of a serving cell configured as a SpCell or SCell in the MCG or SCG may be performed with reference to a higher layer parameter ServingCellConfig. The higher layer parameter ServingCellConfig may be the same as or similar to that shown in Table 30.

37

[Table 30]

```
ServingCellConfig ::=                    SEQUENCE {
        tdd-UL-DL-ConfigurationDedicated    // UE-specific D/F/U configuration for a TDD cell
(refer to detail description on slot formats)
        initialDownlinkBWP            // UE-specific configuration for an initial BWP (BWP #0)
        downlinkBWP-ToReleaseList     // a list of BWPs to be released
        downlinkBWP-ToAddModList      // a list of new BWPs or BWPs to be added
        firstActiveDownlinkBWP-Id
        bwp-InactivityTimer
        defaultDownlinkBWP-Id
        uplinkConfig
        supplementaryUplink
        pdcch-ServingCellConfig
        pdsch-ServingCellConfig
        csi-MeasConfig
        sCellDeactivationTimer
        crossCarrierSchedulingConfig
        tag-Id
```

```
        dummy
        pathlossReferenceLinking
        servingCellMO

        ...,
        [[
        lte-CRS-ToMatchAround
        rateMatchPatternToAddModList
        rateMatchPatternToReleaseList
        downlinkChannelBW-PerSCS-List
        ]],
        [[
        supplementaryUplinkRelease
        tdd-UL-DL-ConfigurationDedicated-IAB-MT-r16    // IAB-MT-specific D/F/U configuration
for a TDD cell (refer to detail description on slot formats)
        dormantBWP-Config-r16
        ca-SlotOffset-r16                    CHOICE {
            refSCS15kHz
            refSCS30KHz
            refSCS60KHz
            refSCS120KHz
        }
        channelAccessConfig-r16
        intraCellGuardBandsDL-List-r16
        intraCellGuardBandsUL-List-r16
        csi-RS-ValidationWith-DCI-r16
        lte-CRS-PatternList1-r16
        lte-CRS-PatternList2-r16
        crs-RateMatch-PerCORESETPoolIndex-r16
        enableTwoDefaultTCI-States-r16
        enableDefaultTCI-StatePerCoresetPoolIndex-r16
        enableBeamSwitchTiming-r16
        cbg-TxDiffTBsProcessingType1-r16
        cbg-TxDiffTBsProcessingType2-r16
        ]]
}
```

Meanwhile, cell-specific configuration of a serving cell configured a SpCell or SCell within the MCG or SCG may be performed with reference to the higher layer parameter ServingCellConfig. The higher layer parameter ServingCell-

Config may be the same as or similar to the following.

The DC or CA may be defined within a specific frequency resource. The DC or CA may operate within one band (e.g. 4G band or 5G band) including one or more CCs. The DC or CA operating within one band may be referred to as 'intra-band DC' or 'in-band CA'. On the other hand, the DC or CA may be applied across one or more bands or may be applied across a band combination configured as a combination of one or more bands. The DC or CA applied across one or more bands or a band combination may be referred to as 'inter-band DC' or 'inter-band CA'.

Meanwhile, the DC or CA may operate within one CC. The DC or CA operating within one CC may be referred to as 'intra-carrier DC' or 'intra-carrier CA'. On the other hand, the DC or CA may be applied across one or more CCs. The DC or CA applied across one or more CCs may be referred to as 'inter-carrier DC' or 'inter-carrier CA'.

Meanwhile, the DC or CA may operate within one frequency range (FR). The DC or CA applied within one FR may be referred to as 'intra-FR DC' or 'intra-FR CA'. On the other hand, the DC or CA may be applied across one or more FRs. For example, some cell groups or CCs may exist in the FR1, and the remaining cell groups or CCs may be configured to exist in the FR2. They may be applied across one or more FRs. The DC or CA may be referred to as 'inter-FR DC' or 'inter-FR CA'.

The intra-FR DC/CA, inter-FR DC/CA, intra-band DC/CA, inter-band DC/CA, intra-carrier DC/CA, inter-carrier DC/CA, or the like may be configured according to how far or close a frequency axis distance between one or more CCs or serving cells is. Hardware of a communication node such as a terminal or a base station may be implemented differently depending on which combination of the DCs/CAs should be supported. Hereinafter, exemplary embodiments of hardware implementation schemes of communication nodes will be described, taking an implementation scheme for supporting intra-band CA or inter-band CA as an example. However, this is merely an example for convenience of description, and exemplary embodiments of the present disclosure are not limited thereto.

In all exemplary embodiments of the present disclosure described below, for convenience of description, six types of DU/MT simultaneous operation types are defined as follows. Here, it may be assumed that a DU and an MT operating simultaneously are co-located (i.e. included in one IAB node or considered as one IAB node).

1) Case A (both DU/MT Tx): Case A may correspond to a case where an IAB-DU and an IAB-MT perform transmissions simultaneously at the same time (symbol). In other words, the IAB-DU may transmit a downlink signal, and the IAB-MT may transmit an uplink signal.

(2) Case B (both DU/MT Rx): Case B may correspond to a case where an IAB-DU and an IAB-MT perform receptions simultaneously at the same time (symbol). In other words, the IAB-DU may receive an uplink signal, and the IAB-MT may receive a downlink signal.

(3) Case C (DU Rx / MT Tx): Case C may correspond to a case where an IAB-DU performs reception and an IAB-MT performs transmission at the same time (symbol). In other words, the IAB-DU may receive an uplink signal, and the IAB-MT may transmit an uplink signal.

(4) Case D (DU Tx / MT Rx): Case D may correspond to a case where an IAB-DU performs transmission and an IAB-MT performs reception at the same time (symbol). In other words, the IAB-DU may transmit a downlink signal and the IAB-MT may receive a downlink signal.

(5) Case E (FDM of DU/MT is required): Case E may correspond to a case where a time-frequency resource of an IAB-DU and a time-frequency resource of an IAB-MT need to be frequency division multiplexed (FDMed) during simultaneous DU/MT operations. Case E may be required when interference control capability of the DU or MT is relatively limited.

(6) Case F (Case F: SDM of DU/MT is required): Case F may correspond to a case where a time-frequency resource of an IAB-DU and a time-frequency resource of an IAB-MT need to be time division multiplexed (TDMed) during simultaneous DU/MT operations. Case F may be supported if interference control capability of the DU or MT is relatively good.

An IAB node (or IAB-DU to IAB-MT) according to an exemplary embodiment of the present disclosure may support at least one of six types of Case A to Case F. In addition, an IAB node according to an exemplary embodiment of the present disclosure may report information related to the supported simultaneous operation or a combination of supported types to an upper IAB node (IAB donor, etc.) or core network (CU, etc.). The example in Table 16 described above may be an example therefor. In addition, the upper IAB node or CU may indicate which simultaneous operation type or combination of types to apply to which time-frequency resource for the IAB node reporting the supported simultaneous operation type or combination of supported types. This indication may be configured through higher layer signaling or may be dynamically indicated through L1/L2 signaling.

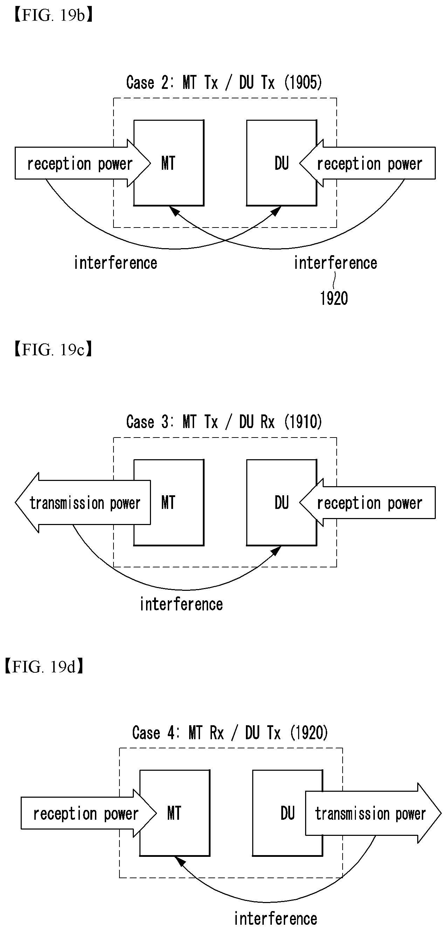

FIG. 19A is a conceptual diagram for describing a case where both an MT and a DU of an IAB node are in the transmission mode, FIG. 19B is a conceptual diagram for describing a case where both an MT and a DU of an IAB node are in the reception mode, FIG. 19C is a conceptual diagram for describing a case where an MT of an IAB node is in the transmission mode and a DU thereof is in the reception mode, and FIG. 19D is a conceptual diagram for describing a case where an MT of an IAB node is the reception mode and a DU thereof is in the transmission mode.

Before referring to FIGS. 19A to 19D, the IAB node may support at least some of the six operation modes described above. In the examples of FIGS. 19A to 19D, it is assumed that the IAB node supports four cases: Case A 1900, Case B 1905, Case C 1910, and Case D 1920 among the six cases exemplified above.

First, referring to Case A 1900 in FIG. 19A, both MT and DU are in the transmission mode. Here, the MT may refer to an IAB-MT, and the DU may refer to an IAB-DU. Therefore, in FIG. 19A, the DU may transmit a downlink signal, and the MT may transmit an uplink signal. As illustrated in FIG. 19A, since the DU transmits a downlink signal, the DU may perform downlink transmission with a higher transmission power than the MT that transmits an uplink signal. In FIG. 19A, a strength of the transmission power is indicated by a thickness of arrow. Therefore, a case that the DU has a higher transmission power is shown.

Referring to Case B 1905 in FIG. 19B, both MT and DU are in the reception mode. Here, the MT may refer to an IAB-MT, and the DU may refer to an IAB-DU. Therefore, in FIG. 19B, the DU may receive an uplink signal, and the MT may receive a downlink signal. A strength of a reception power is indicated by a thickness of arrow also in FIG. 19B, but a difference in strengths of received signals may not be large, or the strengths of received signals may be the same.

Referring to Case C 1910 in FIG. 19C, an MT is in the transmission mode and a DU is in the reception mode. Here, the MT may refer to an IAB-MT, and the DU may refer to an IAB-DU. Therefore, in FIG. 19C, the DU may receive an uplink signal, and the MT may transmit an uplink signal. A strength of a reception power is indicated by a thickness of arrow. As illustrated in FIG. 19C, a case where a transmission power of the MT is greater than a reception power of the DU is shown.

Referring to Case D 1910 in FIG. 19D, an MT is in the reception mode and a DU is in the transmission mode. Here, the MT may refer to an IAB-MT, and the DU may refer to an IAB-DU. Therefore, in FIG. 19D, the DU may transmit a downlink signal, and the MT may receive a downlink signal. A strength of a reception power is indicated by a thickness of arrow as in FIG. 19D. As illustrated in FIG. 19D, a case where a transmission power of the DU is greater than a reception power of the MT is shown.

In the situations shown in FIGS. 19A to 19D, the IAB node may need to measure and report uplink-downlink interference (i.e. cross link interference (CLI)) according to DU/MT transmission and reception operations. For example, when the IAB node operates according to Case A 1900, a transmission operation of the MT (i.e. uplink transmission because a signal is transmitted from the MT to the DU) and a transmission operation of the DU (i.e. downlink transmission because a signal is transmitted from the DU to the MT or UE) may be performed simultaneously. Therefore, a CLI may occur due to the simultaneous operations. In this case, since both the DU and MT are performing transmissions, CLI measurement may be performed by one of the DU, MT, or UE located in different locations.

On the other hand, when the IAB node operates according to Case B 1905, since a reception operation of the MT (i.e. downlink reception because a signal is transmitted from the DU to the MT) and a reception operation of the DU (i.e. uplink reception because a signal is transmitted from the UE to the DU) are performed simultaneously, a CLI 1920 may occur. In this case, measurement and reporting of the CLI 1920, which is an interference caused by an uplink signal received at the DU to the MT receiving a downlink signal, need to be supported by technical specifications.

The 5G NR system may be likely to experience UL-DL mutual interference (CLI) due to dynamic TDD, full duplex, and IAB DU/MT simultaneous operations. Therefore, to prevent performance degradation due to the CLI, CLI measurement and reporting functions need to be supported.

The Rel-16 NR of 5G NR standards two CLI measurement methods as follows.

1) CLI-received signal strength indicator (CLI-RSSI) measurement
2) SRS-reference signal received power (SRS-RSRP) measurement

Layer 3 (L3) filtering may be applied to both of the above two methods, and measurement and reporting may be performed based on time/frequency resources according to detailed configuration parameters in Table 25 and Table 26 below. In addition, reporting of measurement values supports event triggered reporting and periodic reporting, and measurement and reporting may be applied when operating NR multi-cells such as CA/DC.

Table 31 is an example of configuring parameters related to SRS-RSRP measurement.

[Table 31]

```
MeasObjectCLI-r16 ::=                    SEQUENCE {
     cli-ResourceConfig-r16                  CLI-ResourceConfig-r16,
     ...
}

CLI-ResourceConfig-r16 ::=              SEQUENCE {
     srs-ResourceConfig-r16                 SetupRelease { SRS-ResourceListConfigCLI-r16 }
     rssi-ResourceConfig-r16                SetupRelease { RSSI-ResourceListConfigCLI-r16 }
}

SRS-ResourceListConfigCLI-r16 ::=   SEQUENCE (SIZE (1.. maxNrofCLI-SRS-Resources-r16))
OF SRS-ResourceConfigCLI-r16

RSSI-ResourceListConfigCLI-r16  ::=   SEQUENCE (SIZE (1..  maxNrofCLI-RSSI-Resources-
r16)) OF RSSI-ResourceConfigCLI-r16

SRS-ResourceConfigCLI-r16 ::=          SEQUENCE {
     srs-Resource-r16                        SRS-Resource,
     srs-SCS-r16                             SubcarrierSpacing,
     refServCellIndex-r16                    ServCellIndex
     refBWP-r16                              BWP-Id,
```

```
     ...
}
```

Table 32 is an example of configuring parameters related to CLI-RSSI measurement.

[Table 32]

```
RSSI-ResourceConfigCLI-r16 ::=          SEQUENCE {
    rssi-ResourceId-r16                     RSSI-ResourceId-r16,
    rssi-SCS-r16                            SubcarrierSpacing,
    startPRB-r16                            INTEGER (0..2169),
    nrofPRBs-r16                                                          INTEGER
(4..maxNrofPhysicalResourceBlocksPlus1),
    startPosition-r16                       INTEGER (0..13),
    nrofSymbols-r16                         INTEGER (1..14),
    rssi-PeriodicityAndOffset-r16           RSSI-PeriodicityAndOffset-r16,
    refServCellIndex-r16                    ServCellIndex
    ...
}

RSSI-ResourceId-r16 ::=                 INTEGER (0.. maxNrofCLI-RSSI-Resources-r16-1)

RSSI-PeriodicityAndOffset-r16 ::=    CHOICE {
    sl10                                    INTEGER(0..9),
    sl20                                    INTEGER(0..19),
    sl40                                    INTEGER(0..39),
    sl80                                    INTEGER(0..79),
    sl160                                   INTEGER(0..159),
    sl320                                   INTEGER(0..319),
    s1640                                   INTEGER(0..639),
    ...
}
```

The 3GPPP TS38.473 provides F1 application protocol (F1AP) signaling as shown in Table 33 below. Through the F1AP signaling as shown in Table 33, the gNB-DU may report/deliver information to be considered in CLI mitigation to the gNB-CU (or, gNB-CU to gNB-DU, or gNB-DU to another gNB-DU). Here, the CLI mitigation may include both CLI measurement/reporting and additional implementation accordingly.

Here, the information to be considered in CLI mitigation may be delivered by 'intended TDD DL-UL configuration', and the 'intended TDD DL-UL configuration' may include information such as SCS, CP, and TDD UL-DL slot configuration.

[Table 33]

| IE/group name | range | IE type and reference | Description |
|---|---|---|---|
| NR SCS | | Enumerated (scs15, scs30, scs60, scs120, ...) | Values such as scs15, scs30, scs60, and scs120 correspond to subcarrier spacings. |
| NR cyclic prefix | | Enumerated (normal, extended, ...) | Type of cyclic prefix determining the number of symbols within one slot |
| NR DL-UL transmission periodicity | | Enumerated (ms0p5, ms0p625, ms1, ms1p25, ms2, ms2p5, ms3, ms4, ms5, ms10, ms20, ms40, ms60, ms80, ms100, ms120, ms140, ms160, ...) | Periodicity is expressed in a format of msXpYZ, and corresponds to X.YZ milliseconds |
| Slot configuration list | 1 | | |
| >Slot configuration item | 1..<maxnoofSlots> | | |
| >>Slot index | | Integer (0..5119) | |

(continued)

| IE/group name | range | IE type and reference | Description |
|---|---|---|---|
| >> CHOICE Symbol Allocation in Slot | | | |
| >>> All DL | | NULL | This means that all symbols within the slot are DL symbols |
| >>> All UL | | NULL | This means that all symbols within the slot are UL symbols |
| >>> Both DL and UL | | | |
| >>>> Number of DL symbols | | Integer (0..13) | |
| >>>> Number of UL symbols | | Integer (0..13) | |

Referring to Table 33, 'intended TDD DL-UL configuration' may include a slot configuration list including information on DL/UL symbols for one or more slots, that is, TDD DL-UL pattern information. If a certain slot includes both DL symbol(s) and UL symbol(s), how many symbols from a stating part of the slot are DL symbols and how many symbols immediately before an ending part of the slot are UL symbols may be notified through parameters 'Number of DL symbols' and 'Number of UL symbols', respectively. Meanwhile, the TS38.473 of 3GPP standard may provide F1AP signaling as shown in Table 34 below, and through this, the IAB node may deliver resource configuration information (gNB-DU cell resource configuration) for cell(s) supported by a gNB-DU of the IAB node to an upper IAB node (e.g. IAB donor, parent node, gNB-CU) or neighbor IAB nodes. In other words, the IAB node may report/deliver information on TDD/FDD resource parameters for each activated cell to the upper IAB node or neighbor IAB nodes through F1AP signaling.

[Table 34]

| IE/group name | range | IE type and reference | Description |
|---|---|---|---|
| Subcarrier spacing | | Enumerated (kHz15, kHz30, kHz60, kHz120, kHz240, spare3, spare2, spare1, ...) | The subcarrier spacing is used for a reference of TDD/FDD slot configuration. |
| DUF transmission periodicity | | Enumerated (ms0p5, ms0p625, ms1, ms1p25, ms2, ms2p5, ms5, ms10, ...) | |
| DUF slot configuration list | 0..1 | | |
| >DUF slot configuration item | 1..<maxnoofDUFSlots> | | Corresponds to 'maxNrof-Slots' |
| >> CHOICE DUF Slot Configuration | | | |
| >>> explicit format | | | |
| >>>> permutation | | Enumerated (DFU, UFD, ...) | |
| >>> Number of DL symbols | | Integer (0 .. 14) | |
| >>>> Number of UL symbols | | Integer (0 .. 14) | |

(continued)

| IE/group name | range | IE type and reference | Description |
|---|---|---|---|
| >>> Implicit format | | | |
| >>>>DUF slot format index | | Integer (0..254) | Corresponds to an index of a preconfigured table |
| HSNA transmission periodicity | | Enumerated (ms0p5, ms0p625, ms1, ms0p5, ms0p625, ms1, mslp25, ms2, ms2p5, ms5, ms10, ms20, ms40, ms80, ms160, ...) | |
| HSNA slot configuration list | 0..1 | | |
| >HSNA slot configuration item | 1.. <maxnoofHSNASlot s> | | |
| >>HSNA Downlink | | Enumerated (H, S, NA) | HSNA value for DL symbol of a slot |
| >>HSNA Uplink | | Enumerated (H, S, NA) | HSNA value for UL symbol of a slot |
| >>HSNA Flexible | | Enumerated (H, S, NA) | HSNA value for flexible symbol of a slot |

Referring to Table 34, the resource allocation information may include downlink/uplink/flexible (DUF) configuration information for one or more slot lists that are repeated at a specific periodicity (i.e. DUF transmission periodicity). In this case, 'maxnoofDUFSlots' in Table 28 may be defined as 320 as the maximum number of slots within 10ms, and 'maxnoofHSNASlots' may be defined as 5120 as the maximum number of H/S/NA slots within 160ms. The number of downlink symbols and the number of uplink symbols within one slot may be set by the parameters 'Number of Downlink Symbols' and 'Number of Uplink Symbols', respectively. In addition, when a permutation parameter is set to 'DFU', downlink symbol(s) may be arranged at a starting part of the slot and uplink symbol(s) may be arranged at an ending part of the slot. On the other hand, when the permutation parameter is set to 'UFD', uplink symbol(s) may be arranged at the starting part of the slot, and downlink symbol(s) may be arranged at the ending part of the slot. Other parameters and detailed configuration values are shown in Table 28.

In the GPP Rel-17 specifications, HSNA slot configurations in Table 28 are specified to be expanded to the frequency domain for a purpose of supporting simultaneous operations of the IAB-DU and IAB-MT. In other words, the 3GPP Rel-17 specifications stipulate that HSNA slot configurations can be expanded to the frequency domain so that IAB-DU resources and IAB-MT resources can support FDM or SDM as well as TDM. The base station or upper node may configure or indicate one or more RB sets or RB set groups to which frequency-domain HSNA configuration is to be applied. In addition, the base station or upper node may indicate, to an IAB-MT of a lower node, availability of one or more frequency-domain soft resources for one or more RB sets and/or RB set groups within a specific time resource. This indication may be delivered to the IAB-MT of the lower node through an availability indicator of an extended form in a DCI format 2_5.

In this case, when the IAB-node receives the DCI format 2_5, the IAB-node may use an RB set, RB set group, and/or slots indicated by the availability indicator as available as IAB-DU resources of the IAB-node.

Meanwhile, in the 3GPP Rel-17, the following functions have been additionally introduced to support IAB-DU resources and IAB-MT resources not only TDMed but also FDMed or SDMed during simultaneous operations of the IAB-DU and IAB-MT. For example, transmission timing adjustment method, FDM through frequency axis resource allocation, additional PDSCH power adjustment (i.e. DL Tx power adjustment) in addition to PDSCH power configuration through a higher layer parameter powerControlOffset, desired uplink power spectral density (PSD) reporting, etc. have been introduced. These functions are summarized as follows.

The gNB may determine a desired timing advance (TA) configuration, and provide it to the UE/IAB-MT. The UE/IAB-MT may use the provided TA to determine an uplink transmission timing relative to a downlink reception timing observed by the UE/IAB-MT.

The IAB node may support an additional mode for uplink timing.

-    The IAB-MT may determine an uplink transmission timing using the provided TA and the provided additional offset, and facilitate multiplexing of IAB-MT reception/IAB-DU reception of the upper node.

- The IAB-MT may facilitate multiplexing of IAB-MT transmission/IAB-DU transmission by matching its uplink transmission timing to the IAB-DU downlink transmission timing.

The IAB node uplink timing mode may be indicated to the upper node through a MAC-CE.

If the IAB-DU and the IAB-MT of the IAB-node are subject to half-duplex constraints, normal transmission/reception of one side may not be guaranteed during transmission/reception of the other side, and vice versa. For example, a case where they are deployed and operate at the same frequency may be an example. When the IAB node supports enhanced frequency or space multiplexing capability, additional multiplexing mode(s) may be supported. For example, multiplexing mode(s) such as IAB-MT reception/IAB-DU reception, IAB-MT transmission/IAB-DU transmission, IAB-MT reception/IAB-DU transmission, and IAB-MT transmission/IAB-DU reception may be supported. The IAB node may report duplexing constraints between the IAB-MT and IAB-DU through F1AP signaling. The IAB node may indicate through F1AP signaling whether FDM is required for enhanced multiplexing operations.

A scheduler of the IAB-DU or IAB-donor-DU may follow the gNB-DU resource configuration received through F1AP, which defines use of scheduling resources to account for the aforementioned duplexing constraints.

The resource configuration may assign hard, soft, or unavailable type to each symbol of each DU cell.

Transmission/reception may be possible in symbols configured as 'hard', and scheduling may not occur in symbols configured as 'unavailable', except in special cases. For symbols configured as 'soft', scheduling may occur conditionally based on an explicit availability indicator from ab upper node via the DCI format 2_5 or an implicit availability determination of the IAB node. The implicit availability determination may be made by the IAB node depending on whether operations of the IAB-DU are to affect co-located IAB-MT(s).

The resource configuration may be shared between adjacent IAB nodes and the IAB donor to facilitate interference management, dual connectivity, and enhanced multiplexing.

To facilitate the transition from IAB-MT to IAB-DU operations and vice versa, guard symbols may be used to overcome potentially misaligned symbol boundaries between the IAB-MT domain and the IAB-DU domain (e.g. a case where a reception boundary of the IAB-MT is not aligned with a transmission boundary of the IAB-DU). Specifically, the IAB node may indicate the desired number of guard symbols to the parent node, while the parent node indicates to the IAB node the number of guard symbols actually provided for a specific transition.

The IAB node supporting enhanced multiplexing capabilities (i.e. IAB-MT reception/IAB-DU reception, IAB-MT transmission/IAB-DU transmission, IAB-MT reception/IAB-DU transmission, IAB-MT transmission/IAB-DU reception) may provide information on an upper node through a MAC-CE to facilitate scheduling of enhanced multiplexing operations by the IAB nodes as follows.

- Recommendation of IAB-MT transmission/reception (Tx/Rx) beam(s)
- Desired IAB-MT transmission PSD range
- Desired IAB-DU transmission power adjustment of the parent node
- Requirement of an uplink transmission timing mode of the IAB-MT

Accordingly, the parent node may provide MAC-CE information to the IAB node to facilitate enhanced multiplexing in the IAB node and/or the parent node:

- Restricted IAB-DU Tx beam
- IAB-DU Tx power adjustment of the actual parent node
- Uplink transmission timing mode of the IAB-MT

Meanwhile, in the 5G NR system, a base station (or relay station such as an IAB node) may control a UE or MT to report channel state information (CSI) using specific time/frequency resources. For convenience of description, a relay station with general base station functions such as eNB and gNB and a relay station with part or all of base station functions such as IAB node (e.g. IAB-DU, IAB-MT) and repeater will be collectively referred to as a relay station. In addition, for convenience of description in the following description, various types of terminals such as a UE configured with a mobile equipment (ME) and a UMTS subscriber identity module (USIM), an ME configured with a mobile terminal (MT) and a terminal equipment (TE), an MT configured with a mobile communication functional unit will all be collectively referred to as a terminal.

The CSI may mean all or part of a channel quality indicator (CQI), precoding matrix indicator (PMI), CSI-RS resource indicator (CRI), SS/PBCH block resource indicator SSBRI, layer indicator (LI), rank indicator (RI), layer-1 reference resource received power (L1-RSRP), or layer-1 signal-to-noise and interference ratio (L1-SINR). For CSI reporting, a terminal may receive N (N is 1 or more) reporting configurations (CSI-ReportConfig), M (M is 1 or more) resource configurations (CSI-ResourceConfig), and trigger configurations including a list of one or more trigger states (e.g. CSI-AperiodicTriggerStateList or CSI-SemiPersistentOnPUSCH-TriggerStateList) from a higher layer of the base station.

Radio resources in a mobile communication system can be utilized in various transmission modes to address different scenarios, including integrated access and backhaul (IAB) node operations, multiple transmission and reception point (multi-TRP) operations, and in-band or out-of-band full-duplex communication operations.

Considering variations in the implementation of terminals and base stations within a system operating in full-duplex communication mode, it may be assumed that a specific terminal (or base station) does not simultaneously perform transmission and reception in both uplink and downlink. Instead, the terminal may be assumed to either transmit in uplink or receive in downlink at any given time (with the base station performing either uplink reception or downlink transmission). In the case of an in-band full-duplex communication system, a significant portion of uplink transmission time is allocated to terminals (e.g. coverage-limited UEs) that are far from a base station, effectively addressing coverage constraints arising from limited uplink transmission powers. Additionally, an operational scenario may assume that a large portion of uplink reception time is allocated to terminals situated in a central region of a cell to maintain high transmission capacity.

Meanwhile, even in the scenario where terminals are allocated a high proportion of uplink transmission time in the full-duplex communication system, there may be instances where reception of downlink signals, such as downlink control channels, is necessary during at least part of an allocated uplink transmission period. This necessity arises to accomplish various objectives, including cell-specific downlink reception, uplink-based channel estimation, and uplink beam change.

The present disclosure provides methods for determining uplink and downlink transmission directions of a terminal in a full-duplex communication system. According to one of the methods provided in the present disclosure, a base station and a terminal can perform various operations according to priorities within a time period in which both uplink transmission and downlink reception are possible. For example, the base station and the terminal may determine an uplink and/or downlink transmission/reception direction according to priorities within a time period in which both uplink transmission and downlink reception are possible. As another example, the base station and the terminal may perform efficient uplink partial transmission within a time period in which both uplink transmission and downlink reception are possible. As another example, the base station and the terminal may perform efficient uplink beam change within a time period in which both uplink transmission and downlink reception are possible. The present disclosure may be applied to various methods in addition to the cases exemplified above. Additionally, wireless communication quality can be improved through the present disclosure.

A subject applying the methods according to the present disclosure described below will be described as a base station or terminal. However, this is merely for convenience of description, and when applied to beyond 5G or 6G mobile communication technology in the future, the subject is not limited to a base station or terminal, and may be applied in a similar manner to wireless communication between devices. For example, the base station may be an IAB-DU (of an upper node), repeater-DU, or repeater-remote unit (or RF unit, RU), and the terminal may be a user equipment (UE), mobile equipment (ME), mobile terminal (MT), IAB-MT (of a lower node), or repeater-MT. Examples of the base station and terminal are to aid understanding of definitive applications of the present disclosure, and it should be noted that the present disclosure is not limited to the examples.

For example, when the present disclosure is applied to an IAB network, a higher layer configuration operation from the base station to the terminal through RRC or MAC CE signaling may refer to a higher layer configuration operation from an IAB-DU (or IAB-node) of a CU or an upper node to an IAB-MT of a lower node (or neighbor IAB-node) through F1AP signaling.

As another example, when the present disclosure is applied to an IAB network, an operation in which the terminal reports to the base station on a PUSCH or PUCCH may refer to an operation in which an IAB-MT (or lower node) (or IAB-MT of an IAB-node) reports to an IAB-DU of a CU or upper node (or an IAB-DU of a neighbor IAB-node) on a PUSCH or PUCCH.

Each node described above as an example may be applied to a repeater and repeater-MT in a similar manner. Specific examples of various other operations are omitted in order not to obscure the gist of the description.

## First exemplary embodiment: Method for determining uplink and downlink directions of a terminal in a full-duplex communication mode

In the first exemplary embodiment, a method for determining uplink and downlink directions in time resources when the base station allocates one or more operation modes to the terminal within a specific resource period will be described.

In exemplary embodiments described below, the base station may be replaced by a CU or an upper node, and the terminal may be replaced by a lower node or an IAB-MT of an IAB-node. Additionally, a specific resource period may include one or a combination of time resources, frequency resources, space resources, and code resources. For example, a specific combination such as time-frequency resource period may be possible. Additionally, allocation of an operation mode may be understood as configuration of the operation mode, activation of the operation mode, indication of the operation mode, etc. For example, configuration of an operation mode may be performed through RRC signaling. As another example, activation of an operation mode may be performed through MAC CE signaling.

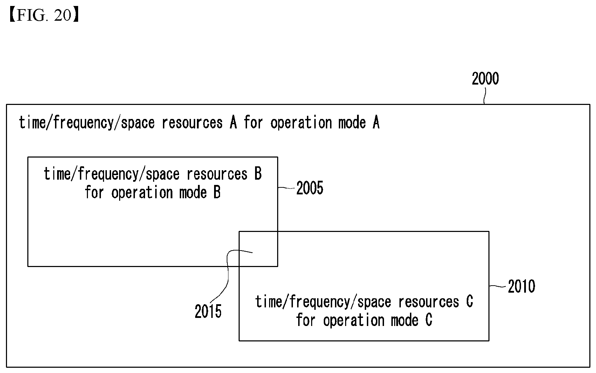

FIG. 20 is a conceptual diagram for describing a method by which a base station allocates one or more operation modes within a resource period to a terminal.

Referring to FIG. 20, the base station may allocate specific resources to an operation mode A (2000). In other words, the base station may allocate specific time/frequency/space/code resources 2000 to the operation mode A. The operation mode A may be a basic mode and may be promised to have the highest priority. Since the operation mode A is the basic mode, it may be applied without depending on any of configuration/activation/indication. In addition, since the operation mode A is the basic mode, it may be a default mode and may fall back from another operation mode. Additionally, resources allocated to the operation mode A may be at least one or a combination of two or more of time/frequency/-space/code resources.

As illustrated in FIG. 20, an operation mode B may be a mode that uses some of the resources of the operation mode A, and an operation mode C may also be a mode that uses some of the resources of the operation mode A. Some of resources of the operation mode B and some of resources of the operation mode C may have overlapping resources, as indicated by reference numeral 2015. The remaining resources of the operation mode B and the remaining resources of the operation mode C, excluding the overlapping resources as shown in reference numeral 2015, are exemplified as a case where they are disjoint.

The base station may allocate the operation mode B as an additional operation mode in addition to the operation mode A depending on capability of the base station. Additionally, the base station may allocate the operation mode C as an additional operation mode in addition to the operation mode A depending on capability of the base station. For example, the base station may allocate only the operation mode A, or may allocate the operation mode A and additionally allocate the operation mode B. As another example, the base station may allocate the operation mode A, and additionally allocate the operation mode C. As another example, the base station may allocate the operation mode A, may additionally allocate the operation mode B, and may also allocate the operation mode C. Except for the operation mode A, which is the basic mode, the operation mode B and the operation mode C may be allocated simultaneously or sequentially.

As described above, when two or three operation modes are allocated, there may be overlapping resources that are available in the two or three operation modes.

For example, when the operation mode A and the operation mode B are allocated, the overlapping resources may be the resources 2005 for the operation mode B. As another example, when the operation mode A and the operation mode C are allocated, the overlapping resources may be resources 2010 for the operation mode C. As another example, when the operation mode A, operation mode B, and operation mode C are all allocated, overlapping resources 2015 may exist in all the three operation modes.

An operation mode applied to a specific resource may be dynamically changed by a MAC CE and/or DCI. The operation modes described in the present disclosure may exist in various forms.

For example, the type of operation mode may be classified according to an applied IAB DU/MT multiplexing mode. Here, the multiplexing mode may include at least one of TDM/FDM/SDM. As another example, the type of operation mode may be classified according to IAB FDM resource configuration (whether or not frequency domain HSNA configuration is applied). As another example, the type of operation mode may be classified according to frequency or time resource configuration for enhanced duplexing. Here, the frequency or time resource configuration may be expressed as XDD, and XDD may include FDD, TDD, subband full-duplex (SBFD), and full-duplex (FD). Here, FD may include in-band full-duplex.

As another example, the type of operation mode may be classified according to whether or not downlink (DL) transmission power adjustment configuration is applied. As another example, the type of operation mode may be classified depending on whether restricted/desired DU/MT beam configuration is applied. As another example, the type of operation mode may be classified depending on whether UL PSD range configuration is applied. As another example, the type of operation mode may be classified according to whether case #1/#6/#7 timing configuration is applied. As another example, the type of operation mode may be classified according to whether it is included in a slot list indicated by one of IAB MAC CEs.

In the above, various types of operation modes are described, and only independent operation modes are described, but a combination of two or more operation modes may be possible.

Meanwhile, the types of operation modes described above and resources corresponding to the operation modes may be provided to the terminal through higher layer signaling.

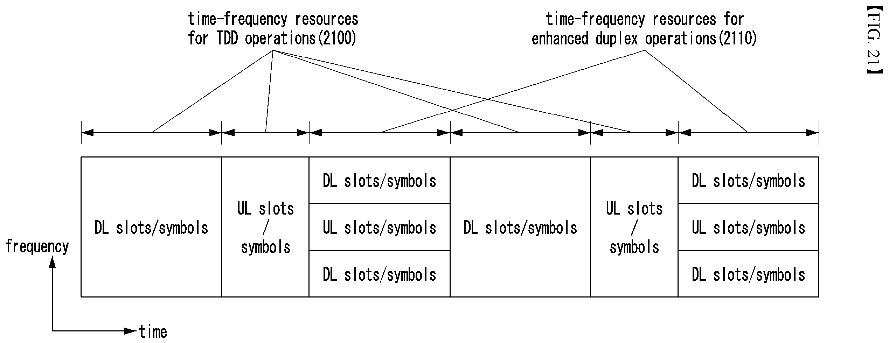

FIG. 21 is a conceptual diagram for describing a method in which a base station allocates resources to a terminal according to an operation mode by using time-frequency resources.

Referring to FIG. 21, a horizontal axis represents time and a vertical axis represents frequency. Although slots and symbols are illustrated together in FIG. 21, for convenience of description, only the slots will be used for description. However, slots may be understood by replacing them with a plurality of symbols. On the time axis of FIG. 21, a first time region in which only DL slots are transmitted may be arranged, a second time region in which only UL slots are transmitted may be arranged, and then a third time region in which slots that are a mixture of downlink and uplink are transmitted may be arranged. In the third time region, the slots that are a mixture of downlink and uplink may be divided into downlink slots and uplink slots by frequency. FIG. 21 illustrates a form in which the first to third time regions are repeated twice. In the following description, for convenience of description, the repeated time regions will be sequentially referred to as a fourth time region, a fifth time region, and a sixth time region starting after the third time region.

The base station may configure a specific time period to operate in a TDD mode 2100. In this case, it may be assumed that the TDD mode is the operation mode A previously described in FIG. 20. The TDD mode 2100, which is the operation mode A, may be allocated resources of the first time region, the second time region, the fourth time region, and the fifth time region.

The third time region and the sixth time region may operate in an enhanced duplex mode 2110. In the following description, the enhanced duplex mode will be referred to as the operation mode B. The enhanced duplex mode 2110 may include various cases such as a flexible duplex mode including XDD and the FD mode.

In the following description, the operation mode B may be collectively referred to as a full-duplex communication mode for convenience of description. Since the base station uses the enhanced duplex mode 2110, specific frequency resources (groups) within the same time period (e.g. the third time region or the sixth time region) may be allowed to a specific terminal (group) as downlink slot(s) or symbol(s), and other frequency resources (group) within the same time period may allocated to another terminal (group) as uplink slot(s) or symbol(s). As a specific example, the base station may allocate downlink slots or symbols to a terminal group A in the third time region and may allocate downlink slots or symbols to a terminal group B in the third time region. The terminal group A may include at least one terminal, and the terminal group B may include at least one terminal not included in the terminal group A.

As described above, in order to allocate individual resources corresponding to the operation modes to different terminals in the same resource region, the base station may semi-statically allocate resources to each terminal or terminal group based on higher layer signaling (e.g. F1AP, RRC, or MAC CE, etc.). As another example, the base station may dynamically allocate resources to each terminal or terminal group based on second layer (L2) signaling (e.g. MAC CE) or first layer (L1) signaling (e.g. DCI).

Meanwhile, type(s) of operation mode(s) described above and resources corresponding to the operation mode(s) may be provided to the terminal through higher layer signaling.

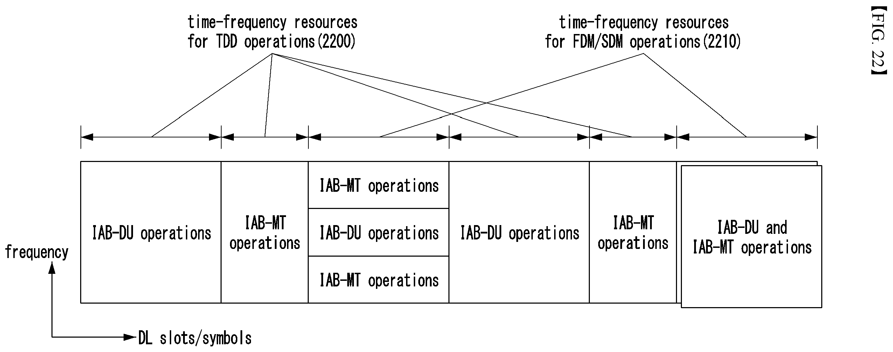

FIG. 22 is a conceptual diagram for describing a method in which a base station allocates resources to a terminal according to an operation mode by using frequency-slots (or symbols).

Referring to FIG. 22, a horizontal axis represents time based on DL slots or symbols, and a vertical axis represents frequency. In the description of FIG. 22, slots will be used for convenience of description. However, as illustrated in FIG. 22, slots may be understood by replacing them with a plurality of symbols.

On the time axis based on slots in FIG. 22, a first slot region for IAB-DU operations may be arranged, a second slot region for IAB-MT operations may be arranged, and then a third slot region in which IAB-DU operations and IAB-MT operations are mixed may be arranged. In the third slot region, resources may be allocated to the IAB-DU operations and the IAB-MT operations separately by frequency. FIG. 22 illustrates a form in which the first to third slot regions are repeated twice. In the following description, for convenience of description, the repeated slot regions will be sequentially referred to as a fourth slot region, a fifth slot region, and a sixth slot region starting after the third slot region.

The base station may perform the IAB-DU operations and the IAB-MT operations in the TDM mode. For example, in the first slot region, the second slot region, the fourth slot region, and the fifth slot region, the IAB-DU operations and the IAB-MT operations may be performed in the TDD mode. Accordingly, the first slot region, the second slot region, the fourth slot region, and the fifth slot region may become time-frequency resources 2200 for TDM operations. In FIG. 22, the TDM operation is assumed to be the operation mode A. The operation mode A may be configured by time-domain HSNA configuration.

On the other hand, the base station may configure the third slot region and the sixth slot region to operation in the non-TDM mode. For example, in the third slot region, the IAB-DU operations and the IAB-MT operations may be FDMed. In addition, in the sixth slot region, the IAB-DU operations and the IAB-MT operations may be space division multiplexed (SDMed). As described above, it is assumed that the operation mode of the third slot region and the sixth slot region is the operation mode B. The operation mode B may be configured by frequency-domain HSNA configuration. Resources for the operation mode B may be time-frequency resources 2210 for FDM/SDM operations.

Based on what has been described above, time-frequency resources for the IAB-DU operations may be allocated in the first slot region and the fourth slot region where the TDM operation is performed, and time-frequency resources 2200 for the IAB-MT operations may be allocated in the second slot region and the sixth slot region. In addition, time-frequency resources 2210 corresponding to FDM or SDM may be allocated for the IAB-DU operations and the IAB-MT operations in the third slot region and the sixth slot region.

Meanwhile, the operation modes may be divided into detailed operation modes according to other associated functions. These will be described as follows.

1) Resources A allocated to the TDM mode may be classified as an operation mode A-1 in association with Pc set by a higher layer. Here, it may mean that a PDSCH EPRE in the resources A is derived by powerControlOffset described above.

2) Resources B allocated to the FDM mode may be classified as an operation mode B-1 in association with a provided or desired downlink transmission power adjustment MAC CE B. Here, a PDSCH EPRE in the resources B may be derived by additionally considering a value indicated by the MAC CE B in addition to a CSI-RS/PDSCH power ratio by powerControlOffset described above.

3) Resources C allocated to the FDM mode may be classified as an operation mode B-2 in association with a provided or desired downlink transmission power adjustment MAC CE C. Here, a PDSCH EPRE in the resources C may be derived by additionally considering a value indicated by the MAC CE C in addition to a CSI-RS/PDSCH power ratio by powerControlOffset described above.

If the resources B allocated to the FDM mode are resources related to the IAB-DU operations, the resources C allocated to the FDM mode may be resources related to the IAB-MT operations. Conversely, if the resources B allocated to the FDM mode are resources related to the IAB-MT operations, the resources C allocated to the FDM mode may be resources related to the IAB-DU operations.

The resources for the operation modes described above may be semi-statically allocated based on higher layer signaling (e.g. F1AP, RRC, or MAC CE, etc.). As another example, the resources of the operation modes described above may be dynamically allocated based on second layer (L2) signaling (e.g. MAC CE) or first layer (L1) signaling (e.g. DCI).

The operation modes described above may be combined with other operation modes. In other words, two or more of the operation modes described in FIGS. 20 to 22 may be combined to form a new operation mode.

For example, in FIG. 20, the operation mode A may be defined as a TDM operation mode of IAB-DU/IAB-MT based on time-domain HSNA configuration, and the operation mode B may be defined as a combination of a TDM (or SDM) operation mode of IAB-DU/IAB-MT based on frequency-domain HSNA configuration and a DL transmission power adjustment operation mode based on a provided downlink transmission power adjustment MAC CE. The examples of FIGS. 21 and 22 may be expanded similarly.

In an exemplary embodiment of the present disclosure, the definitions of 'operation modes' in FIGS. 20 to 22 may be determined depending on whether full-duplex communication is applied.

For example, in FIG. 20, the operation mode A may be defined as a mode in which both the base station and the terminal operate in the TDD mode. In addition, in FIG. 20, the operation mode B may be defined as a mode in which the base station operates in the full-duplex communication mode and the terminal operates in the half-duplex communication mode in resources configured or indicated within a cell (or bandwidth part). In this case, the operation mode B may be subdivided and classified as follows depending on the terminal's degree of recognition of the operation mode.

□ Operation mode B-1: The terminal operating in an operation mode B-1 may not receive additional information on time/frequency/space resource locations for full-duplex communication from the base station. In other words, the terminal may not receive information on resources for full-duplex communication through configuration information received from a higher layer of the base station or indication information received from a physical layer thereof. Since the terminal operating in the operation mode B-1 performing full-duplex communication does not receive resource information from the base station, it does not have explicit information on time/frequency/space resources. The terminal may follow conventional terminal operations without separate operations for the full-duplex communication mode.

□ Operation mode B-2: The terminal operating in an operation mode B-2 may not be provided with additional information on time/frequency/space resource locations for full-duplex communication. In other words, the terminal may not receive information on resources for full-duplex communication through configuration information received from a higher layer of the base station or indication information received from a physical layer thereof. The terminal operating in an operation mode B-2, which performs full-duplex communication, also may not have explicit information on time/frequency/space resources for full-duplex communication, similarly to the operation mode B-1. However, the terminal may recognize information on a situation in which it operates or can operate in the full-duplex communication mode through a configuration or indication from the base station. Accordingly, the terminal operating in the operation mode B-2 may perform additional operations for the full-duplex communication mode. Here, the additional operations may be, for example, transmission power adjustment to reduce interference, CSI reporting, etc.

□ Operation mode B-3: The terminal operating in an operation mode B-3 may explicitly or implicitly receive information on time resources for full-duplex communication from the base station. In other words, the terminal may receive information on resources for full-duplex communication through configuration information received from a higher layer of the base station or indication information received from a physical layer thereof. However, in the operation mode B-3, the base station may not provide information on frequency/space resource locations to the terminal. Therefore, the terminal operating in the operation mode B-3 has explicit information on time resources for full-duplex communication. Through this, the terminal operating in the operation mode B-3 may recognize the location of resources in which the terminal operates or can operate in the full-duplex communication mode. Accordingly, the terminal operating in the operation mode B-3 may perform additional operations for the full-duplex communication mode in the corresponding resources. Here, the additional operations may be, for example, transmission power adjustment to reduce interference, CSI reporting, etc.

□ Operation mode B-4: The terminal operating in an operation mode B-4 may explicitly or implicitly receive information on frequency resources for full-duplex communication from the base station. In other words, the terminal may receive information on resources for full-duplex communication through configuration information received from a higher layer of the base station or indication information received from a physical layer thereof. However, in the operation mode B-4, the base station may not provide information on time/space resource locations to the terminal. Therefore, the terminal operating in the operation mode B-4 has explicit information on frequency resources for full-duplex communication. Through this, the terminal operating in the operation mode B-4 may recognize the location of resources in which the terminal operates or can operate in the full-duplex communication mode. Accordingly, the terminal operating in the operation mode B-4 may perform additional operations for the full-duplex communication mode in the corresponding resources. Here, the additional operations may be, for example, transmission power adjustment to reduce interference, CSI reporting, etc.

□ Operation mode B-5: The terminal operating in an operation mode B-5 may explicitly or implicitly receive information on space resources for full-duplex communication from the base station. In other words, the terminal may receive information on resources for full-duplex communication through configuration information received from a higher layer of the base station or indication information received from a physical layer thereof. However, in the operation mode B-5, the base station may not separately provide information on time/frequency resource locations to the terminal. Therefore, the terminal operating in the operation mode B-5 has explicit information on space resources for full-duplex communication. Through this, the terminal operating in the operation mode B-5 may recognize the location of resources in which the terminal operates or can operate in the full-duplex communication mode. Accordingly, the terminal operating in the operation mode B-5 may perform additional operations for the full-duplex communication mode in the corresponding resources. Here, the additional operations may be, for example, transmission power adjustment to reduce interference, CSI reporting, etc.

□ Operation mode B-6: The terminal operating in an operation mode B-6 may explicitly or implicitly receive information on time/frequency resources for full-duplex communication from the base station. In other words, the terminal may receive information on resources for full-duplex communication through configuration information received from a higher layer of the base station or indication information received from a physical layer thereof. However, in the operation mode B-6, the base station may not separately provide information on space resource locations to the terminal. Therefore, the terminal operating in the operation mode B-6 has explicit information on time/frequency resources for full-duplex communication. Through this, the terminal operating in the operation mode B-6 may recognize the location of resources in which the terminal operates or can operate in the full-duplex communication mode. Accordingly, the terminal operating in the operation mode B-6 may perform additional operations for the full-duplex communication mode in the corresponding resources. Here, the additional operations may be, for example, transmission power adjustment to reduce interference, CSI reporting, etc.

□ Operation mode B-7: The terminal operating in an operation mode B-7 may explicitly or implicitly receive information on time/frequency/space resources for full-duplex communication from the base station. In other words, the terminal may receive information on resources for full-duplex communication through configuration information received from a higher layer of the base station or indication information received from a physical layer thereof. Therefore, the terminal operating in the operation mode B-7 has explicit information on time/frequency/space resources for full-duplex communication. Through this, the terminal operating in the operation mode B-7 may recognize the location of resources in which the terminal operates or can operation in the full-duplex communication mode. Accordingly, the terminal operating in the operation mode B-7 may perform additional operations for the full-duplex communication mode in the corresponding resources. Here, the additional operations may be, for example, transmission power adjustment to reduce interference, CSI reporting, etc.

In some of the operation modes described above, the terminal may identify that downlink resources (e.g. downlink subband for SBFD) and uplink resources (e.g. uplink subband for SBFD) for full-duplex communication at a specific time are simultaneously configure or indicated. Here, for example, the some operation modes may be the operation modes B-4, B-6, or B-7. The specific time may correspond to full-duplex communication symbol(s) or SBFD symbol(s). In this case, the terminal may operate according to one of five operations below at the corresponding time point.

□ Operation 1: The terminal that is aware of full-duplex communication (i.e. SBFD aware UE) may not receive configuration (or indication) for uplink transmission outside of uplink resources. If the terminal receives configuration (or indication) information for uplink transmission outside uplink resources, the terminal may ignore it. In addition, the terminal that is aware of full-duplex communication may not receive configuration (or indication) for downlink reception within uplink resources.

☐ Operation 2: The terminal that is aware of full-duplex communication (i.e. SBFD aware UE) may not receive configuration (or indication) that uplink transmission is possible outside of uplink resources. However, the terminal that is aware of full-duplex communication may receive configuration (or indication) for downlink reception within uplink resources. If the terminal receives configuration (or indication) for uplink transmission outside uplink resources, the terminal may ignore it.

☐ Operation 3: The terminal that is aware of full-duplex communication (i.e. SBFD aware UE) may not receive configuration (or indication) that downlink reception is possible within uplink resources, but may receive configuration (or indication) that uplink transmission is possible outside uplink resources. If the terminal receives configuration (or indication) for uplink transmission outside uplink resources, the terminal may ignore it.

☐ Operation 4: The terminal that is aware of full-duplex communication (i.e. SBFD aware UE) may receive configuration (or indication) for uplink transmission outside uplink resources, and may receive configuration (or indication) for downlink reception within uplink resource.

☐ Operation 5: The terminal that is aware of full-duplex communication (i.e. SBFD aware UE) may receive configuration (or indication) for uplink transmission within uplink resources, and may receive configuration (or indication) for uplink transmission outside uplink resources or within separately configured (or indicated) downlink resources.

According to Operations 1 to 5 described above, the terminal may receive configuration (or indication) for a combination of one or more uplink transmission and downlink reception operations in a specific case. The specific case may be, for example, Operation 2, Operation 4, or Operation 5. In this case, if the terminal (operating in the full-duplex communication system) supports only a half-duplex communication mode, it may be required to select one direction (either uplink transmission or downlink reception) among uplink transmission and/or downlink reception operations configured or indicated as described above.

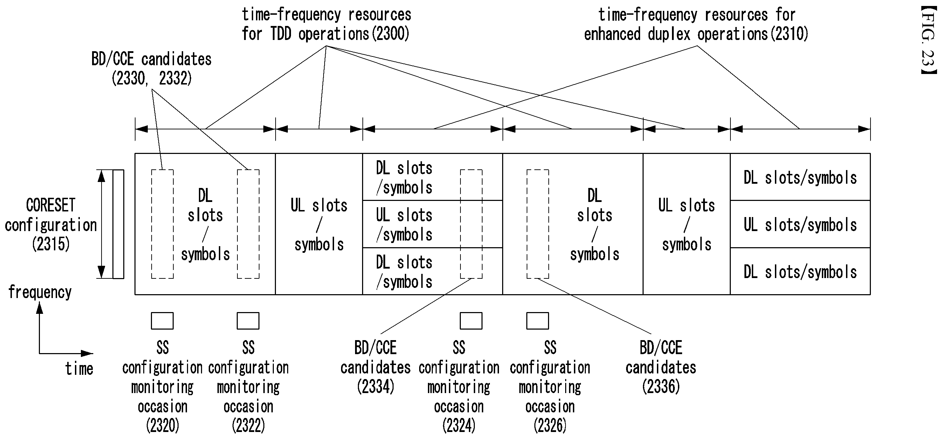

FIG. 23 is a conceptual diagram for describing CORESET configuration and resources therefor for each operation mode according to an exemplary embodiment of the present disclosure.

Referring to FIG. 23, a horizontal axis represents time and a vertical axis represents frequency. FIG. 23 may be understood similarly to FIG. 21 described above. Although slots and symbols are illustrated together in FIG. 23, for convenience of description, only the slots will be used for description. However, the slots may be understood by replacing them with a plurality of symbols.

On the time axis of FIG. 23, a first time region in which only DL slots are transmitted may be arranged, a second time region in which only UL slots are transmitted may be arranged, and then a third time region in which slots that are a mixture of downlink and uplink are transmitted may be arranged. In the third time region, slots that are a mixture of downlink and uplink may be divided into downlink slots and uplink slots by frequency. FIG. 23 illustrates a form in which the first to third time regions are repeated twice. In the following description, for convenience of description, the repeated time regions will be sequentially referred to as a fourth time region, a fifth time region, and a sixth time region starting after the third time region.

The base station may configure a specific time period to operate in a TDD mode 2300. In this case, it is assumed that the TDD mode is the operation mode A previously described in FIG. 20. The TDD mode 2300, which is the operation mode A, may be allocated resources of the first time region, the second time region, the fourth time region, and the fifth time region.

The third time region and the sixth time region may operate in an enhanced duplex mode 2310. In the following description, the enhanced duplex mode will be referred to as the operation mode B. The enhanced duplex mode 2110 may include various cases such as a flexible duplex mode including XDD and the FD mode.

The base station may inform the terminal of the time/frequency resources 2300 operating in the operation mode A and time/frequency resources 2310 operating in the operation mode B. The time/frequency resources 2300 of the operation mode A and the time/frequency resources 2310 of the operation mode B may be configured by higher layer signaling or indicated by L1 signaling.

In addition, the base station may configure one or more CORESETs 2315 and one or more SSs for PDCCH reception separately from the resource configuration for the operation modes, and transmit configuration information therefor to the terminal. In this case, the SS may be composed of one or more monitoring occasions (MOs) 2320, 2322, 2324, and 2326.

The terminal may define blind detection (BD) and control channel element (CCE) candidate groups 2330, 2332, 2334, and 2336 for PDCCH detection based on the CORESET configuration 2315 and SS configurations 2320, 2322, 2324, and 2326. If BD/CCE candidate group(s) exist in the resource 2300 operating in the operation mode A (e.g. 2330, 2332, 2336), the terminal may receive PDCCH(s) by performing a PDCCH blind decoding operation for each aggregation level configured in the CORESET 2315 according to the conventional operation.

On the other hand, if BD/CCE candidate group(s) exist in the resources 2310 operating in the operation mode B (e.g. 2334), the terminal may receive PDCCH(s) by performing a PDCCH blind decoding operation for each aggregation level configured only in a part of the CORESET 2315 according to the conventional operation. The part of the CORESET, which is available for the operation mode B, may be at least one of band(s) below.

1) CORESET configured exclusively for the operation mode B

2) (For a terminal following Operations 2 to 4) frequency resources in which a configured CORESET overlaps uplink frequency resources for full-duplex communication

3) (For a terminal following Operation 5) frequency resources in which a configured CORESET overlaps downlink resources for full-duplex communication

4) The entire CORESET frequency resource configured in the MO 2324 within the full-duplex communication resources, when the terminal does not perform uplink transmission

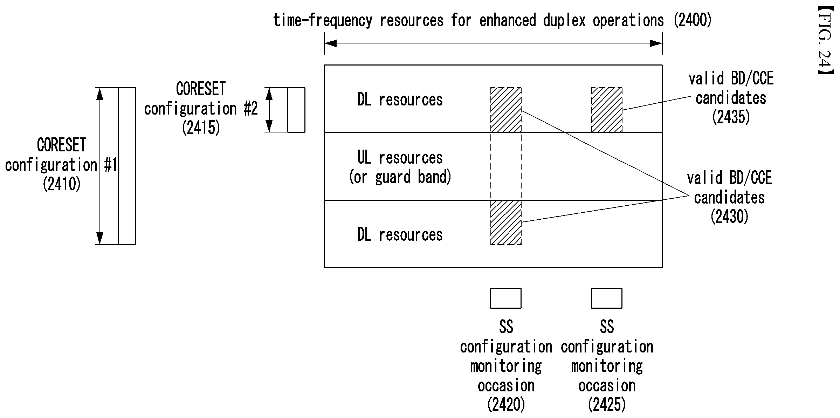

FIG. 24 is a conceptual diagram illustrating BD/CCE configuration in time/frequency resources for full-duplex communication.

Referring to FIG. 24, although time and frequency axes are not illustrated, a horizontal axis represents time and a vertical axis represents frequency. FIG. 24 illustrates different CORESET configurations 2410 and 2415 for time-frequency resources 2400 for enhanced duplex operations. A CORESET configuration #1 2410 may have a wider frequency band compared to a CORESET configuration #2 2415. In addition, the time-frequency resources 2400 for enhanced duplex operation may be divided into DL resources and UL resources in the FDD scheme. As illustrated in FIG. 24, the UL resources may be a guard band between the DL resources.

Based on the resource configuration shown in FIG. 24, the base station may configure one or more CORESETs 2410 and 2415 and one or more SSs to the terminal for time/frequency resources 2400 for the operation mode B. In this case, the SS may be composed of one or more MOs 2420 and 2425. If the terminal following Operation 5 defines BD/CCE candidate group(s) by the CORESET configuration #1 2410 and the SS configuration #1 2420, valid BD/CCE candidate group(s) may be defined considering only frequency/time resources 2430 based on the SS configuration #1 2420, excluding uplink resources (or guard band), when PDCCH reception of the terminal in the CORESET configuration #1 2410 is not assumed. This means that the terminal may not perform a PDCCH detection operation in a BD/CCE candidate group that overlaps uplink resources (or guard band) in which the terminal does not assume PDCCH reception.

Similarly, if the terminal following Operation 2 or Operation 4 defines BD/CCE candidate group(s) based on the CORESET configuration #1 2410 and SS configuration #1 2420, the valid BD/CCE candidate group(s) may be defined considering only frequency/time resources excluding downlink resources (or guard band) in which the terminal does not assume PDCCH reception. This means that the terminal may not perform a PDCCH detection operation in a BD/CCE candidate group that overlaps downlink resources (or guard band) in which the terminal does not assume PDCCH reception.

As another example, the base station may provide separate CORESET configuration #2 2415 and SS configuration #2 2425 for a terminal following Operation 2, Operation 4, or Operation 5. When the terminal receives a separate CORESET configuration or SS configuration for full-duplex communication, BD/CCE candidate group(s) defined by this or these may be expected not to overlap downlink resources (or uplink resources or guard band) in which the terminal does not assume PDCCH reception according to Operation 2, Operation 4, or Operation 5. This may mean that the terminal may not perform a PDCCH detection operation in a BD/CCE candidate group that overlaps with downlink resources (or uplink resources, or guard band) in which the terminal does not assume PDCCH reception.

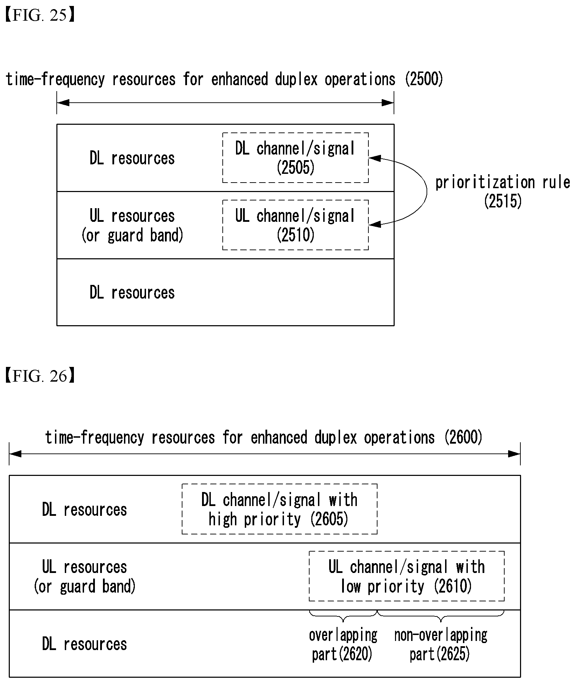

FIG. 25 is a conceptual diagram for describing an uplink and downlink direction determination according to priorities in time/frequency resources for enhanced duplex mode.

Referring to FIG. 25, although time and frequency axes are not illustrated in the same manner as FIG. 24 described above, a horizontal axis represents time and a vertical axis represents frequency. In FIG. 25, time-frequency resources 2500 for an enhanced duplex operation may be divided into DL resources and UL resources in the FDD manner. As illustrated in FIG. 25, the UL resources may be a guard band between the DL resources.

The base station may notify the terminal through higher layer signaling or physical layer signaling that the operation mode B (full duplex communication mode) may be applied to specific time/frequency resources. Resource allocation (or configuration or indication) for transmission 2510 of an uplink channel/signal and resource allocation (or configuration or indication) for reception 2505 of a downlink channel/signal may exist simultaneously at a specific time according to one of Operations 1 to 5. In this case, the terminal may determine which channel/signal to transmit and receive among the simultaneously allocated uplink channel/signal and downlink channel/signal according to a prioritization rule 2515 that is predetermined or configured by the base station.

For example, reception for SSB(s) included in (or associated with) an SSB or SMTC configuration may have a higher priority than transmission and reception for other channels/signals. Using this priority, the base station may secure flexible uplink resources for full-duplex communication independently of an SSB pattern.

As another example, signals transmitted by a terminal related to a RACH procedure, such as a first message (Msg1) or third message (Msg3), may have a higher priority than transmission and reception for other channels/signals. However, the first message (Msg1) or third message (Msg3) may have a lower priority than the SSB described above. In this manner, using the priorities for the respective channels/signals, the base station may protect a signal transmitted by the terminal in relation to RACH in time/frequency resources for the operation mode B. Applying the operation mode B has an effect of increasing a coverage of the base station because messages transmitted by the terminal are protected in the RACH procedure.

As another example, a type-0 PDCCH monitoring in the terminal may have a higher priority than transmission and reception of other channels/signals. Based on this, the terminal may guarantee reception performance for cell-specific downlink channels/signals such as SIB(s) even in time/frequency resources for the operation mode B.

As another example, reception of an aperiodic/dynamic uplink channel/signal may have a higher priority than reception of a periodic/semi-static downlink channel/signal at the base station. Here, transmission of a aperiodic/dynamic uplink channel/signal may mean, for example, aperiodic SRS, dynamic PUSCH allocation, etc., and reception of a periodic/semi-static downlink channel/signal may mean periodic CSI-RS, semi-static PDSCH, PDSCH repetition, PDCCH repetition, etc. Based on the above prioritization, the base station may utilize some of resources for periodic/semi-static downlink channels/signals as uplink resources to secure the coverage.

By appropriately combining the examples described above, priorities for various types of uplink and/or downlink signals may be promised or configured.

For example, the base station and the terminal may determine an uplink and/or downlink direction in time/-frequency (or space) resources for the operation mode B according to priorities below. In other words, the base station and the terminal may determine an uplink and/or downlink direction based on the priorities below in time/frequency (or space) resources for the operation mode B. In the below description, lower priority numbers have higher priorities than higher priority numbers.

☐ Priority 1: SSB (in SMTC configuration)

☐ Priority 2: RACH-related transmissions (Msg1 / Msg3)

☐ Priority 3: RACH-related receptions (Msg2 / Msg4)

☐ Priority 4: (Type-0) PDCCH monitoring

☐ Priority 5: Aperiodic/dynamic allocation of SRS/PUSCH

☐ Priority 6: Aperiodic/dynamic allocation of CSI-RS/PDSCH

☐ Priority 7: Periodic/semi-static SRS/PUCCH/grant-free UL/SPS UL/PUSCH repetition/PUCCH repetition

☐ Priority 8: Periodic/semi-static CSI-RS/SPS DL/PDSCH repetition/PDCCH repetition

The priorities shown above may be examples for convenience of description, and in actual application, their order may be appropriately changed or some priorities may be omitted.

In FIG. 25 described above, examples of uplink and downlink channel/signal allocation according to Operation 5 is shown, but these are for convenience of description. In other words, when applied to Operations 1 to 4, they may be appropriately changed. For example, the terminal may receive a downlink signal within uplink resources (i.e. uplink subband) for the operation mode B.

As described above, when a channel/signal with the highest priority is determined, a transmission/reception direction in time/frequency resources for the operation mode B may be determined according to an uplink and/or downlink direction of the determined channel/signal. Then, channels/signals that have a lower priority compared to the highest priority of the determined channel/signal but match the determined transmission/reception direction may be transmitted and/or received together with the highest priority channel/signal based on a multiplexing rule of the system.

**Second exemplary embodiment: Method for partially transmitting an uplink signal in a full-duplex communication mode**

In the second exemplary embodiment of the present disclosure, a method for determining a transmission and reception direction when an uplink channel/signal and a downlink channel/signal partially overlap (overlap) in resources for the operation mode B will be described.

FIG. 26 is a conceptual diagram for describing a case where an uplink signal is transmitted in a communication system supporting a full-duplex communication mode.

Referring to FIG. 26, although time and frequency axes are not illustrated in the same manner as FIGS. 24 and 25 described above, a horizontal axis represents time and a vertical axis represents frequency. In FIG. 26, time-frequency resources 2600 for an enhanced duplex operation may be divided into DL resources and UL resources in the same FDD manner. As illustrated in FIG. 26, the UL resources may be a guard band between the DL resources.

In describing FIG. 26, the operation mode B will be used as described above. The base station may allocate time/frequency resources 2600 for the operation mode B to the terminal. Allocation of the time/frequency resources 2600 for the operation mode B may be configured by a higher layer or may be indicated through physical layer signaling.

The base station may allocate one or more downlink channels/signals 2605 and uplink channels/signals 2610 to the terminal in the time/frequency resources 2600 for the operation mode B. In this case, a part 2620 of the allocated uplink channels/signals may overlap with the allocated downlink channel(s)/signal(s), and a remaining part 2625 of the allocated uplink channels/signals may not overlap with the allocated downlink channel(s)/signal(s). Hereinafter, for convenience of description, the part 2620 that overlaps with the allocated downlink channel(s)/signal(s) will be referred to as an overlapping part, and the remaining part 2625 that does not overlap with the allocated downlink channel(s)/signal(s) will be referred to as an non-overlapping part.

As described above, in the time/frequency resources 2600 for the operation mode B, a transmission direction in the overlapping part 2620 among the one or more downlink channels/signals 2605 and uplink channels/signals 2610 may be determined using one of the methods described in the first exemplary embodiment. In other words, as illustrated in FIG. 26, when a priority of the downlink channel/signal 2605 is higher than a priority of the uplink channel/signal 2610, the downlink channel/signal 2605 having the higher priority may be transmitted in the overlapping part 2620.

However, if the non-overlapping part 2625 is not transmitted in the same manner as the overlapping part 2620, resources may be wasted. Therefore, in the present disclosure, transmission of the non-overlapping part 2625 may be determined independently from the overlapping part 2620.

For example, the base station may allow the terminal to transmit the non-overlapping part 2625 independently of the overlapping part 2620. When allowing the terminal to transmit the non-overlapping part 2625 independently of the overlapping part 2620, the base station may only allow transmission of specific channels/signals. For example, transmission of the non-overlapping part 2625 independently of the overlapping part 2620 may be allowed only for uplink channels/signals capable of partial transmission. Here, examples of uplink channels/signals capable of partial transmission may include SRS mapped at the symbol-level, PUSCH repetition or PUCCH repetition repeated for each period, and/or the like. The allowance to transmit the non-overlapping part 2625 independently of the overlapping part 2620 may be promised in advance between the terminal and the base station, or may be configured or indicated by the base station.

As described in FIG. 26, by utilizing the non-overlapping part 2625, the base station and network may increase the efficiency of using time/frequency resources for the operation mode B.

In FIG. 26 described above, examples of uplink and/or downlink channel/signal allocation according to Operation 5 is shown. However, this is for convenience of description, and when Operations 1 to 4 described above are applied to the system, they may be appropriately modified to suit each operation. For example, the terminal may be able to receive a downlink signal within uplink resources (uplink subband) for the operation mode B.

**Third exemplary embodiment: Methods for changing an uplink beam of a terminal in a full-duplex communication mode**

In the third exemplary embodiment of the present disclosure, a method of changing a transmission beam used for uplink channel/signal transmission in resources for the operation mode B will be described.

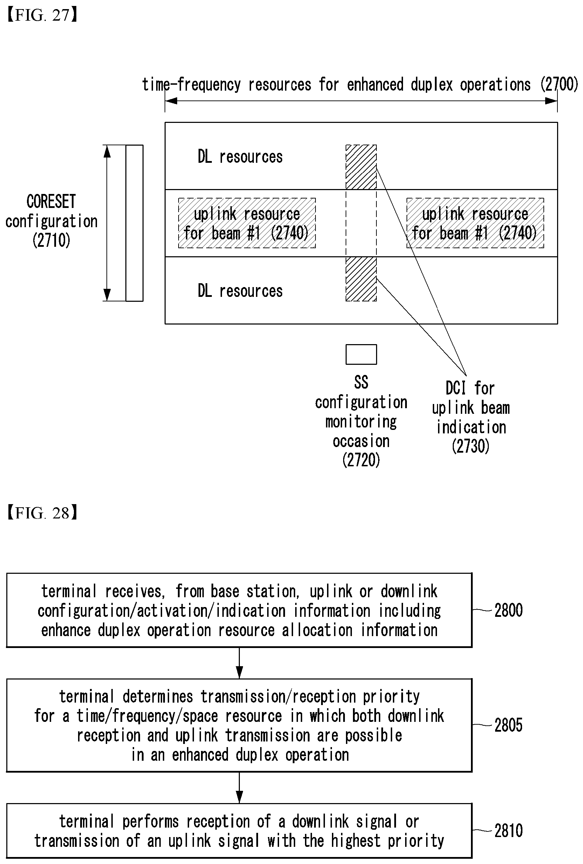

FIG. 27 is a conceptual diagram for describing beam change for uplink channel/signal transmission in a communication system supporting a full-duplex communication mode.

Referring to FIG. 27, although time and frequency axes are not illustrated in the same manner as the previously described FIGS. 24 to 26, a horizontal axis represents time and a vertical axis represents frequency. In FIG. 27, time-frequency resources 2700 for an enhanced duplex operation may be divided into DL resources and UL resources in the FDD manner.

In addition, in describing FIG. 27, the operation mode B will be used as described above. The base station may allocate time/frequency resources 2700 for the operation mode B to the terminal. Allocation of the time/frequency resources 2700 for the operation mode B may be configured by a higher layer or may be indicated through physical layer signaling.

The base station may allocate one or more uplink channels/signals 2740 and 2750 to a specific terminal in the time/frequency resources 2700 for the operation mode B. The base station may wish to apply a different uplink transmission beam to each of the one or more uplink channels/signals 2740 and 2750 depending on a situation. For example, if a time period occupied by the uplink channels/signals is longer than a COT, the base station may wish to change an uplink transmission beam used when transmitting the uplink channels/signals 2740 and 2750. As another example, when the base station determines that a time period occupied by the uplink channels/signals 2740 and 2750 is longer than a coherent time of a beam or channel, the base station may wish to change an uplink transmission beam used for transmission of the uplink channels/signals 2740 and 2750.

In order to change the uplink transmission beam, the base station may configure a CORESET 2710 and SS MO 2720 for detection of a PDCCH including uplink transmission beam indication to the terminal, and transmit configuration information therefor through a downlink resource. The terminal may assume that a DCI 2730 including the uplink transmission beam indication is included in a BD/CCE candidate group for the operation mode B. In other words, the terminal may receive the DCI 2730 on a PDCCH of the CORESET 2710 configured by the base station. Upon receipt of a DCI related to an uplink beam #1 2740 within the resources 2700 for the operation mode B, the terminal may operate based on Operations 1 to 5 described in the first exemplary embodiment. Upon receipt of a DCI related to the uplink beam #1 2740 outside the resources 2700 for the operation mode B, the terminal may override the received DCI according to Operations 1 to 5 described in the first exemplary embodiment. Through this, the base station and network can increase the efficiency of using time/frequency resources for the operation mode B.

FIG. 28 is a flowchart of operations of a terminal according to an exemplary embodiment of the present disclosure.

Referring to FIG. 28, in step 2800, the terminal may receive control information including enhanced duplex operation resource allocation information from the base station. The control information may configure or indicate activation of uplink and/or downlink resources, or may indicate an uplink and/or downlink operation in a specific resource. In addition, the enhanced duplex operation resource allocation information included in the control information may be information on the operation mode A and/or operation mode B described above.

In step 2805, the terminal may operate in the operation mode A and/or operation mode B according to one of the first to third exemplary embodiments described above. In addition, in step 2805, the terminal may determine priorities for resources capable of both downlink reception and uplink transmission while operating in the operation mode A and/or operation mode B. Here, the resources may include at least one of time resources, frequency resources, or space resources.

In step 2810, the terminal may perform reception of a downlink signal or transmission of an uplink signal with the highest priority. In addition, when necessary, the terminal may perform multiplexing of signals having the same transmission/reception direction as the signal with the highest priority. In addition, as previously described in the second exemplary embodiment, the terminal may perform transmissions with lower priorities by using resources in the non-overlapping part.

When actually implementing the base station and/or terminal, the exemplary embodiments described above do not need to be exclusive except in specific cases. Accordingly, the present disclosure may be used through various combinations of the exemplary embodiments described above. For example, when determining priorities according to the first exemplary embodiment of the present disclosure, in addition to type 0 PDCCH, the uplink beam change DCI according to the third exemplary embodiment may be used in combination.

Meanwhile, the base station and/or terminal described above may be understood as being replaced with IAB-node, IAB-DU, IAB-MT, repeater, repeater-RU, repeater-MT, etc.

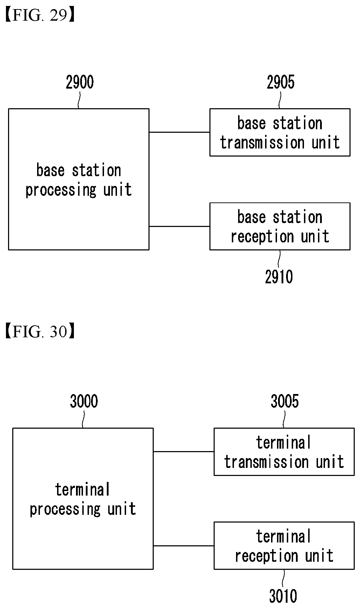

FIG. 29 is a block diagram illustrating a base station according to an exemplary embodiment of the present disclosure.

Referring to FIG. 29, a base station may include a base station processing unit 2900, a base station transmission unit 2905, and a base station reception unit 2910. The components of FIG. 29 are shown as an exemplary embodiment, and the base station may further include additional component(s) depending on an exemplary embodiment of the present disclosure or intention of a telecommunication service operator.

For example, although not illustrated in FIG. 29, the base station may further include a memory. In addition, the base station may further include wired/wireless interfaces for connection to external devices. In addition, the base station may further include an interface to allow the operator to identify operations of the base station. In addition to the form described above, the base station may include additional component(s) depending on a need of a telecommunication service operator or producer.

The base station processing unit 2900 may perform determination and processing for overall operations of the base station according to the exemplary embodiments of the present disclosure described above. For example, the base station processing unit 2900 may determine an operation mode or control transmission of information related to the determined operation mode to the terminal through higher layer signaling or physical layer signaling. Additionally, if the base station processing unit 2900 has an additional memory, the base station processing unit 2900 may control the information to be stored in the memory. The base station processing unit 2900 may control a reception operation of the base station reception unit 2910 as well as a transmission operation of the base station transmission unit 2905. In particular, the base station processing unit 2900 may generate the enhanced duplex operation resource allocation information described above with reference to FIG. 28, and determine an uplink or downlink transmission direction in resources for full-duplex communication.

The base station transmission unit 2905 may transmit data received from the base station processing unit 2900 in downlink under control by the base station processing unit 2900. The base station reception unit 2910 may receive an uplink channel/signal under control by the base station processing unit 2900 and provide it to the base station processing unit 2900.

FIG. 30 is a block diagram illustrating a terminal according to an exemplary embodiment of the present disclosure.

Referring to FIG. 30, a terminal may include a terminal processing unit 3000, a terminal transmission unit 3005, and a terminal reception unit 3010. The components of FIG. 30 are shown as an exemplary embodiment, and the terminal may further include additional component(s) according to an exemplary embodiment of the present disclosure or an intention of a telecommunication service operator.

For example, although not illustrated in FIG. 30, the terminal may further include a memory. In addition, the terminal may further include wired/wireless interfaces for connection to external devices. In addition, the terminal may further include an interface to allow a user or the operator to identify operations of the terminal. In addition to the form described above, the terminal may include additional component(s) depending on a need of a telecommunication service operator or producer.

The terminal processing unit 300 may perform determination and processing for overall operations of the terminal according to the exemplary embodiments of the present disclosure described above. For example, the terminal processing unit 3000 may control uplink transmissions and/or downlink receptions according to at least one operation mode among the operation modes described in the present disclosure. In addition, the terminal processing unit 3000 may receive operation mode-related information from the base station through higher layer signaling or physical layer signaling. In addition, if the terminal processing unit 3000 has an additional memory, the terminal processing unit 3000 may control the information to be stored in the memory. The terminal processing unit 3000 may control a reception operation of the terminal reception unit 3010 as well as a transmission operation of the terminal transmission unit 3005. In particular, the terminal processing unit 3000 may perform control on the operations described above with reference to FIG. 28 in resources for full-duplex communication.

The terminal transmission unit 3005 may transmit data received from the terminal processing unit 3000 in uplink under control by the terminal processing unit 3000. The terminal reception unit 3010 may receive a downlink channel/-signal under control by the terminal processing unit 3000 and provide it to the terminal processing unit 3000.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

EP 4 597 914 A1

**Claims**

1. A method of a terminal, comprising:

receiving, from a base station, information related to a first operation mode in which one of an uplink (UL) resource or a downlink (DL) resource is allocated in time domain, and information related to a second operation mode in which both a UL resource and a DL resource are allocated in time domain;
receiving, from the base station, priority information for a UL transmission and a DL reception in the second operation mode;
in response to that both the UL transmission and the DL reception are simultaneously indicated by the base station in the second operation mode, selecting a link among uplink and downlink based on the priority information; and
communicating using the selected link,
wherein the information related to the first operation mode includes first resource information of the first operation mode, and the information related to the second operation mode includes second resource information of the second operation mode.

2. The method according to claim 1, wherein the second resource information includes at least one of a control resource set (CORESET) #2 configured exclusively for the second operation mode, frequency resources in which a CORESET #1 configured commonly to the first operation mode and the second operation mode overlaps uplink frequency resources for full-duplex communication, or frequency resources in which the CORESET #1 overlaps downlink frequency resources for full-duplex communication.

3. The method according to claim 2, wherein when the second resource information includes the CORESET #2, the second resource information further includes a synchronization signal (SS) resource corresponding to the CORESET #2.

4. The method according to claim 1, further comprising, when the UL transmission and the DL reception are performed in a same time resource, reporting a cross link interference (CLI).

5. The method according to claim 1, wherein the priority information includes at least one of priorities listed in a descending order of:

1) synchronization signal block (SSB),
2) random access channel (RACH)-related transmissions,
3) type-0 physical downlink control channel (PDCCH) monitoring,
4) aperiodic/dynamic allocation of a sounding reference signal (SRS)/physical uplink shared channel (PUSCH),
5) aperiodic/dynamic allocation of a channel state information reference signal (CSI-RS)/physical downlink shared channel (PDSCH),
6) periodic/semi-static SRS/PUCCH/grant-free UL/SPS UL/PUSCH repetition/physical uplink control channel (PUCCH) repetition, and
7) periodic/semi-static CSI-RS/SPS DL/PDSCH repetition/PDCCH repetition.

6. The method according to claim 5, wherein in the RACH-related transmission, a first message (massage 1) and a third message (massage 3) related to the UL transmission are configured to have a higher priority than a second message (massage 2) and a fourth message (massage 4) related to the DL reception.

7. The method according to claim 1, wherein in the second operation mode, a first resource region among resources of a second channel having a lower priority than a first channel overlaps with resources of the first channel, a second resource region among the resources of the second channel does not overlap with the resources of the first channel, and the terminal communicates with the base station through the second channel using the non-overlapped resources when a preconfigured condition is satisfied.

8. The method according to claim 7, wherein the preconfigured condition is transmission of a sounding reference signal (SRS) mapped at a symbol level or transmission repeated for each period.

9. The method according to claim 1, further comprising: when UL transmission beam-related information is received outside resources based on the second resource information, ignoring the received UL transmission beam-related

57

information.

10. A method of a base station, comprising:

configuring a first resource corresponding to a first operation mode in which one of an uplink (UL) resource or a downlink (DL) resource is allocated in time domain;
configuring a second resource corresponding to a second operation mode in which both a UL resource and a DL resource are allocated in time domain;
transmitting, to a terminal, information related to the first operation mode and the second operation mode;
transmitting, to the terminal, priority information for uplink and downlink in the second operation mode; and
communicating with the terminal in the second resource according to the second operation mode.

11. The method according to claim 10, wherein the second resource information includes at least one of a control resource set (CORESET) #2 configured exclusively for the second operation mode, frequency resources in which a CORESET #1 configured commonly to the first operation mode and the second operation mode overlaps uplink frequency resources for full-duplex communication, or frequency resources in which the CORESET #1 overlaps downlink frequency resources for full-duplex communication.

12. The method according to claim 11, wherein when the second resource information includes the CORESET #2, the second resource information further includes a synchronization signal (SS) resource corresponding to the CORESET #2.

13. The method according to claim 10, further comprising, when the UL transmission and the DL reception are performed in a same time resource, receiving a cross link interference (CLI) report from the terminal.

14. The method according to claim 10, wherein the priority information includes at least one of priorities listed in a descending order of:

1) synchronization signal block (SSB),
2) random access channel (RACH)-related transmissions,
3) type-0 physical downlink control channel (PDCCH) monitoring,
4) aperiodic/dynamic allocation of a sounding reference signal (SRS)/physical uplink shared channel (PUSCH),
5) aperiodic/dynamic allocation of a channel state information reference signal (CSI-RS)/physical downlink shared channel (PDSCH),
6) periodic/semi-static SRS/PUCCH/grant-free UL/SPS UL/PUSCH repetition/physical uplink control channel (PUCCH) repetition, and
7) periodic/semi-static CSI-RS/SPS DL/PDSCH repetition/PDCCH repetition.

15. The method according to claim 14, wherein in the RACH-related transmission, a first message (massage 1) and a third message (massage 3) related to the UL transmission are configured to have a higher priority than a second message (massage 2) and a fourth message (massage 4) related to the DL reception.

16. The method according to claim 10, wherein in the second operation mode, a first resource region among resources of a second channel having a lower priority than a first channel overlaps with resources of the first channel, a second resource region among the resources of the second channel does not overlap with the resources of the first channel, and the base station communicates with the terminal through the second channel using the non-overlapped resources when a preconfigured condition is satisfied.

17. The method according to claim 16, wherein the preconfigured condition is transmission of a sounding reference signal (SRS) mapped at a symbol level or transmission repeated for each period.

18.

A terminal comprising a processor,
wherein the processor causes the terminal to perform:

receiving, from a base station, information related to a first operation mode in which one of an uplink (UL) resource or a downlink (DL) resource is allocated in time domain, and information related to a second operation mode in which both a UL resource and a DL resource are allocated in time domain;

receiving, from the base station, priority information for a UL transmission and a DL reception in the second operation mode;

in response to that both the UL transmission and the DL reception are simultaneously indicated by the base station in the second operation mode, selecting a link among uplink and downlink based on the priority information; and

communicating using the selected link,

wherein the information related to the first operation mode includes first resource information of the first operation mode, and the information related to the second operation mode includes second resource information of the second operation mode.

19. The terminal according to claim 18, wherein the second resource information includes at least one of a control resource set (CORESET) #2 configured exclusively for the second operation mode, frequency resources in which a CORESET #1 configured commonly to the first operation mode and the second operation mode overlaps uplink frequency resources for full-duplex communication, or frequency resources in which the CORESET #1 overlaps downlink frequency resources for full-duplex communication.

20. The terminal according to claim 18, wherein in the second operation mode, a first resource region among resources of a second channel having a lower priority than a first channel overlaps with resources of the first channel, and a second resource region among the resources of the second channel does not overlap with the resources of the first channel, and the processor further causes the terminal to communicate with the base station through the second channel using the non-overlapped resources when a preconfigured condition is satisfied.

【FIG. 1】

100

L3    radio resource control (RRC) layer   ~110

logical channel ~115

L2    medium access control (MAC) layer   ~120

transport channel ~125

L1    physical (PHY) layer   ~130

control/measurement

150

【FIG. 2】

200

frame ~230

slot ~210

#0 · · · #($N_{slot}^{subframe, \mu}-1$) · · · #($N_{slot}^{frame, \mu}-1$)

~220

subframe

【FIG. 3】

【FIG. 4】

400

【FIG. 5】

【FIG. 6】

600

615

610

| UE | | gNB |

Msg1 : preamble　　　　S620

Msg2 : RACH response　　S630

Msg3: PUSCH　　　　S640

Msg4: contention resolution S650

HARQ ACK　　　　S660

【FIG. 7】

frequency

RO #0　　RO #1　　RO #2　　RO #(N-1)

SSB #0　SSB #1　SSB #2　　. . .　SSB #(N-1)

time

【FIG. 8】

[FIG. 9]

EP 4 597 914 A1

99

[FIG. 10]

EP 4 597 914 A1

| CORESET pool ID | serving cell ID | | | | | BWP ID | |
|---|---|---|---|---|---|---|---|
| $T_7$ | $T_6$ | $T_5$ | $T_4$ | $T_3$ | $T_2$ | $T_1$ | $T_0$ |
| $T_{15}$ | $T_{14}$ | $T_{13}$ | $T_{12}$ | $T_{11}$ | $T_{10}$ | $T_9$ | $T_8$ |

Oct 1 / Oct 2 / Oct 3

. . .

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ |
|---|---|---|---|---|---|---|---|

Oct N

【FIG. 11】

【FIG. 12】

1215 — | DL symbol | DL-dedicated slot(1200)

1220 — | UL symbol | UL-dedicated slot(1205)

| DL symbol | guard period | UL symbol | mixed slot(1210)

1225　　　　1230　　　　1235

【FIG. 13】

【FIG. 14】

【FIG. 15】

```
                    start
                      |
                      v
  +-------------------------------------------+
  | IAB node receives, from upper IAB node,   |
  | higher layer IAB-MT resource configuration|  --S1500
  | information and higher layer IAB-DU       |
  | resource configuration information        |
  +-------------------------------------------+
                      |
                      v
  +-------------------------------------------+
  | IAB node receives, from upper IAB node,   |
  | physical layer IAB-MT resource indicator  |  --S1510
  | and physical layer IAB-DU resource indicator|
  +-------------------------------------------+
                      |
                      v
  +-------------------------------------------+
  | IAB node determines whether to            |  --S1520
  | use IAB-DU resources                      |
  +-------------------------------------------+
                      |
                      v
                    end
```

【FIG. 16】

【FIG. 17a】

1700

user plane protocol stack

【FIG. 17b】

1750

control plane protocol stack

【FIG. 18a】

1800

user plane protocol stack for CA

【FIG. 18b】

user plane protocol stack for DC

【FIG. 19a】

【FIG. 19b】

Case 2: MT Tx / DU Tx (1905)

reception power → MT    DU ← reception power

interference    interference

1920

【FIG. 19c】

Case 3: MT Tx / DU Rx (1910)

transmission power ← MT    DU ← reception power

interference

【FIG. 19d】

Case 4: MT Rx / DU Tx (1920)

reception power → MT    DU → transmission power

interference

【FIG. 20】

2000

time/frequency/space resources A for operation mode A

time/frequency/space resources B
for operation mode B
2005

2015

time/frequency/space resources C
for operation mode C
2010

【FIG. 21】

【FIG. 22】

[FIG. 23]

EP 4 597 914 A1

time-frequency resources
for TDD operations(2300)

time-frequency resources for
enhanced duplex operations(2310)

BD/CCE candidates
(2330, 2332)

CORESET
configuration
(2315)

frequency

time

| DL slots / symbols | UL slots / symbols | DL slots /symbols |  | DL slots symbols | UL slots / symbols | DL slots/symbols |
| | | UL slots /symbols | | | | UL slots/symbols |
| | | DL slots /symbols | | | | DL slots/symbols |

SS
configuration
monitoring
occasion
(2320)

SS
configuration
monitoring
occasion
(2322)

BD/CCE
candidates
(2334)

SS
configuration
monitoring
occasion
(2324)

SS
configuration
monitoring
occasion
(2326)

BD/CCE
candidates
(2336)

【FIG. 24】

time-frequency resources for enhanced duplex operations (2400)

valid BD/CCE candidates (2435)

valid BD/CCE candidates (2430)

DL resources

UL resources (or guard band)

DL resources

CORESET configuration #2 (2415)

CORESET configuration #1 (2410)

SS configuration monitoring occasion (2420)

SS configuration monitoring occasion (2425)

【FIG. 25】

time-frequency resources for enhanced duplex operations (2500)

| DL resources | DL channel/signal (2505) |
| UL resources (or guard band) | UL channel/signal (2510) |
| DL resources | |

prioritization rule (2515)

【FIG. 26】

time-frequency resources for enhanced duplex operations (2600)

| DL resources | DL channel/signal with high priority (2605) |
| UL resources (or guard band) | UL channel/signal with low priority (2610) |
| DL resources | overlapping part(2620)   non-overlapping part(2625) |

【FIG. 27】

time-frequency resources for enhanced duplex operations (2700)

CORESET
configuration
(2710)

DL resources

uplink resource
for beam #1 (2740)          uplink resource
                            for beam #1 (2740)

DL resources

SS
configuration
monitoring
occasion
(2720)

DCI for
uplink beam
indication
(2730)

【FIG. 28】

terminal receives, from base station, uplink or downlink
configuration/activation/indication information including
enhance duplex operation resource allocation information ─2800

terminal determines transmission/reception priority
for a time/frequency/space resource in which both downlink
reception and uplink transmission are possible
in an enhanced duplex operation ─2805

terminal performs reception of a downlink signal or
transmission of an uplink signal with the highest priority ─2810

【FIG. 29】

2900

2905

base station
transmission unit

base station
processing unit

base station
reception unit

2910

【FIG. 30】

3000

3005

terminal
transmission unit

terminal
processing unit

terminal
reception unit

3010

## INTERNATIONAL SEARCH REPORT

| International application No. |
| --- |
| **PCT/KR2023/014938** |

### A. CLASSIFICATION OF SUBJECT MATTER

**H04L 5/14**(2006.01)i; **H04L 5/00**(2006.01)i; **H04B 7/06**(2006.01)i; **H04W 72/23**(2023.01)i; **H04W 84/04**(2009.01)i

According to International Patent Classification (IPC) or to both national classification and IPC

### B. FIELDS SEARCHED

Minimum documentation searched (classification system followed by classification symbols)

H04L 5/14(2006.01); H04B 15/02(2006.01); H04B 7/26(2006.01); H04W 24/02(2009.01); H04W 72/04(2009.01); H04W 72/08(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크(uplink), 하향링크(downlink), 자원(resource), 할당(allocation), 모드(mode), 우선순위(priority)

### C. DOCUMENTS CONSIDERED TO BE RELEVANT

| Category* | Citation of document, with indication, where appropriate, of the relevant passages | Relevant to claim No. |
| --- | --- | --- |
| X<br><br>A | KR 10-2020-0122147 A (SAMSUNG ELECTRONICS CO., LTD.) 27 October 2020 (2020-10-27)<br>See paragraphs [0267]-[0268]; and claims 1 and 6-7. | 1,4-5,10,13-14,18<br><br>2-3,6-9,11-12,<br>15-17,19-20 |
| A | KR 10-2020-0083046 A (ELECTRONICS AND TELECOMMUNICATIONS RESEARCH INSTITUTE)<br>08 July 2020 (2020-07-08)<br>See claims 1-4. | 1-20 |
| A | KR 10-2018-0088272 A (ELECTRONICS AND TELECOMMUNICATIONS RESEARCH INSTITUTE)<br>03 August 2018 (2018-08-03)<br>See paragraphs [0065]-[0112]; and figures 5a-5b. | 1-20 |
| A | KR 10-2009-0090772 A (SAMSUNG ELECTRONICS CO., LTD.) 26 August 2009 (2009-08-26)<br>See paragraphs [0036]-[0042]; and figure 6. | 1-20 |

☑ Further documents are listed in the continuation of Box C.  ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **24 January 2024** | **24 January 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/014938** |

### C. DOCUMENTS CONSIDERED TO BE RELEVANT

| Category* | Citation of document, with indication, where appropriate, of the relevant passages | Relevant to claim No. |
|---|---|---|
| A | US 2022-0104198 A1 (QUALCOMM INCORPORATED) 31 March 2022 (2022-03-31) See paragraphs [0059]-[0096]; and figures 5-6. | 1-20 |

Form PCT/ISA/210 (second sheet) (July 2022)

## INTERNATIONAL SEARCH REPORT
### Information on patent family members

International application No.

**PCT/KR2023/014938**

| Patent document cited in search report | | | Publication date (day/month/year) | Patent family member(s) | | | Publication date (day/month/year) |
|---|---|---|---|---|---|---|---|
| KR | 10-2020-0122147 | A | 27 October 2020 | EP | 3927068 | A1 | 22 December 2021 |
| | | | | US | 2022-0200777 | A1 | 23 June 2022 |
| | | | | WO | 2020-213877 | A1 | 22 October 2020 |
| KR | 10-2020-0083046 | A | 08 July 2020 | | None | | |
| KR | 10-2018-0088272 | A | 03 August 2018 | US | 2018-0213547 | A1 | 26 July 2018 |
| | | | | US | 2022-0124747 | A1 | 21 April 2022 |
| KR | 10-2009-0090772 | A | 26 August 2009 | US | 2009-0286546 | A1 | 19 November 2009 |
| | | | | US | 8145207 | B2 | 27 March 2012 |
| US | 2022-0104198 | A1 | 31 March 2022 | CN | 116235457 | A | 06 June 2023 |
| | | | | EP | 4218322 | A1 | 02 August 2023 |
| | | | | KR | 10-2023-0079355 | A | 07 June 2023 |
| | | | | WO | 2022-067279 | A1 | 31 March 2022 |

Form PCT/ISA/210 (patent family annex) (July 2022)